# EUROPEAN PATENT SPECIFICATION

(11) **EP 3 770 108 B1**
(45) Date of publication and mention of the grant of the patent: **30.03.2022**
(21) Application number: 19771780.4
(22) Date of filing: 12.03.2019
(51) Int. Cl.: B66F 9/075, B66F 17/00

(54) **REMOTE OPERATION SYSTEM FOR INDUSTRIAL VEHICLES, INDUSTRIAL VEHICLE, REMOTE OPERATION DEVICE, REMOTE OPERATION PROGRAM FOR INDUSTRIAL VEHICLES, AND REMOTE OPERATION METHOD FOR INDUSTRIAL VEHICLES**
FERNBEDIENUNGSSYSTEM FÜR INDUSTRIEFAHRZEUGE, INDUSTRIEFAHRZEUG, FERNBEDIENUNGSVORRICHTUNG, FERNBEDIENUNGSPROGRAMM FÜR INDUSTRIEFAHRZEUGE UND FERNBEDIENUNGSVERFAHREN FÜR INDUSTRIEFAHRZEUGE
SYSTÈME DE COMMANDE À DISTANCE DESTINÉ À DES VÉHICULES INDUSTRIELS, VÉHICULE INDUSTRIEL, DISPOSITIF DE COMMANDE À DISTANCE, PROGRAMME DE COMMANDE À DISTANCE DESTINÉ À DES VÉHICULES INDUSTRIELS, ET PROCÉDÉ DE COMMANDE À DISTANCE DESTINÉ À DES VÉHICULES INDUSTRIELS

(30) Priority: 23.03.2018 JP 2018056881
(43) Date of publication of application: 27.01.2021
(73) Proprietor: Kabushiki Kaisha Toyota Jidoshokki, Kariya-shi, Aichi 448-8671 (JP)
(72) Inventor: KAMIYA Tomonori, Kariya-shi, Aichi 448-8671 (JP); OKAMOTO Hironobu, Kariya-shi, Aichi 448-8671 (JP)
(74) Representative: TBK
(86) International application number: PCT/JP2019/010112
(87) International publication number: WO 2019/181665

(56) References cited:
- JP-A- 2009 025 984
- JP-A- 2010 222 108
- JP-A- 2014 001 026
- JP-A- 2014 180 894
- JP-A- 2016 168 883
- JP-A- 2016 189 052

## Description

### TECHNICAL FIELD

The present invention relates to an industrial vehicle remote operation system, an industrial vehicle, a remote operation device, an industrial vehicle remote operation program, and an industrial vehicle remote operation method.

### BACKGROUND ART

Patent Literature 1 describes that a remote control device serving as a remote operation device that remotely operates a forklift serving as an industrial vehicle remotely operates the cargo handling work of the forklift from a position distant from the forklift.

### Citation List

### Patent Literature

Patent Literature 1: Japanese Patent Application Publication No. 2002-104800 WO2018047671 discloses an industrial device according to the preamble of claims 1 and 12 to 15.

### SUMMARY OF INVENTION

### Technical Problems

Here, an abnormal situation may occur in a situation where remote operation of an industrial vehicle is performed using a remote operation device. In this case, if the remote operation is continuously performed while an abnormal situation is occurring, there is concern that the safety may reduce.

On the other hand, the inventors of the present application focused on stopping the remote operation, for example, when an abnormal situation occurs during the remote operation. In such a configuration in which the remote operation is stopped, the worker may want to restart the remote operation as needed. On the other hand, when the remote operation is unintentionally restarted by the worker, there is concern that the safety may reduce.

The present invention has been made in view of the above circumstances, and an object of the present invention is to provide an industrial vehicle remote operation system, an industrial vehicle, a remote operation device, an industrial vehicle remote operation program, and an industrial vehicle remote operation method capable of responding to an abnormal situation.

### Solutions to Problems

An industrial vehicle remote operation system that achieves the above object includes an industrial vehicle including a vehicle communication unit that performs wireless communication, a remote operation device that includes a remote communication unit for exchanging signals with the vehicle communication unit through wireless communication by establishing a communication connection state with the vehicle communication unit, and that is used to remotely operate the industrial vehicle, an abnormal situation detection unit that detects an abnormal situation in the communication connection state, a cancel operation detection unit that detects an abnormality cancel operation, and a mode control unit that controls a control mode of the industrial vehicle. The control mode includes a remote mode in which a remote operation of the industrial vehicle by the remote operation device is performed, an abnormal stop mode in which the remote operation of the industrial vehicle by the remote operation device is not performed and shift to the remote mode is prohibited, and a neutral mode in which the remote operation of the industrial vehicle by the remote operation device is not performed and shift to the remote mode is permitted. At least during the remote mode, the vehicle communication unit and the remote communication unit are in the communication connection state. The mode control unit shifts, based on the detection of the abnormal situation by the abnormal situation detection unit in a situation where the control mode is the remote mode, the control mode from the remote mode to the abnormal stop mode while maintaining the communication connection state, and shifts, based on the detection of the abnormality cancel operation by the cancel operation detection unit in a situation where the control mode is the abnormal stop mode and the communication connection state is established, the control mode from the abnormal stop mode to the neutral mode.

With this configuration, the control mode is shifted from the remote mode to the abnormal stop mode while maintaining the communication connection state based on the detection of the abnormal situation in the situation where the control mode is the remote mode. The remote operation by the remote operation device is thereby stopped. Therefore, it is possible to prevent the remote operation from being continued while an abnormal situation is occurring, improving the safety.

Furthermore, the control mode shifts from the abnormal stop mode to the neutral mode based on the abnormality cancel operation being performed in the situation where the control mode is the abnormal stop mode and the communication connection state is established. Thus, the control mode can be shifted to the remote mode. Therefore, even when the control mode is shifted from the remote mode to the abnormal stop mode, the remote operation can be restarted.

Here, during the abnormal stop mode and the neutral mode, the remote operation of the industrial vehicle using the remote operation device is not performed. In the abnormal stop mode, the shift of the control mode to the remote mode is prohibited, while in the neutral mode, the shift of the control mode to the remote mode is permitted. Therefore, in order to perform the remote operation again from the state where the control mode is the abnormal stop mode, it is necessary to first perform the abnormality cancel operation to set the control mode to the neutral mode and then to set the control mode to the remote mode. As a result, it is necessary to always perform the abnormality cancel operation, and hence it is possible to avoid the remote operation from being restarted without performing the abnormality cancel operation. Therefore, the remote operation can be restarted as necessary while suppressing unintended restart of the remote operation.

Furthermore, when the communication connection state is canceled accompanying the shift from the remote mode to the abnormal stop mode, both communication units need to again be in the communication connection state when shifting again from the abnormal stop mode to the remote mode through the neutral mode, and accompanying therewith, a time lag may occur. According to this configuration, on the other hand, both communication units maintain the communication connection state even during the abnormal stop mode and the shift to the neutral mode, so that the occurrence of the time lag can be suppressed and the smooth shift to the remote mode can be achieved. An abnormal situation thus can be responded.

In the industrial vehicle remote operation system, the industrial vehicle may include an abnormality cancel switch, and the abnormality cancel operation may include operation of the abnormality cancel switch.

According to this configuration, the abnormality cancel operation can be performed without using the remote operation device, so that a person other than a remote operator can perform the abnormality cancel operation. The convenience thus can be improved.

In the industrial vehicle remote operation system, the industrial vehicle may include a machine base, the machine base may include an outer side surface and an inner side surface that partitions a driver's compartment to which an occupant gets on, and the abnormality cancel switch may be provided on the outer side surface.

According to this configuration, since the abnormality cancel switch is provided on the outer side surface, the operator of the abnormality cancel switch can operate the abnormality cancel switch without getting on the driver's compartment. Thus, the abnormality cancel operation can be prevented from being performed in a state where an occupant is in the driver's compartment, so that even if erroneous movement of the industrial vehicle occurs with the abnormality cancel operation, such erroneous movement can be responded and the safety can be improved.

In the industrial vehicle remote operation system, the abnormality cancel operation may include an operation on the remote operation device.

According to such a configuration, a remote operator using the remote operation device can perform the abnormality cancel operation without approaching the industrial vehicle. The convenience thus can be improved.

In the industrial vehicle remote operation system, the remote operation device may include a touch panel, and a display control unit for performing display control of the touch panel. When the control mode is the remote mode, the industrial vehicle may be remotely operated through a remote control operation including an operation on the touch panel. The display control unit may display an abnormality cancel icon on the touch panel when the control mode is the abnormal stop mode. The abnormality cancel operation may include an input operation on the abnormality cancel icon.

With this configuration, the control mode can be shifted to the neutral mode by performing an input operation to the abnormality cancel icon during the abnormal stop mode. As a result, the abnormal stop mode can be canceled by an intuitive operation.

In particular, when the control mode is the remote mode, the remote operation of the industrial vehicle is performed by the remote control operation including the operation on the touch panel, so that it is assumed that the degree of attention of the touch panel will be high to the remote operator. Since the abnormality cancel icon is displayed on the touch panel having such a high degree of attention, the inconvenience that the abnormality cancel icon that triggers the abnormality cancel operation is overlooked can be suppressed.

In the industrial vehicle remote operation system, the industrial vehicle may have a door. The abnormal situation detection unit may include a door sensor that detects opening and closing of the door. The abnormal situation may include that opening of the door is detected by the door sensor in a situation where the control mode is the remote mode.

With this configuration, when the door is opened during the remote mode, the remote operation is stopped. As a result, the remote operation can be prevented from being continued in a state where the door is opened. Furthermore, since the control mode does not shift to the neutral mode unless the abnormality cancel operation is performed, the remote operator can perform the work of closing the door and resolving the abnormal situation before performing the abnormality cancel operation.

In the industrial vehicle remote operation system, the abnormal situation detection unit may include an obstacle sensor that detects an obstacle around the industrial vehicle, and the abnormal situation may include that an obstacle is detected by the obstacle sensor in a situation where the control mode is the remote mode.

With this configuration, when the obstacle is detected during the remote mode, the remote operation is stopped. Thus, the remote operation can be prevented from being continued in a state where the obstacle is detected, and the collision between the industrial vehicle and the obstacle can be avoided. Moreover, since the control mode does not shift to the neutral mode unless the abnormality cancel operation is performed, the remote operator can perform the work of checking or eliminating the obstacle and resolving the abnormal situation before performing the abnormality cancel operation.

In the industrial vehicle remote operation system, the industrial vehicle may include a vehicle operation unit used to directly operate the industrial vehicle, the control mode may include a manned mode in which a manned operation for directly operating the industrial vehicle is performed based on an operation of the vehicle operation unit, while a remote operation by the remote operation device is not performed, the abnormal stop mode is a control mode in which neither the remote operation by the remote operation device nor the manned operation are performed, and a shift to neither the remote mode nor the manned mode is prohibited, and the neutral mode is a control mode in which neither the remote operation by the remote operation device nor the manned operation are performed, and a shift to both the remote mode and the manned mode is permitted.

According to such a configuration, after the control mode shifts to the neutral mode due to the abnormality cancel operation performed in the abnormal stop mode, the control mode can be shifted to the desired control mode of the remote mode and the manned mode.

In the industrial vehicle remote operation system, the abnormal situation detection unit may detect, as the abnormal situation, a common abnormal situation that is a common abnormal situation regardless of the control mode, a remote mode abnormal situation set in correspondence with the remote mode, and a manned mode abnormal situation that is set in correspondence with the manned mode and is different from the remote mode abnormal situation. The mode control unit may shift, based on the detection of the common abnormal situation or the remote mode abnormal situation by the abnormal situation detection unit in a situation where the control mode is the remote mode, the control mode from the remote mode to the abnormal stop mode while maintaining the communication connection state, and shift, based on the detection of the common abnormal situation or the manned mode abnormal situation by the abnormal situation detection unit in a situation where the control mode is the manned mode, the control mode from the manned mode to the abnormal stop mode.

With this configuration, when a common abnormal situation occurs, the control mode shifts to the abnormal stop mode regardless of the control mode. Thus, an abnormal situation unrelated to the control mode, such as an abnormality of an industrial vehicle, for example, can be responded.

Here, an assumed abnormal situation is different between the remote mode in which remote operation is performed and the manned mode in which manned operation is performed. In this respect, according to the present configuration, a specific abnormal situation that is assumed in each control mode can be responded, so that the safety can be further improved.

In the industrial vehicle remote operation system, the mode control unit may shift, based on a satisfaction of a remote mode shift condition is satisfied when the control mode is the neutral mode, the control mode from the neutral mode to the remote mode, and the remote mode shift condition may include that the common abnormal situation has not occurred.

According to this configuration, even if the abnormal stop mode is shifted to the neutral mode by the abnormality cancel operation, the control mode cannot be set to the remote mode when the common abnormal situation is occurring. Thus, the remote operation can be prevented from being performed in a state where the common abnormal situation has not been resolved. Furthermore, the worker can be urged to resolve the common abnormal situation.

In the industrial vehicle remote operation system, the mode control unit may shift, based on a satisfaction of a manned mode shift condition is satisfied when the control mode is the neutral mode, the control mode from the neutral mode to the manned mode, and the manned mode shift condition may include that the common abnormal situation has not occurred.

According to this configuration, even if the abnormal stop mode is shifted to the neutral mode by the abnormality cancel operation, the control mode cannot be set to the manned mode when the common abnormal situation is occurring. Thus, the manned operation can be prevented from being performed in a state where the common abnormal situation has not been resolved. Furthermore, the worker can be urged to resolve the common abnormal situation.

An industrial vehicle that achieves the above object includes a vehicle communication unit that establishes a communication connection state with a remote communication unit provided in a remote operation device to exchange signals with the remote communication unit through wireless communication. The industrial vehicle includes an abnormal situation detection unit that detects an abnormal situation in the communication connection state, and a mode control unit that controls a control mode of the industrial vehicle. The control mode includes a remote mode in which a remote operation of the industrial vehicle by the remote operation device is performed, an abnormal stop mode in which the remote operation of the industrial vehicle by the remote operation device is not performed and shift to the remote mode is prohibited, and a neutral mode in which the remote operation of the industrial vehicle by the remote operation device is not performed and shift to the remote mode is permitted. At least during the remote mode. The vehicle communication unit and the remote communication unit are in the communication connection state. The mode control unit shifts, based on the detection of the abnormal situation by the abnormal situation detection unit in a situation where the control mode is the remote mode, the control mode from the remote mode to the abnormal stop mode while maintaining the communication connection state, and shifts, based on an abnormality cancel operation performed on at least one of the remote operation device and the industrial vehicle in a situation where the control mode is the abnormal stop mode and the communication connection state is established, the control mode from the abnormal stop mode to the neutral mode.

A remote operation device that achieves the above object includes a remote communication unit that establishes a communication connection state with a vehicle communication unit provided in an industrial vehicle to exchange signals with the vehicle communication unit through wireless communication, the remote operation device used to remotely operate the industrial vehicle including a mode control unit that controls a control mode of the industrial vehicle. The control mode includes a remote mode in which a remote operation of the industrial vehicle by the remote operation device is performed, an abnormal stop mode in which the remote operation of the industrial vehicle by the remote operation device is not performed and shift to the remote mode is prohibited, and a neutral mode in which the remote operation of the industrial vehicle by the remote operation device is not performed and shift to the remote mode is permitted. At least during the remote mode, the vehicle communication unit and the remote communication unit are in the communication connection state, and the mode control unit shifts, based on an occurrence of an abnormal situation in a situation where the control mode is the remote mode, the control mode from the remote mode to the abnormal stop mode while maintaining the communication connection state, and shifts, based on an abnormality cancel operation performed on at least one of the remote operation device and the industrial vehicle in a situation where the control mode is the abnormal stop mode and the communication connection state is established, the control mode from the abnormal stop mode to the neutral mode.

An industrial vehicle remote operation program for remotely operating an industrial vehicle that achieves the above object uses a remote operation device including a remote communication unit that establishes a communication connection state with a vehicle communication unit provided in the industrial vehicle to exchange signals with the vehicle communication unit through wireless communication. The industrial vehicle remote operation program causes the remote operation device or the industrial vehicle to function as a mode control unit that controls a control mode of the industrial vehicle, where the control mode includes a remote mode in which a remote operation of the industrial vehicle by the remote operation device is performed, an abnormal stop mode in which the remote operation of the industrial vehicle by the remote operation device is not performed and shift to the remote mode is prohibited, and a neutral mode in which the remote operation of the industrial vehicle by the remote operation device is not performed and shift to the remote mode is permitted. At least during the remote mode, the vehicle communication unit and the remote communication unit are in the communication connection state, and the mode control unit shifts, based on an occurrence of an abnormal situation in a situation where the control mode is the remote mode, the control mode from the remote mode to the abnormal stop mode while maintaining the communication connection state, and shifts, based on an abnormality cancel operation performed on at least one of the remote operation device and the industrial vehicle in a situation where the control mode is the abnormal stop mode and the communication connection state is established, the control mode from the abnormal stop mode to the neutral mode.

An industrial vehicle remote operation method that achieves the above object uses a remote operation device including a remote communication unit that establishes a communication connection state with a vehicle communication unit provided in an industrial vehicle to exchange signals with the vehicle communication unit through wireless communication, to remotely operate the industrial vehicle. The industrial vehicle remote operation method includes a mode control step in which the remote operation device or the industrial vehicle controls a control mode of the industrial vehicle, where the control mode includes a remote mode in which a remote operation of the industrial vehicle by the remote operation device is performed, an abnormal stop mode in which the remote operation of the industrial vehicle by the remote operation device is not performed and shift to the remote mode is prohibited, and a neutral mode in which the remote operation of the industrial vehicle by the remote operation device is not performed and shift to the remote mode is permitted. At least during the remote mode, the vehicle communication unit and the remote communication unit are in the communication connection state, and the mode control step includes steps of shifting, based on an occurrence of an abnormal situation in a situation where the control mode is the remote mode, the control mode from the remote mode to the abnormal stop mode while maintaining the communication connection state, and shifting, based on an abnormality cancel operation performed on at least one of the remote operation device and the industrial vehicle in a situation where the control mode is the abnormal stop mode and the communication connection state is established, the control mode from the abnormal stop mode to the neutral mode.

According to each configuration described above, the control mode is shifted from the remote mode to the abnormal stop mode while maintaining the communication connection state based on the detection of the abnormal situation in a situation where the control mode is the remote mode. The remote operation by the remote operation device is thereby stopped. Therefore, it is possible to prevent the remote operation from being continued while an abnormal situation is occurring, and it is possible to improve safety.

Furthermore, the control mode shifts from the abnormal stop mode to the neutral mode based on the abnormality cancel operation being performed in the situation where the control mode is the abnormal stop mode and the communication connection state is established. Thus, the control mode can be shifted to the remote mode. Therefore, even when the control mode is shifted from the remote mode to the abnormal stop mode, the remote operation can be restarted.

Here, during the abnormal stop mode and the neutral mode, the remote operation of the industrial vehicle using the remote operation device is not performed. In the abnormal stop mode, the shift of the control mode to the remote mode is prohibited, while in the neutral mode, the shift of the control mode to the remote mode is permitted. Therefore, in order to perform the remote operation again from the state where the control mode is the abnormal stop mode, it is necessary to first perform the abnormality cancel operation to set the control mode to the neutral mode and then to set the control mode to the remote mode. As a result, it is necessary to always perform the abnormality cancel operation, and hence it is possible to avoid the remote operation from being restarted without performing the abnormality cancel operation. Therefore, the remote operation can be restarted as necessary while suppressing unintended restart of the remote operation.

Furthermore, when the communication connection state is canceled accompanying the shift from the remote mode to the abnormal stop mode, both communication units need to again be in the communication connection state when shifting again from the abnormal stop mode to the remote mode through the neutral mode, and accompanying therewith, a time lag may occur. According to this configuration, on the other hand, both communication units maintain the communication connection state even during the abnormal stop mode and the shift to the neutral mode, so that the occurrence of the time lag can be suppressed and the smooth shift to the remote mode can be achieved. An abnormal situation thus can be responded.

### Advantageous Effects of Invention

According to the present invention, an abnormal situation can be responded.

### BRIEF DESCRIPTION OF DRAWINGS

FIG. 1 is a schematic view of an industrial vehicle remote operation system.
FIG. 2 is a perspective view of a forklift.
FIG. 3 is a block diagram showing an electrical configuration of an industrial vehicle remote operation system.
FIG. 4 is a conceptual diagram for explaining a remote operation signal.
FIG. 5 is a conceptual diagram for explaining a vehicle signal.
FIG. 6 is a conceptual diagram for explaining each control mode.
FIG. 7 is a front view of a remote operation device in which a standby image is displayed.
FIG. 8 is a front view of the remote operation device in which an operation image is displayed.
FIG. 9 is a flowchart of a remote control process according to a first embodiment.
FIG. 10 is a flowchart of a remote-remote mode process.
FIG. 11 is a flowchart of a remote-neutral mode process.
FIG. 12 is a flowchart of vehicle control process according to the first embodiment.
FIG. 13 is a flowchart of a movement stop control in-execution process.
FIG. 14 is a flowchart of vehicle neutral mode process.
FIG. 15 is a flowchart of vehicle manned mode process.
FIG. 16 is a flowchart of vehicle remote mode process.
FIG. 17 is a flowchart of vehicle abnormal stop mode process.
FIG. 18 is a correlation diagram of control modes.
FIG. 19 is a schematic diagram of an industrial vehicle remote operation system when a movement stop notification or the like is performed.
FIG. 20 is a schematic diagram of an industrial vehicle remote operation system when an abnormality cancel operation is performed.
FIG. 21 is a flowchart of a remote operation process according to a second embodiment.
FIG. 22 is a front view of a remote operation device showing an operation image in the abnormal stop mode according to the second embodiment.
FIG. 23 is a flowchart of a vehicle manned mode process.
FIG. 24 is a flowchart of a vehicle remote mode process.
FIG. 25 is a flowchart of vehicle abnormal stop mode process.

### DESCRIPTION OF EMBODIMENTS

### (First embodiment)

Hereinafter, a first embodiment of an industrial vehicle remote operation system and the like will be described.

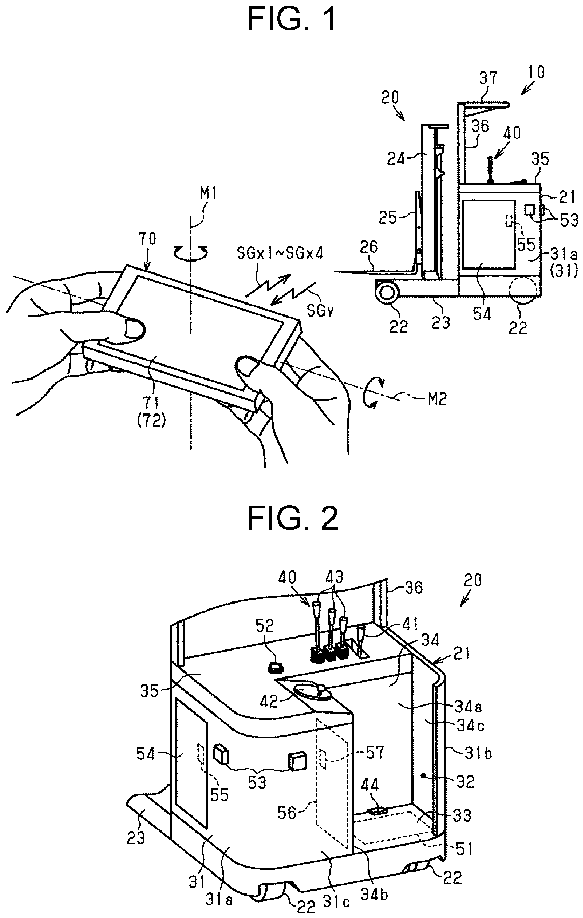

As shown in FIG. 1, an industrial vehicle remote operation system 10 includes a forklift 20 serving as an industrial vehicle, and a remote operation device 70 used to remotely operate the forklift 20.

As shown in FIG. 1, the forklift 20 is, for example, a reach type that allows the occupant to get on in a standing state. The forklift 20 includes a machine base 21, wheels 22, a pair of left and right reach legs 23 extending forward with respect to the machine base 21, a mast 24 standing upright with respect to the reach leg 23, and a pair of forks 26 attached to the mast 24 by way of a lift bracket 25.

The reach leg 23 extends forward from the lower end portion on the front side of the machine base 21. A pair of left and right wheels 22 are provided at the distal end portion of the reach leg 23 and the rear end portion of the machine base 21, respectively.

The mast 24 is attached to the reach leg 23 in a state of being movable in the front-rear direction with respect to the reach leg 23. Furthermore, the mast 24 is configured to be tiltable in the front-rear direction with respect to the reach leg 23.

The forks 26 move in the front-rear direction as the mast 24 moves in the front-rear direction, and tilts as the mast 24 tilts. Furthermore, the forks 26 are configured to be movable in the extending direction of the mast 24, specifically, in the up-down direction. That is, the forks 26 of the present embodiment are capable of a reach movement, which is a parallel movement in the front-rear direction, a tilt movement, which is a tilt movement in the front-rear direction, and a lift movement, which is a movement in the up-down direction.

The forklift 20 may be, for example, an engine type mounted with an engine, an EV type mounted with a power storage device and an electric motor, or an FCV type mounted with a fuel cell and an electric motor. Furthermore, the forklift 20 may be, for example, an HV type including an engine, a power storage device, and an electric motor.

As shown in FIG. 2, the machine base 21 has an outer side surface 31, and a floor surface 33 and an inner side surface 34 that partition a driver's compartment 32, to which an occupant can get on a standing state.

The outer side surface 31 has a left outer side surface 31a, a right outer side surface 31b, and a rear outer side surface 31c.

The inner side surface 34 that partitions the driver's compartment 32 stands upright from the floor surface 33. The inner side surface 34 has a front inner side surface 34a, a left inner side surface 34b, and a right inner side surface 34c.

The driver's compartment 32 is a space formed by a part of the machine base 21 being recessed, and specifically is formed by being recessed from the outer side surface 31 (the rear outer side surface 31c in the present embodiment). The driver's compartment 32 is opened in one direction (specifically, rearward) to allow the occupant to get on. In the driver's compartment 32, a seating portion or the like on which an occupant can sit is not formed. Thus, it is assumed that the occupant in the driver's compartment 32 stands up on the floor surface 33.

The machine base 21 is provided with a vehicle operation unit 40 used by an occupant to directly operate the forklift 20, and the forklift 20 is configured to move by operating the vehicle operation unit 40.

Specifically, the machine base 21 is formed with a steering table 35 arranged at a position where an occupant in the driver's compartment 32 can operate, and at least a part of the vehicle operation unit 40 is provided on the steering table 35. The steering table 35 is, for example, the upper surface of the machine base 21. The upper surface of the machine base 21 includes an inclined surface that is continuous with the left inner side surface 34b partitioning the driver's compartment 32.

In the present embodiment, the vehicle operation unit 40 includes a direction control lever 41 that causes the forklift 20 to travel, a steering wheel 42 that operates the steering angle of the forklift 20, and a cargo handling lever 43 that moves the forks 26. The direction control lever 41, the steering wheel 42, and the cargo handling lever 43 are provided at a position where an occupant in the driver's compartment 32 can easily operate, specifically, in the vicinity of the driver's compartment 32 on the steering table 35.

Furthermore, the vehicle operation unit 40 includes a brake pedal 44 provided near the floor surface 33 of the front inner side surface 34a. An occupant in the driver's compartment 32 can directly perform the traveling operation and the cargo handling operation of the forklift 20 by operating the vehicle operation unit 40.

In the present embodiment, three cargo handling levers 43 are arranged side by side in correspondence with the fact that the lift movement, the reach movement, and the tilt movement can be carried out as the movements of the forks 26. Specifically, the cargo handling lever 43 has a tilt lever for performing a tilt movement, a reach lever for performing a reach movement, and a lift lever for performing a lift movement. However, the present invention is not limited thereto, and the number, arrangement, and the like of the cargo handling levers 43 are arbitrary.

In the following description, operating the forklift 20 directly by operating the vehicle operation unit 40 provided on the forklift 20 is referred to as manned operation. The forklift 20 of the present embodiment is configured for the manned operation. The vehicle operation unit 40 is used for manned operation.

In the present embodiment, the direction control lever 41, the steering wheel 42, the cargo handling lever 43, and the brake pedal 44 are adopted as the vehicle operation unit 40, but the present invention is not limited to thereto, and at least one of these may be used or another operation unit may be adopted in place of or in addition thereto. In short, the specific configuration of the vehicle operation unit 40 is arbitrary.

Further, in the present embodiment, the movement of the forklift 20 is traveling and the movement of the forks 26. However, the movement of the forklift 20 is not limited to thereto, and may be at least one of traveling and the movement of the forks 26, or may include other movements. For example, if the forklift 20 has a movement target other than the forks 26, the movement may be the movement of the movement target.

Similarly, the vehicle operation unit 40 may be used to perform at least one of traveling and cargo handling movement of the forklift 20, or may include that used to perform other movements.

As shown in FIG. 2, the forklift 20 includes an occupant sensor 51 that detects an occupant, and a changeover switch 52 and an abnormality cancel switch 53 that are provided separately from the vehicle operation unit 40.

The occupant sensor 51 detects an occupant on the forklift 20. The occupant sensor 51 is configured by, for example, a pressure sensor provided on the floor surface 33 of the driver's compartment 32 of the forklift 20, and detects an occupant who got on the driver's compartment 32. The occupant sensor 51 allows the forklift 20 to grasp the presence or absence of an occupant.

Note that the occupant sensor 51 may have any specific configuration as long as it can detect an occupant on the forklift 20, and for example, the occupant sensor 51 may be a pressure sensor or an infrared sensor provided on the surface on which the occupant sits in a case of a forklift of a type the occupant maneuvers in a seated state.

The changeover switch 52 and the abnormality cancel switch 53 are provided on the machine base 21. The changeover switch 52 is provided, for example, at a position where it can be operated by an occupant in the driver's compartment 32, specifically, on the steering table 35.

The abnormality cancel switch 53 is provided, for example, at a position where it can be operated without the occupant getting on the driver's compartment 32 in the machine base 21. Specifically, the abnormality cancel switch 53 is provided on the outer side surface 31 of the machine base 21. In the present embodiment, the abnormality cancel switch 53 is provided on the rear outer side surface 31c and the left outer side surface 31a of the outer side surface 31.

However, the installation positions of the changeover switch 52 and the abnormality cancel switch 53 are not limited to this, and are arbitrary. For example, the changeover switch 52 may be provided on the outer side surface 31, or the abnormality cancel switch 53 may be provided at a position (e.g., the steering table 35) where it can be operated by an occupant in the driver's compartment 32.

The changeover switch 52 is a switch used for changing the control mode of the forklift 20. In the present embodiment, the changeover switch 52 is configured to change between "manned" corresponding to a manned state and "remote" corresponding to a remote state.

The abnormality cancel switch 53 is a switch used for the abnormality cancel operation. Specifically, the abnormality cancel switch 53 is a switch used to cancel the abnormal stop mode when the control mode of the forklift 20 is changed to the abnormal stop mode.

The operation of each of these switches 52 and 53 is used for changing the control mode of the forklift 20, but is not used for the direct operation of the forklift 20 (the manned operation). Therefore, the operation of each of the switches 52 and 53 is an operation different from the operation of the vehicle operation unit 40 (specifically, the operation of the direction control lever 41, the steering wheel 42, the cargo handling lever 43, or the brake pedal 44). Details of the control mode, and specific manners of usage of the switches 52 and 53 will be described later.

The machine base 21 of the present embodiment includes a vertical frame 36 standing upward from the steering table 35, and a roof 37 attached to the distal end portion of the vertical frame 36. The vertical frame 36 extends higher than the mast 24. The roof 37 is disposed at the highest position in the forklift 20.

As shown in FIGS. 1 and 2, a first door 54 that can be opened and closed is provided on the left outer side surface 31a of the machine base 21, and the inside of the machine base 21 can be visually recognized by opening the first door 54. The machine base 21 also includes a first door sensor 55 that detects the open/closed state of the first door 54. The forklift 20 can detect that the first door 54 is opened by the first door sensor 55.

Similarly a second door 56 that can be opened and closed is provided on the left inner side surface 34b that partitions the driver's compartment 32, and the inside of the machine base 21 can be visually recognized by opening the second door 56. The machine base 21 also includes a second door sensor 57 that detects the open/closed state of the second door 56. The forklift 20 can detect that the second door 56 is opened by the second door sensor 57.

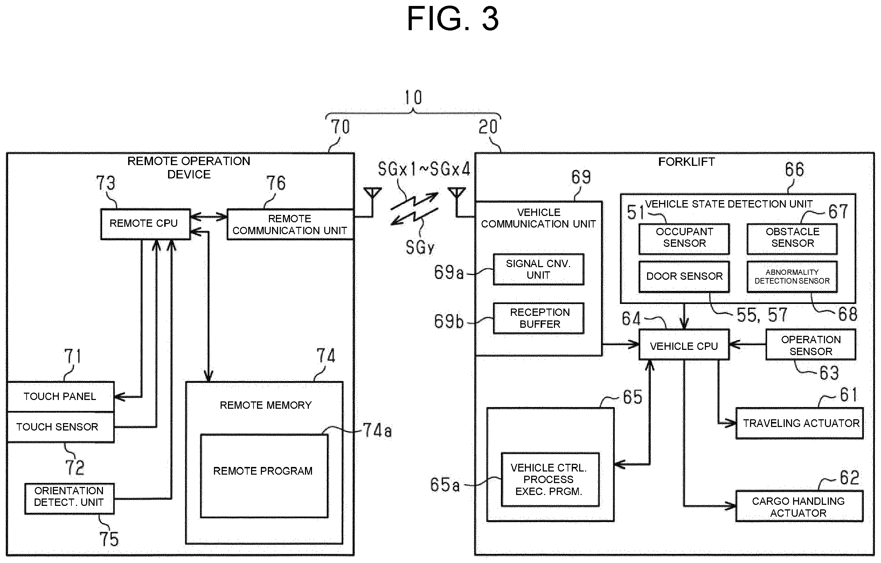

As shown in FIG. 3, the forklift 20 includes a traveling actuator 61 and a cargo handling actuator 62 serving as a drive unit for causing a predetermined movement to be performed, an operation sensor 63 that detects an operation of the vehicle operation unit 40, a vehicle CPU 64 that drives and controls the actuators 61 and 62, a vehicle memory 65, and a vehicle state detection unit 66.

The traveling actuator 61 is used for traveling of the forklift 20, and specifically, rotatably drives the wheels 22 and changes the steering angle (advancing direction). If the forklift 20 is an engine type, for example, the traveling actuator 61 is a steering device or the like that changes the engine and the steering angle, and if the forklift 20 is an EV type, for example, the traveling actuator 61 is an electric motor and a steering device or the like that rotatably drives the wheels 22.

The cargo handling actuator 62 is used for a movement different from traveling, and is used for a cargo handling movement in the present embodiment. Specifically, the cargo handling actuator 62 drives the mast 24 and the forks 26. For example, the cargo handling actuator 62 drives the mast 24 and the forks 26 so that the lift movement, the reach movement, and the tilt movement are performed. The movement of the forks 26 may be one of a lift movement, a reach movement, and a tilt movement.

The operation sensor 63 detects the presence or absence of an operation of the vehicle operation unit 40 and the operation mode thereof, and outputs the detection result to the vehicle CPU 64.

The vehicle CPU 64 drives and controls the traveling actuator 61 and the cargo handling actuator 62 based on the operation sensor 63 detecting the operation of the vehicle operation unit 40 under the condition that manned operation is possible (specifically, under the condition that the control mode is the manned mode). Thus, the movement of the forklift 20 by the manned operation, specifically, the movement corresponding to the operation of the vehicle operation unit 40 in the forklift 20 is performed. The vehicle CPU 64 can also be referred to as a vehicle ECU or a vehicle MPU.

As an example of the manned operation, for example, the vehicle CPU 64 determines forward/rearward movement based on the operating direction of the direction control lever 41, determines the traveling speed and acceleration based on the operation amount of the direction control lever 41, and drives and controls the traveling actuator 61. Based on the operation of the steering wheel 42, the vehicle CPU 64 drives and controls the traveling actuator 61 so that the steering angle of the forklift 20 is changed by the change amount corresponding to the operation amount (operation angle) of the steering wheel 42. The vehicle CPU 64 drives and controls the traveling actuator 61 so that the forklift 20 is decelerated or stopped by operating the brake pedal 44. In this case, the vehicle CPU 64 controls the deceleration (acceleration) of the forklift 20 based on the operation amount of the brake pedal 44.

In addition, the vehicle CPU 64 drives and controls the cargo handling actuator 62 so that the forks 26 moves based on the operation of the cargo handling lever 43. In this case, the vehicle CPU 64 may determine the moving direction of the forks 26 based on the operation mode of the cargo handling lever 43. For example, the vehicle CPU 64 may drive and control the cargo handling actuator 62 so that the forks 26 rise when the lift lever of the cargo handling lever 43 is operated in the first direction, and the forks 26 lower when the cargo handling lever 43 is operated in the second direction which is the opposite direction to the first direction. The same applies to the tilt lever, the reach lever, and the like.

The vehicle state detection unit 66 detects the state of the forklift 20. The state of the forklift 20 includes, for example, a traveling state of the forklift 20, a movement state of the forks 26, an abnormality of the forklift 20, and the like.

Specifically, the vehicle state detection unit 66 detects the current traveling state of the forklift 20 and outputs a traveling detection signal, in which traveling information Dy1 which is the detection result is set, to the vehicle CPU 64. The vehicle CPU 64 grasps the current traveling state of the forklift 20 based on the traveling detection signal input from the vehicle state detection unit 66. The traveling information Dy1 includes, for example, information related to the traveling speed, acceleration, and steering angle of the forklift 20.

Furthermore, the vehicle state detection unit 66 detects the current movement state of the forks 26 and outputs a cargo handling detection signal, in which cargo handling information Dy2 which is the detection result is set, to the vehicle CPU 64. The vehicle CPU 64 grasps the current movement state of the forks 26 based on the cargo handling detection signal input from the vehicle state detection unit 66.

The cargo handling information Dy2 includes information related to the position (lift position) of the forks 26 in the up-down direction and the movement speed thereof if during the lift movement, information related to the position (reach position) of the forks 26 in the front-rear direction and the movement speed thereof if during the reach movement, and information related to a tilt angle of the forks 26 in a vertical direction and the movement speed thereof if during the tilt movement.

The vehicle state detection unit 66 includes sensors 51, 55, and 57. Each of the sensors 51, 55, and 57 outputs the detection result to the vehicle CPU 64. As a result, the vehicle CPU 64 can grasp the presence or absence of an occupant and the open/closed state of both doors 54 and 56.

For example, the vehicle CPU 64 determines that the occupant is detected when the occupant sensor 51 is in the ON state, and determines that the occupant is not detected when the occupant sensor 51 is in the OFF state.

The vehicle state detection unit 66 detects the state of the changeover switch 52 and outputs the detection result to the vehicle CPU 64. The vehicle CPU 64 thus can grasp the state of the changeover switch 52. Furthermore, the vehicle state detection unit 66 detects whether or not the abnormality cancel switch 53 has been operated, and outputs the detection result to the vehicle CPU 64. The vehicle CPU 64 thus can grasp whether or not the abnormality cancel switch 53 has been operated. The vehicle state detection unit 66 that detects the operation of the abnormality cancel switch 53 corresponds to the "cancel operation detection unit".

The vehicle state detection unit 66 includes an obstacle sensor 67 that detects an obstacle around the forklift 20 and outputs the detection result to the vehicle CPU 64. The vehicle CPU 64 thus can grasp the obstacle existing around the forklift 20.

The vehicle state detection unit 66 includes an abnormality detection sensor 68 that detects presence or absence of abnormality of the forklift 20, and outputs the detection result to the vehicle CPU 64.

The abnormality of the forklift 20 which is the detection target of the abnormality detection sensor 68 includes, for example, abnormality of the traveling actuator 61, abnormality of the cargo handling actuator 62, or abnormality of the wheels 22.

However, the abnormality of the forklift 20 is not limited thereto and is arbitrary, and for example, may include abnormality of a power storage device in a configuration in which the forklift 20 includes the power storage device. The abnormality of the power storage device includes that the SOC of the power storage device becomes less than the threshold SOC or the SOH becomes less than the threshold SOH.

As shown in FIGS. 1 and 3, the remote operation device 70 is an operation terminal having a communication function. The remote operation device 70 is a general-purpose product such as, for example, a smartphone or a tablet terminal. However, the present invention is not limited thereto, and the remote operation device 70 is arbitrary, and may be, for example, a controller used in a game device, a mobile phone, a virtual reality terminal, or the like, or may be a dedicated product for remote operation. As shown in FIG. 1, in the present embodiment, the remote operation device 70 has a rectangular plate shape in which one side is the longitudinal direction and the other side is the short direction.

As shown in FIG. 3, the remote operation device 70 includes a touch panel 71, a touch sensor 72, a remote CPU 73, a remote memory 74, and an orientation detection unit 75.

As shown in FIG. 1, the touch panel 71 is formed on one plate surface of the remote operation device 70. The touch panel 71 has a rectangular shape having a longitudinal direction and a short direction, where the longitudinal direction of the touch panel 71 matches the longitudinal direction of the remote operation device 70. The touch panel 71 is configured to display a desired image and forms a display screen.

When the remote operation device 70 is held sideways by the remote operator, the short direction of the touch panel 71 is the up-down direction or the front-rear direction when viewed from the remote operator, and the longitudinal direction of the touch panel 71 is the left-right direction when viewed from the remote operator.

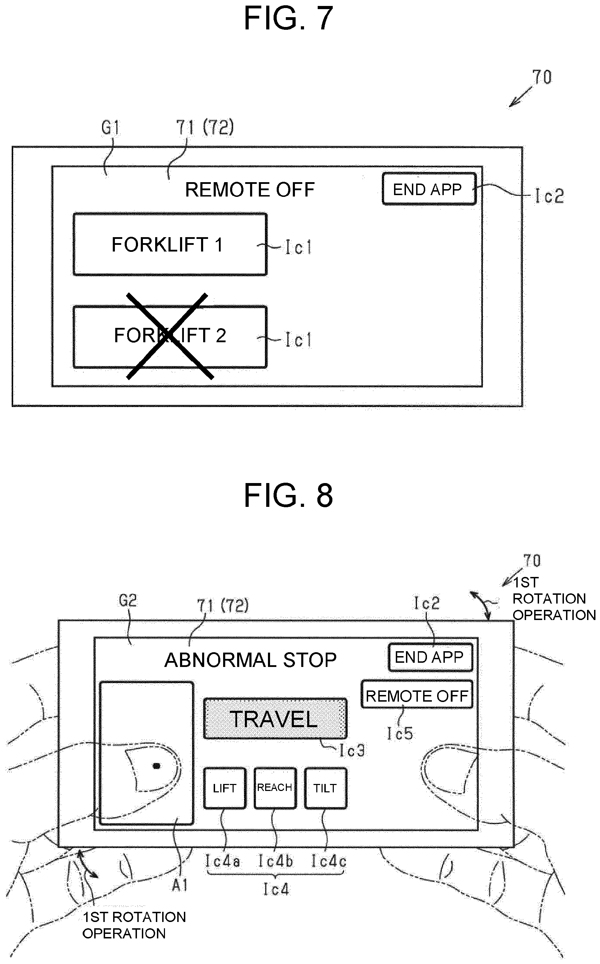

Note that, for the sake of convenience of explanation, in the following description, when the remote operation device 70 is held sideways so that the touch panel 71 can be visually recognized, the upper end side of the touch panel 71 when viewed from the remote operator (upward direction in the plane of drawing in FIGS. 7 and 8) is the upper side and the lower end side when viewed from the remote operator (downward direction in the plane of drawing in FIGS. 7 and 8) is the lower side.

The touch sensor 72 detects an input operation on the touch panel 71, which is one of the operations on the remote operation device 70.

Specifically, the touch sensor 72 detects whether or not a finger is in contact with the touch panel 71, and when the contact of the finger is detected, detects the position thereof. Then, the touch sensor 72 outputs the detection result to the remote CPU 73. Thus, the remote CPU 73 can grasp the input operation on the touch panel 71. The specific configuration of the touch sensor 72 is arbitrary, and for example, includes a capacitance type sensor or a pressure sensor that makes the detection based on a change in capacitance.

The input operation on the touch panel 71 includes various operation modes and includes, for example, a tap operation, a double tap operation, a long tap operation for continuing the tap operation for a specified period, and a swipe operation.

The remote CPU 73 executes various processes using various programs stored in the remote memory 74. Specifically, the remote memory 74 stores a program related to image control of the touch panel 71, and the remote CPU 73 performs a display control of the touch panel 71 by reading and executing the program. That is, in the present embodiment, the remote CPU 73 corresponds to the "display control unit". Furthermore, the remote CPU 73 grasps various operations on the remote operation device 70 based on the signals input from the touch sensor 72 and the orientation detection unit 75.

The orientation detection unit 75 detects the orientation of the remote operation device 70. The orientation detection unit 75 includes, for example, a triaxial acceleration sensor and a triaxial gyro sensor, and detects the orientation of the remote operation device 70 and its change based on information obtained from these sensors.

For example, as shown in FIG. 1, when both ends of the remote operation device 70 in the longitudinal direction are held by the remote operator, the orientation detection unit 75 detects the rotation operation (hereinafter simply referred to as "first rotation operation") having, as a first rotation axis, a first center line M1 that passes through the center of the remote operation device 70 and extends in the thickness direction of the remote operation device 70. Furthermore, the orientation detection unit 75 detects the rotation operation (hereinafter simply referred to as "second rotation operation") having, as a second rotation axis, a second center line M2 that passes through the center of the remote operation device 70 and extends in the longitudinal direction of the remote operation device 70. The first center line M1 (first rotation axis) and the second center line M2 (second rotation axis) are orthogonal to each other.

The first rotation operation direction is a rotation direction of the remote operation device 70 having the thickness direction of the remote operation device 70 as the rotation center, and the second rotation operation direction is a rotation direction of the remote operation device 70 having the longitudinal direction of the remote operation device 70 as the rotation center. In other words, the orientation detection unit 75 detects a change in the rotational position of the remote operation device 70 in the first rotation operation direction and a change in the rotational position of the remote operation device 70 in the second rotation operation direction.

The orientation detection unit 75 detects whether or not at least one of the first rotation operation and the second rotation operation is performed, and when at least one of the rotation operations is performed, detects the mode of the rotation operation, and outputs the detection result to the remote CPU 73. As a result, the remote CPU 73 can grasp the first rotation operation and the second rotation operation, which are a kind of operation on the remote operation device 70. The mode of the rotation operation includes a rotation angle and a rotation speed.

As shown in FIG. 3, the remote operation device 70 and the forklift 20 are configured to be able to communicate wirelessly. Specifically, the remote operation device 70 includes a remote communication unit 76 that performs wireless communication, and the forklift 20 includes a vehicle communication unit 69 that performs wireless communication with the remote communication unit 76.

The vehicle communication unit 69 and the remote communication unit 76 are communication interfaces that perform wireless communication and are realized by, for example, at least one of one or more dedicated hardware circuits, and one or more processors (control circuits) that operate according to a computer program (software).

When the registered forklift 20 exists within the communication range, the remote communication unit 76 establishes a communication connection (pairing) with the vehicle communication unit 69 of the forklift 20. As a result, signals can be exchanged between the remote operation device 70 and the forklift 20.

Here, a state in which signals can be exchanged between the vehicle communication unit 69 and the remote communication unit 76 as described above is referred to as a communication connection state. The communication connection state can also be referred to as a state in which the vehicle communication unit 69 and the remote communication unit 76 are connected by wireless communication, and a state in which both communication units 69 and 76 are authenticated to exchange information with each other (in other words, a paired state).

In the present embodiment, the wireless communication format between the vehicle communication unit 69 and the remote communication unit 76 is Wi-Fi (in other words, wireless LAN of IEEE 802.11 standard). Both communication units 69 and 76 transmit and receive signals by packet communication.

Wi-Fi has a plurality of standards such as IEEE802.11a and IEEE802.11ac, but the wireless communication format between the vehicle communication unit 69 and the remote communication unit 76 may be any of the above plurality of standards.

Furthermore, the wireless communication format between the vehicle communication unit 69 and the remote communication unit 76 is not limited to Wi-Fi and is arbitrary, and may be, for example, Bluetooth (registered trademark) and Zigbee (registered trademark). Moreover, the transmission and reception of signals between the two communication units 69 and 76 are not limited to packet communication, and are arbitrary.

When a plurality of registered forklifts 20 exist within the communication range of the remote communication unit 76, the remote communication unit 76 establishes a communication connection with the vehicle communication unit 69 of the plurality of forklifts 20. In this case, the remote operation device 70 is in a communication connection state with the plurality of forklifts 20 and can exchange signals with the plurality of forklifts 20.

On the other hand, the vehicle communication unit 69 of the forklift 20 in the communication connection state is not in communication connection with the remote communication unit different from the remote communication unit 76 of the remote operation device 70 which is the opponent of the communication connection state until the communication connection state is canceled. That is, the vehicle communication unit 69 of the present embodiment is configured so as not to be in the communication connection state with the plurality of remote communication units 76 at the same time.

The remote communication unit 76 is electrically connected to the remote CPU 73. When remote operation is performed using the remote operation device 70, the remote CPU 73 generates a remote operation signal SGx1 used for remote operation of the forklift 20. The remote communication unit 76 sequentially transmits the generated remote operation signal SGx1 to the vehicle communication unit 69. In other words, the remote CPU 73 is configured to transmit the remote operation signal SGx1 using the remote communication unit 76. The remote operation signal SGx1 is a signal compatible with the wireless communication standard, and is a packet signal compatible with the Wi-Fi standard in the present embodiment.

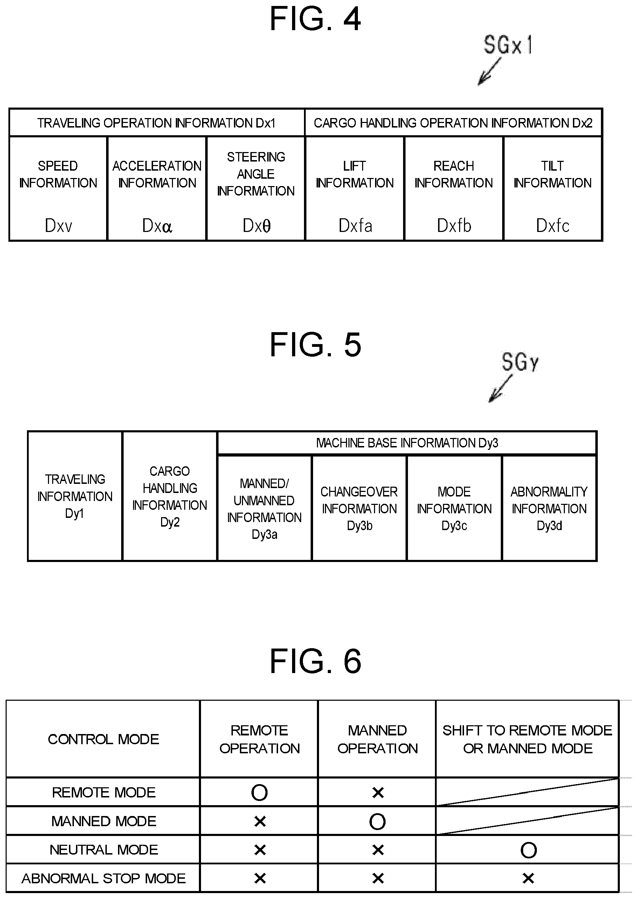

As shown in FIG. 4, the remote operation signal SGx1 is a signal in which various information regarding remote operation are set, and specifically, includes as the information regarding remote operation, traveling operation information Dx1 regarding traveling operation and cargo handling operation information Dx2 regarding cargo handling operation.

The traveling operation information Dx1 includes, for example, speed information Dxv in which the traveling speed of the forklift 20 is set, acceleration information Dxα in which the acceleration of the forklift 20 is set, and steering angle information Dxθ in which the steering angle of the forklift 20 is set.

The cargo handling operation information Dx2 includes, for example, lift information Dxfa in which the stroke amount of the lift movement is set, reach information Dxfb in which the stroke amount of the reach movement is set, and tilt information Dxfc in which the tilt angle of the tilt movement is set.

Further, in the present embodiment, the remote communication unit 76 is configured to transmit various signals of the wireless communication standard such as a remote start signal SGx4 and a remote stop signal SGx2, separately from the remote operation signal SGx1.

As shown in FIG. 3, the vehicle communication unit 69 of the forklift 20 includes a signal conversion unit 69a that converts various received signals of the wireless communication standard into control signals corresponding to the in-vehicle communication standard. In the present embodiment, the specific in-vehicle communication standard of the forklift 20 is the CAN standard. That is, in this embodiment, the control signal is a CAN signal. However, this is not the sole case, and a specific in-vehicle communication standard is arbitrary.

The traveling operation information Dx1 and the cargo handling operation information Dx2 are set in the control signal obtained by converting the remote operation signal SGx1. That is, the signal conversion unit 69a converts the remote operation signal SGx1 compatible with the wireless communication standard into a control signal compatible with the in-vehicle communication standard while holding both operation information Dx1 and Dx2 set in the remote operation signal SGx1.

The vehicle communication unit 69 is electrically connected to the vehicle CPU 64, and signals can be exchanged therebetween. The vehicle communication unit 69 converts the remote operation signal SGx1 into a control signal by using the signal conversion unit 69a when the remote operation signal SGx1 is received, and temporarily stores the control signal in a reception buffer 69b provided in the vehicle communication unit 69.

When remotely operating the forklift 20 using the remote operation device 70, the vehicle CPU 64 drives the forklift 20 (specifically, both actuators 61 and 62) in a mode corresponding to the control signal of the remote operation signal SGx1 stored in the reception buffer 69b. The forklift 20 thereby performs a movement corresponding to the traveling operation information Dx1 and the cargo handling operation information Dx2 set in the remote operation signal SGx1.

From the above, when the remote operation device 70 and the forklift 20 (specifically, both communication units 69 and 76) are arranged within the communicable range, the remote operation of the forklift 20 can be performed based on the remote operation signal SGx1 transmitted/received between the communication units 69 and 76. That is, the industrial vehicle remote operation system 10 of the present embodiment is configured so that the forklift 20 can be moved by both manned operation and remote operation using the remote operation device 70.

Here, under the condition that the communication connection between the both communication units 69 and 76 is established, the vehicle communication unit 69 regularly outputs the vehicle signal SGy in which the vehicle information of the forklift 20 is set to the remote communication unit 76, regardless of the control mode described later. Specifically, the vehicle CPU 64 regularly executes a process of generating a control signal of the in-vehicle communication standard in which the vehicle information is set based on the detection result of the vehicle state detection unit 66, and the like and outputting the control signal to the vehicle communication unit 69. The vehicle communication unit 69 uses the signal conversion unit 69a to convert the input control signal into a vehicle signal SGy compatible with the wireless communication standard and in which vehicle information is set, and sequentially transmits the vehicle signal SGy to the remote communication unit 76. The remote CPU 73 can grasp the current movement state and abnormality of the forklift 20 based on the vehicle signal SGy received by the remote communication unit 76.

The vehicle signal SGy will be described in more detail.

As shown in FIG. 5, the vehicle signal SGy includes traveling information Dy1, cargo handling information Dy2, and machine base information Dy3 as vehicle information. The machine base information Dy3 includes, for example, manned/unmanned information Dy3a indicating the presence or absence of an occupant, changeover information Dy3b indicating the state of the changeover switch 52, mode information Dy3c indicating the control mode, and abnormality information Dy3d indicating an abnormality of the forklift 20.

The machine base information Dy3 is information set based on the detection result of the vehicle state detection unit 66. The abnormality information Dy3d needs to be at least information indicating the presence or absence of an abnormality in the forklift 20, and may be information indicating only the presence or absence of an abnormality in the forklift 20 or information that can specify the specific content of the abnormality.

The remote CPU 73 can grasp the traveling state of the forklift 20 and the movement state of the forks 26 based on the traveling information Dy1 and the cargo handling information Dy2 included in the vehicle signal SGy. Furthermore, the remote CPU 73 can grasp the state of the changeover switch 52, the presence or absence of an occupant, the control mode, and the presence or absence of an abnormality based on the machine base Dy3 included in the vehicle signal SGy.

As shown in FIG. 6, the industrial vehicle remote operation system 10 of the present embodiment has a plurality of control modes for the forklift 20. Specifically, the industrial vehicle remote operation system 10 has a remote mode, a manned mode, a neutral mode, and an abnormal stop mode as control modes. Each control mode will be described.

The remote mode is a control mode in which the movement of the forklift 20 is performed not by operation of the vehicle operation unit 40 but by remote operation by the remote operation device 70. As shown in FIG. 6, when the control mode is the remote mode, the movement corresponding to the operation on the remote operation device 70 is performed in the forklift 20, while the movement of the forklift 20 based on the operation of the vehicle operation unit 40 is prohibited (that is, restricted).

In other words, the remote mode can be said to be a control mode in which the remote operation by the remote operation device 70 is performed, while the manned operation (specifically, the direct operation of the forklift 20 based on the operation of the vehicle operation unit 40) is stopped. In addition, it can be said that when the manned operation is stopped, this means that the manned operation is prohibited or restricted.

The remote mode is a control mode in which the movement of the forklift 20 is performed not by operation by the remote operation device 70 but by operation of the vehicle operation unit 40. As shown in FIG. 6, when the control mode is the manned mode, the movement corresponding to the operation of the vehicle operation unit 40 is performed in the forklift 20, while the remote operation of the forklift 20 by the remote operation device 70 is prohibited (that is, restricted).

In other words, the manned mode can be said to be a control mode in which the manned operation is performed while the remote operation by the remote operation device 70 is stopped. It can be said that when the remote operation is stopped, this means that the remote operation is prohibited or restricted.

The neutral mode is a control mode in which neither the movement of the forklift 20 based on the remote operation by the remote operation device 70 nor the movement of the forklift 20 based on the operation of the vehicle operation unit 40 is performed. That is, the neutral mode is a control mode in which neither remote operation by the remote operation device 70 nor manned operation is accepted. In other words, the neutral mode can be said to be a control mode in which both remote operation by the remote operation device 70 and manned operation are stopped.

The abnormal stop mode is a control mode that is set when an abnormal situation different from the expected situation occurs, such as when someone gets on the forklift 20 in a situation where the control mode is the remote mode. The abnormal stop mode is, like the neutral mode, a control mode in which neither the movement of the forklift 20 based on the remote operation by the remote operation device 70 nor the movement of the forklift 20 based on the operation of the vehicle operation unit 40 is performed. When the control mode is the abnormal stop mode, the forklift 20 is stopped and the stopped state is maintained regardless of both the operation of the remote operation device 70 and the operation of the vehicle operation unit 40. That is, the abnormal stop mode is a control mode in which the movement of the forklift 20 is stopped and neither remote operation of the remote operation device 70 nor manned operation is accepted. In other words, it can be said that the abnormal stop mode is a control mode in which both remote operation by the remote operation device 70 and manned operation are stopped.

Here, the neutral mode is a control mode in which the shift to the remote mode or the manned mode is permitted. Specifically, the control mode shifts from the neutral mode to the remote mode when the remote mode shift condition is satisfied during the neutral mode, and the control mode shifts from the neutral mode to the manned mode when the manned mode shift condition is satisfied during the neutral mode. Note that the neutral mode can also be said to be the permission mode.

To the contrary, the abnormal stop mode is a control mode in which the shift to the remote mode or the manned mode is prohibited. Specifically, even if the remote mode shift condition is satisfied during the abnormal stop mode, the control mode is not shifted from the abnormal stop mode to the remote mode. Similarly, even if the manned mode shift condition is satisfied during the abnormal stop mode, the control mode is not shifted from the abnormal stop mode to the manned mode. The abnormal stop mode is a control mode in which the shift to the neutral mode is permitted. This point will be described later.

As shown in FIG. 3, the remote memory 74 stores a remote program 74a for executing various processes related to the remote operation of the forklift 20. The remote program 74a is an application program for remotely operating the forklift 20 using the remote operation device 70.

The remote CPU 73 activates the remote program 74a (remote operation application) when a predefined remote operation activating condition is satisfied.

In the present embodiment, the remote operation activating condition is that the activation operation is performed on the remote operation device 70. In the configuration in which the remote operation icon is displayed on the touch panel 71, for example, the activation operation is an input operation on the remote operation icon.

However, the remote operation activating condition is not limited thereto and may be arbitrary, and for example, may be that the communication connection between the remote communication unit 76 of the remote operation device 70 and the vehicle communication unit 69 of the forklift 20 is established, or that the activation operation is performed under the condition that the communication connection between the communication units 69 and 76 is established. Note that the operation by the remote operator is not essential in the remote operation activating condition.

Accompanying the activation of the remote program 74a, the remote CPU 73 first searches for a forklift 20 that can be connected by communication within a range where it can communicate with the remote communication unit 76 (in other words, registered forklift 20), and if such a forklift 20 exists, establishes a communication connection with the vehicle communication unit 69 of the forklift 20. As a result, the vehicle communication unit 69 and the remote communication unit 76 are in the communication connection state. Thereafter, the remote CPU 73 displays the standby image G1 on the touch panel 71.

The standby image G1 will be described with reference to FIG. 7.

As shown in FIG. 7, the standby image G1 displays an indication that the control mode is not the remote mode, and, for example, displays "REMOTE OFF" near the upper end of the standby image G1. The display may be omitted.

Furthermore, in the standby image G1, a remote target icon Ic1 showing the forklift 20 connected by communication and an end icon Ic2 are displayed. The remote operator can perform an input operation (e.g., a tap operation) on the remote target icon Ic1 and the end icon Ic2.

As described above, the remote operation device 70 of the present embodiment can perform a communication connection with a plurality of forklifts 20. Therefore, if a plurality of forklifts 20 capable of communication connection exist around the remote operation device 70, the remote operation device 70 establishes communication connection with the plurality of forklifts 20. The remote CPU 73 displays a plurality of remote target icons Ic1 on the standby image G1 when the communication connection is established with the plurality of forklifts 20. That is, when the remote operation device 70 is communicatively connected to the plurality of forklifts 20, the remote CPU 73 displays the remote target icons Ic1 corresponding to the respective forklifts 20.

The display mode of the remote target icon Ic1 differs between a remote-enabled state in which the control mode can be set to the remote mode and a remote-disabled state in which the control mode cannot be set to the remote mode.

For example, as shown by the lower one of the two remote target icons Ic1 in FIG. 7, the remote CPU 73 performs a remote-disabled display indicating the remote-disabled state to the remote target icon Ic1 corresponding to the forklift 20 in the remote-disabled state. Specifically, the remote CPU 73 displays a cross mark "X" on the remote target icon Ic1 corresponding to the forklift 20 in the remote-disabled state.

On the other hand, as shown by the upper one of the two remote target icons Ic1 in FIG. 7, the remote CPU 73 does not perform a remote-disabled display (specifically, display of the cross mark "X") to the remote target icon Ic1 corresponding to the forklift 20 in the remote-enabled state. As a result, the remote operator can know that the forklift 20 corresponding to the upper remote target icon Ic1 can be remotely operated.

Note that the specific mode of the display mode of the remote target icon Ic1 is arbitrary as long as it is different between the remote-enabled state and the remote-disabled state.

In the present embodiment, the remote-enabled state is a state in which all three conditions, (A) the control mode is the neutral mode, (B) there is no occupant (i.e., the occupant sensor 51 is in the OFF state), and (C) the changeover switch 52 is set to "REMOTE", are satisfied. On the other hand, the remote-disabled state is a case where it is not the remote-enabled state, that is, any one of the three conditions (A) to (C) is not satisfied.

The end icon Ic2 is an icon used to end or terminate the remote program 74a. The end icon Ic2 is provided, for example, at a corner portion of the standby image G1. Indication to terminate the application is displayed on the end icon Ic2. Note that the specific shapes, arrangements, and display modes of the remote target icon Ic1 and the end icon Ic2 are not limited to the above and are arbitrary.

The remote CPU 73 displays an operation image G2 for remotely operating the forklift 20 when an input operation is performed on the remote target icon Ic1 corresponding to the forklift 20 in the remote-enabled state.

The operation image G2 will be described with reference to FIG. 8.

As shown in FIG. 8, the operation image G2 is displayed on the entire surface of the touch panel 71. In correspondence with the touch panel 71 having a shape with a longitudinal direction and a short direction (specifically, a rectangular shape), the operation image G2 has a shape with a longitudinal direction and a short direction (specifically, a rectangular shape).

In the operation image G2, the operation area A1 and the travel icon Ic3, the cargo handling icon Ic4, and the remote stop icon Ic5 provided at different positions with respect to the operation area A1 are displayed.

The operation area A1 is disposed on one end side of both ends in the longitudinal direction of the operation image G2. The operation area A1 is provided at a position where a finger (e.g., thumb) of the left hand is naturally arranged when the remote operation device 70 is held with both hands. The image of the forklift 20 may be displayed in the operation areaA1.

The travel icon Ic3 is provided in the operation image G2 at a position spaced apart from the operation area A1 in the longitudinal direction of the touch panel 71, and more specifically is provided near the center portion of the operation image G2.

The cargo handling icon Ic4 is disposed below the travel icon Ic3 in the operation image G2. The cargo handling icon Ic4 includes a lift icon Ic4a, a reach icon Ic4b, and a tilt icon Ic4c. The icons Ic4a to Ic4c are arrayed spaced apart from each other in the longitudinal direction of the touch panel 71. The shape and the positional relationship of the operation area A1 and each of the icons Ic3, Ic4a to Ic4c are not limited to the above and are arbitrary.

In the present embodiment, any of the icons Ic3, Ic4a to Ic4c is selected by being subjected to the input operation (e.g., tap operation), and the remote CPU 73 generates the remote operation signal SGx1 so that the movement corresponding to the selected icon is performed in a mode corresponding to the operation mode for the operation area A1. For example, when the travel icon Ic3 is selected, the remote CPU 73 generates the remote operation signal SGx1 so that the traveling is performed at the traveling speed and the acceleration corresponding to the operation mode for the operation areaA1.

In the present embodiment, the icon selected in the operation image G2 is highlighted. For example, when the travel icon Ic3 is selected, as shown in FIG. 8, the travel icon Ic3 is highlighted than the cargo handling icon Ic4. The image in the operation area A1 may differ depending on the target movement (traveling, lift movement, reach movement, and tilt movement).

The remote stop icon Ic5 is an icon used by the remote operator to stop the remote operation. In the remote stop icon Ic5, a display suggesting to stop the remote operation is made.

The remote stop icon Ic5 is disposed, for example, on the opposite side of the operation area A1 in the operation image G2. That is, the operation area A1 and the remote stop icon Ic5 are arranged spaced apart from each other on both end sides in the longitudinal direction of the operation image G2. Therefore, the remote stop icon Ic5 is arranged at a position where it is easy to operate with the hand (the right hand in the present embodiment) different from the hand (the left hand in the present embodiment) that performs the input operation on the operation areaA1.

Furthermore, the remote stop icon Ic5 is disposed on the upper end side of the central line in the short direction of the operation image G2. Therefore, the remote operator cannot perform the tap operation on the remote stop icon Ic5 unless he/she intentionally places his/her finger above, and thus an erroneous operation is less likely to occur.

Note that the remote CPU 73 may display a predetermined image, for example, a setting image for performing various settings, in addition to the standby image G1 or the operation image G2 during the activation of the remote program 74a.

After the initial setting such as establishment of communication connection between the communication units 69 and 76 is performed accompanying the activation of the remote program 74a, the remote CPU 73 reads out the remote control process program provided in the remote program 74a, and repeatedly executes (that is, regularly) the remote control process. The remote operation process is a process of generating various signals to be transmitted to the vehicle communication unit 69.

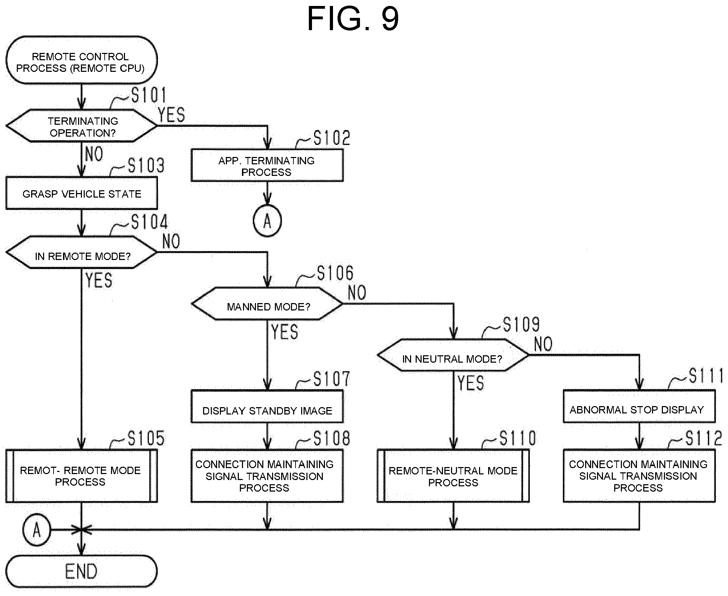

The remote control process will be described with reference to FIGS. 9 to 11. Note that, for the sake of convenience of explanation, in the following description, it is assumed that the number of forklift 20 in which the communication connection with the remote operation device 70 is established is one.

As shown in FIG. 9, the remote CPU 73 first determines in step S101 whether or not a terminating operation has been performed on the remote operation device 70. In the present embodiment, the terminating operation is an input operation to the end icon Ic2. The remote CPU 73 determines whether or not an input operation to the end icon Ic2 has been performed based on the currently displayed image and the detection result of the touch sensor 72.

In the present embodiment, the end icon Ic2 is displayed on the standby image G1 but is not displayed on the operation image G2. Therefore, in the present embodiment, the terminating operation can be performed only under a situation where the standby image G1 is displayed. However, the present invention is not limited to this, and the end icon Ic2 may be displayed on the operation image G2 so that the terminating operation can be performed during the remote operation. Moreover, the specific mode of the input operation on the end icon Ic2 is arbitrary, and may be, for example, a tap operation or a long tap operation.

When the terminating operation has been performed, the remote CPU 73 proceeds to step S102 and executes the application terminating process of terminating the remote program 74a. The application terminating process includes releasing the communication connection (pairing) of the communication units 69 and 76, and terminating the display of the standby image G1.

Explaining just in case, terminating the remote program 74a and stopping the remote operation by the remote operation device 70 (in other words, stopping the remote mode) are different, and the remote program 74a is still in execution even if the remote mode is stopped. Therefore, there is a case where the remote mode is temporarily stopped and then the remote mode is restarted again. Furthermore, the communication connection state of both communication units 69 and 76 is maintained even after the remote mode is stopped.

When the terminating operation has not been performed, the remote CPU 73 proceeds to step S103 and grasps the current vehicle state. Specifically, as described above, under a situation where the communication connection between the two communication units 69 and 76 is established (that is, completed), the vehicle communication unit 69 regularly transmits the vehicle signal SGy to the remote communication unit 76 regardless of the control mode. Therefore, the remote communication unit 76 regularly receives the vehicle signal SGy. The remote communication unit 76 includes a reception buffer for temporarily storing the vehicle information (specifically, each information Dy1 to Dy3) included in the received vehicle signal SGy.

In such a configuration, the remote CPU 73 refers to the latest vehicle information stored in the reception buffer in step S103, and grasps the vehicle state, such as the traveling state of the forklift 20, the movement state of the forks 26, the state of the changeover switch 52, the presence or absence of an occupant, the control mode, and the presence or absence of abnormality of the forklift 20.

The latest vehicle information is, for example, vehicle information of the latest vehicle signal SGy of the vehicle signals SGy received before the execution of the process of step S103. However, the present invention is not limited thereto, and for example, the remote CPU 73 may wait until the remote communication unit 76 receives the vehicle signal SGy in step S103.

Furthermore, for example, the remote CPU 73 may wait for the reception of the vehicle signal SGy only when the remote communication unit 76 has not received the vehicle signal SGy even once before the execution of the process of step S103 and, for example, may execute the remote control process at least once after receiving the vehicle signal SGy.

Note that the specific configuration for the remote operation device 70 to grasp the vehicle state is arbitrary. For example, the remote memory 74 may be provided with a storage area in which vehicle information of the forklift 20 is stored, and the remote CPU 73 may be configured to update the storage area based on each information Dy1 to Dy3 included in the vehicle signal SGy every time the remote communication unit 76 receives the vehicle signal SGy. In this case, the remote CPU 73 grasps the vehicle state by referring to the information stored in the storage area.

In the following step S104, the remote CPU 73 determines whether or not the current control mode is the remote mode based on the vehicle state grasped in step S103.

When the current control mode is the remote mode, the remote CPU 73 executes the remote-remote mode process in step S105, and terminates the remote control process.

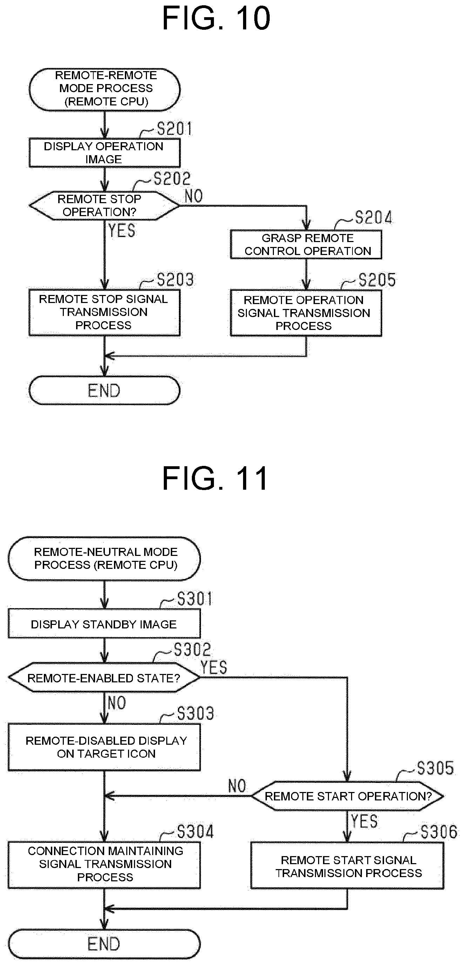

The remote-remote mode process will be described with reference to FIG. 10.

As shown in FIG. 10, the remote CPU 73 first displays the operation image G2 in step S201. Note that when the operation image G2 is already being displayed, the remote CPU 73 maintains the display of the operation image G2.

Thereafter, in step S202, the remote CPU 73 determines whether or not a remote stop operation is performed on the remote operation device 70.

The remote stop operation of the present embodiment is, for example, an input operation (e.g., a tap operation) on the remote stop icon Ic5 by way of example. In step S202, the remote CPU 73 determines whether or not there is an input operation on the remote stop icon Ic5 based on the detection result of the touch sensor 72.

When there is an input operation to the remote stop icon Ic5, the remote CPU 73 executes a process of normally stopping the remote operation by the remote operation device 70 in step S203, and terminates the remote-remote mode process. Specifically, the remote CPU 73 generates a remote stop signal SGx2 which is a signal complying with a wireless communication standard indicating to normally stop the remote operation by the remote operation device 70, and uses the remote communication unit 76 to transmit the remote stop signal SGx2 to the vehicle communication unit 69.

In the present embodiment, the remote stop signal SGx2 is a signal having a data format different from that of the remote operation signal SGx1. However, this is not the sole case, and the remote stop signal SGx2 and the remote operation signal SGx1 may be signals of the same data format. In this case, in addition to both operation information pieces Dx1 and Dx2, information for specifying the presence or absence of a remote stop operation is preferably set in the remote operation signal SGx1. In such a configuration, the remote operation signal SGx1 in which the information indicating that the remote stop operation has been performed is set corresponds to the remote stop signal SGx2. The remote stop signal SGx2 can also be said to be a signal indicating that the remote stop operation has been performed.

On the other hand, when the remote stop operation is not performed, the remote CPU 73 makes a negative determination in step S202, and executes the processes of step S204 and step S205 for generating and transmitting the remote operation signal SGx1 corresponding to the remote control operation, which is one of the operations on the remote operation device 70.

Specifically, in step S204, the remote CPU 73 first grasps the remote control operation on the remote operation device 70 based on the detection result of the touch sensor 72 and the detection result of the orientation detection unit 75.

The remote control operation is an operation different from the remote start operation and the remote stop operation, and is an operation for moving the forklift 20 by remote operation. In the present embodiment, the remote control operation on the remote operation device 70 is at least one of an input operation, a first rotation operation, and a second rotation operation on the operation areaA1 on the touch panel 71.

For example, the remote CPU 73 grasps, based on the detection result of the touch sensor 72, whether or not there is a swipe operation triggered by an input operation on the operation area A1 as one kind of input operation on the operation area A1. The swipe operation is a series of input operations in which the position where the input operation is performed moves while the state in which the input operation is performed on the touch panel 71 is maintained.

When the input operation is first performed in the operation area A1, and the input operation is continuously performed thereafter in a state where the input operation positions are continuous, the remote CPU 73 determines that the swipe operation is performed, and grasps the relative position between the start position, which is the position where the input operation is performed first, and the position where the input operation is currently being performed.

Furthermore, the remote CPU 73 grasps, based on the detection result of the orientation detection unit 75, whether or not the first rotation operation is performed and, if the first rotation operation is performed, the rotation angle thereof.

In the following step S205, the remote CPU 73 generates and transmits the remote operation signal SGx1 based on the grasped result of step S204.

Specifically, the remote CPU 73 sets the traveling operation information Dx1 based on the grasped result of step S204. For example, when the travel icon Ic3 is selected from among the icons Ic3, Ic4a to Ic4c, the remote CPU 73 sets the speed information Dxv and the acceleration information Dxα based on the operation mode of the swipe operation on the operation area A1, and sets the steering angle information Dxθ based on the operation mode of the first rotation operation.

Furthermore, for example, when any one of the icons Ic3, Ic4a to Ic4c other than the travel icon Ic3 is selected, the remote CPU 73 sets the traveling operation information Dx1 corresponding to the traveling stop. The traveling operation information Dx1 corresponding to the traveling stop is, for example, traveling operation information Dx1 in which "0" is set for all of the speed information Dxv, the acceleration information Dxα, and the steering angle information Dxθ.

Furthermore, the remote CPU 73 sets the cargo handling operation information Dx2 based on the grasped result of step S204. For example, when any of the icons Ic4a to Ic4c is selected, the remote CPU 73 sets the cargo handling operation information Dx2 corresponding to the selected icon.

Then, the remote CPU 73 transmits the remote operation signal SGx1, in which the traveling operation information Dx1 and the cargo handling operation information Dx2 corresponding to the remote control operation are set, to the vehicle communication unit 69 using the remote communication unit 76.

According to the configuration, the remote stop signal SGx2 is transmitted based on the remote stop operation (specifically, the input operation to the remote stop icon Ic5) performed in a situation where the operation image G2 is displayed. The vehicle CPU 64 executes a process of normally stopping the remote operation by the remote operation device 70 based on the vehicle communication unit 69 receiving the remote stop signal SGx2. As a result, the remote operation using the remote operation device 70 stops normally.

The determination process of step S202 is executed in the remote-remote mode process, but not executed in the other control modes. Therefore, the remote CPU 73 of the present embodiment accepts the remote stop operation and executes the process related to the remote stop when the control mode is the remote mode, while the remote CPU 73 does not accept the remote stop operation when the control mode is not the remote mode.

Furthermore, in the present embodiment, the remote stop icon Ic5 is displayed on the operation image G2 but not on the standby image G1. Focusing on this point, the remote operation device 70 of the present embodiment is configured to be able to perform a remote stop operation when the operation image G2 is displayed, but to not perform the remote stop operation when the operation image G2 is not displayed.

As shown in FIG. 9, when the current control mode is not the remote mode, the remote CPU 73 proceeds to step S106, determines whether or not the current control mode is the manned mode, and executes a process corresponding to the manned mode when the current control mode is the manned mode.

Specifically, the remote CPU 73 displays the standby image G1 in step S107. If the standby image G1 is already displayed, the remote CPU 73 maintains the display of the standby image G1 in step S107.

Thereafter, in step S108, the remote CPU 73 executes a process of transmitting the connection maintaining signal SGx3 for maintaining the communication connection state of both the communication units 69 and 76, and terminates the remote control process.

Specifically, both communication units 69 and 76 are configured to regularly exchange signals with each other, and if no signal is received even after elapse of a specified period of time, determine that a communication error has occurred, and cancel the communication connection state. Therefore, the remote CPU 73 transmits the connection maintaining signal SGx3 using the remote communication unit 76 in order to maintain the communication connection state.

Although the specific configuration of the connection maintaining signal SGx3 is arbitrary, it is, for example, a remote operation signal SGx1 for stopping for stopping the movement of the forklift 20 or maintaining the movement stop state, and specifically, a remote operation signal SGx1 in which numerical information (e.g., "0") corresponding to the stopping of movement is set in both operation information pieces Dx1 and Dx2.

According to this configuration, when the control mode is the manned mode, the generation and transmission of the remote operation signal SGx1 based on the remote control operation are not performed, but the connection maintaining signal SGx3 is regularly transmitted. Therefore, the communication connection state of both communication units 69 and 76 is maintained. Furthermore, since the connection maintaining signal SGx3 is the remote operation signal SGx1 for stopping, even if the remote operation of the forklift 20 based on the connection maintaining signal SGx3 is performed, the forklift 20 is not moved and is stopped.

When determined in step S106 that the current control mode is not the manned mode, the remote CPU 73 proceeds to step S109 and determines whether or not the current control mode is the neutral mode.

When the current control mode is the neutral mode, the remote CPU 73 proceeds to step S110 and executes the remote-neutral mode process. The remote-neutral mode process will be described with reference to FIG. 11.

As shown in FIG. 11, the remote CPU 73 displays the standby image G1 in step S301. Note that if the standby image G1 is already being displayed, the remote CPU 73 maintains the display of the standby image G1.

Then, in step S302, the remote CPU 73 determines whether or not the forklift 20 in which the communication connection is made is in the remote-enabled state.

Specifically, the remote CPU 73 determines whether or not the changeover switch 52 is set to "REMOTE" based on the changeover information Dy3b of the vehicle information referred to in step S103. Furthermore, the remote CPU 73 determines whether or not there is an occupant based on the manned/unmanned information Dy3a of the vehicle information referred to in step S103.

When the changeover switch 52 is set to "MANNED" or when an occupant is detected, the remote CPU 73 determines that it is in the remote-disabled state and makes a negative determination in step S302, and proceeds to step S303. In step S303, the remote CPU 73 performs a remote-disabled display on the remote target icon Ic1 displayed in the standby image G1. Then, in step S304, the remote CPU 73 executes a process of transmitting the connection maintaining signal SGx3, and terminates the remote-neutral mode process.

Meanwhile, when the changeover switch 52 is set to "REMOTE" and the occupant is not detected, the remote CPU 73 determines that it is in the remote-enabled state, and makes a positive determination in step S302. In this case, the remote CPU 73 proceeds to step S305 without performing a remote-disabled display on the remote target icon Ic1.

In step S305, the remote CPU 73 determines whether or not a remote start operation is performed on the remote operation device 70. The remote start operation is one of the shift conditions from the neutral mode to the remote mode. The remote start operation is, for example, an input operation (e.g., a tap operation) on the remote target icon Ic1 displayed in the standby image G1, and particularly in the present embodiment, the input operation on the remote target icon Ic1 corresponding to the forklift 20 in the remote-enabled state. However, the remote start operation is not limited thereto and is arbitrary.

In step S305, the remote CPU 73 determines whether or not there is an input operation on the remote start icon Ic1 based on the detection result of the touch sensor 72. If there is no input operation to the remote target icon Ic1, the remote CPU 73 proceeds to step S304, and if there is an input operation to the remote target icon Ic1, determines to start the remote operation by the remote operation device 70, and executes a process of transmitting the remote start signal SGx4 in step S306.

The remote start signal SGx4 is a signal of the wireless communication standard indicating to start the remote operation by the remote operation device 70. In step S306, the remote CPU 73 generates the remote start signal SGx4 and transmits the remote start signal SGx4 to the vehicle communication unit 69 using the remote communication unit 76.

In the present embodiment, the remote start signal SGx4 is a signal having a data format different from that of the remote operation signal SGx1. However, this is not the sole case, and the remote start signal SGx4 and the remote operation signal SGx1 may be signals of the same data format. In this case, in addition to both operation information pieces Dx1 and Dx2, information for specifying the presence or absence of a remote start operation is preferably set in the remote operation signal SGx1. In this case, the remote operation signal SGx1 in which the information indicating that the remote start operation has been performed corresponds to the remote start signal SGx4. The remote start signal SGx4 can also be said to be a signal indicating that a remote start operation has been performed.

According to such a configuration, the standby image G1 displays the remote target icon Ic1 corresponding to the forklift 20 in which the communication connection is established. The remote target icon Ic1 is not disabled-displayed when the forklift 20 is in the remote-enabled state, but is disabled-displayed when the forklift 20 is in the remote-disabled state. Then, the remote start signal SGx4 is transmitted based on the remote start operation being performed in a situation where the forklift 20 is in the remote-enabled state.

Note that the remote mode shift condition, which is the shift condition from the neutral mode to the remote mode in the present embodiment, is that the remote start operation is performed in a situation where the changeover switch 52 is set to "remote" and the occupant is not detected.

As shown in FIG. 9, when the determination processes of steps S104, S106, and S109 are all negative determinations, this means that the current control mode is the abnormal stop mode. In this case, the remote CPU 73 executes the processes of steps S111 and S112 corresponding to the abnormal stop mode, and terminates the remote control process.

Specifically, in step S111, the remote CPU 73 performs an abnormal stop display, which is a kind of movement stop notification for notifying that the movement is stopped.

The abnormal stop display is a notification indicating that the abnormal stop is performed with respect to the remote operator. The abnormal stop display in the present embodiment means, for example, that "ABNORMAL STOP" is displayed on the operation image G2, as shown in FIG. 8.

However, the specific display mode of the abnormal stop display is not limited thereto and is arbitrary, and for example, the abnormal stop display may be displayed in a color different from other icons so as to be emphasized. Furthermore, the remote CPU 73 may display a dedicated image different from the standby image G1 or the operation image G2 as the abnormal stop display.

If the abnormal stop display is already performed, the remote CPU 73 maintains the abnormal stop display in step S111. Furthermore, in the present embodiment, the abnormal stop display is made on the operation image G2 when the control mode shifts from the remote mode to the abnormal stop mode, and the abnormal stop display is made on the standby image G1 when the control mode shifts from the manned mode to the abnormal stop mode. That is, the image displayed on the touch panel 71 differs depending on the control mode of the shift source to the abnormal stop mode. However, this is not the sole case, and either the standby image G1 or the operation image G2 may be displayed regardless of the control mode of the shift source.

Next, in step S112, the remote CPU 73 executes a process of transmitting the connection maintaining signal SGx3 to the vehicle communication unit 69 using the remote communication unit 76.

According to this configuration, the operation image G2 is displayed on the touch panel 71 when the control mode is the remote mode, and the standby image G1 is displayed on the touch panel 71 when the control mode is the neutral mode or the manned mode.

Therefore, for example, when the control mode is changed from the neutral mode to the remote mode, the image displayed on the touch panel 71 is changed from the standby image G1 to the operation image G2. Accordingly, the remote operator can execute the remote operation using the remote operation device 70.

On the other hand, when the control mode shifts from the remote mode to the neutral mode by performing a remote stop operation, for example, the image displayed on the touch panel 71 is changed from the operation image G2 to the standby image G1. Thus, the remote operator can know that the remote operation using the remote operation device 70 has stopped.

Furthermore, the abnormal stop display is continuously performed over the period in which the control mode is the abnormal stop mode. Specifically, the abnormal stop display is started when the control mode is changed from the remote mode or the manned mode to the abnormal stop mode, and is terminated when the control mode is changed from the abnormal stop mode to the neutral mode. For example, when the control mode is changed from the remote mode → abnormal stop mode → neutral mode, the image displayed on the touch panel 71 is changed from the operation image G2 without the abnormal stop display →operation image G2 with the abnormal stop display → standby image G1.

Here, in the present embodiment, the signal is regularly transmitted from the remote communication unit 76 to the vehicle communication unit 69 regardless of the control mode. Therefore, the communication connection state of both communication units 69 and 76 is maintained regardless of the control mode. That is, the communication connection state of both communication units 69 and 76 is maintained even during the control mode in which the remote operation using the remote operation device 70 is not performed, and the shift of the control mode is performed while maintaining the communication connection state.

Next, various controls by the vehicle CPU 64 of the forklift 20 will be described.

The vehicle CPU 64 performs various initial settings based on an establishment of the communication connection between the vehicle communication unit 69 and the remote communication unit 76, that is, the vehicle communication unit 69 and the remote communication unit 76 are in the communication connection state.

For example, the vehicle CPU 64 sets the control mode to the neutral mode. Specifically, the vehicle memory 65 is provided with a mode storage area in which mode information for specifying the control mode is stored, and the vehicle CPU 64 specifies the current control mode based on the mode information stored in the storage area. In such a configuration, the vehicle CPU 64 sets the above mode information to information corresponding to the neutral mode as an initial setting. That is, the initial control mode in the present embodiment is the neutral mode.

Furthermore, the vehicle CPU 64 grasps the current vehicle state as an initial setting, and transmits the vehicle signal SGy corresponding to the current vehicle state using the vehicle communication unit 69. As a result, the remote CPU 73 can grasp the vehicle state at the stage when the communication connection is established, in other words, at the initial stage.

As shown in FIG. 3, the vehicle memory 65 stores a vehicle control process execution program 65a for executing a vehicle control process of performing the control of the forklift 20 and the transmission of the vehicle signal SGy. The vehicle control process includes a process of remotely operating the forklift 20 using the remote operation device 70. Therefore, the vehicle control process execution program 65a can be said to be a program for remotely operating the forklift 20 using the remote operation device 70.

In the present embodiment, the vehicle control process execution program 65a corresponds to the "industrial vehicle remote operation program". The vehicle memory 65 in which the vehicle control process execution program 65a is stored is a computer-readable medium that stores the industrial vehicle remote operation program. The computer-readable medium is an arbitrary medium that stores various computer programs in an arbitrary mode such as electronically, magnetically, optically, and electromagnetically. The computer-readable medium includes non-transitory computer-readable medium.

The vehicle CPU 64 reads the vehicle control process execution program 65a and repeatedly executes the vehicle control process when the vehicle communication unit 69 and the remote communication unit 76 are in the communication connection state.

Note that in the present embodiment, the vehicle control process is regularly executed in a specific cycle. Therefore, the vehicle signal SGy is regularly transmitted in a specific cycle. However, the transmission interval of the vehicle signal SGy may be before or after the specific period. That is, the vehicle signal SGy needs to be repeatedly transmitted, and the transmission interval of the vehicle signal SGy does not necessarily need to be constant.

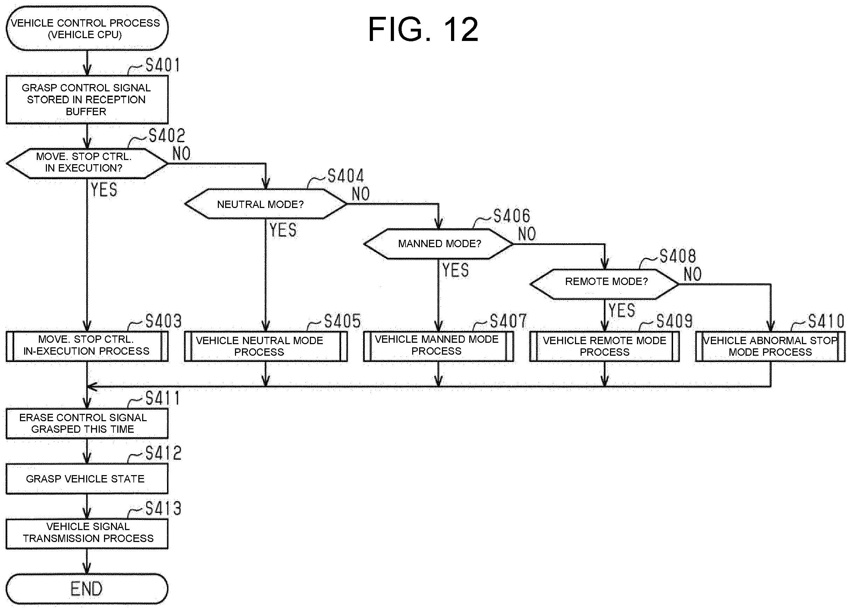

The vehicle control process will be described with reference to FIGS. 12 to 17.

As shown in FIG. 12, in step S401, the vehicle CPU 64 first grasps a control signal to be the target in this vehicle control process (in other words, a reception signal from the remote communication unit 76).

Specifically, the vehicle CPU 64 grasps if the control signal stored in the reception buffer 69b provided in the vehicle communication unit 69 is converted from one of the remote operation signal SGx1 (or the connection maintaining signal SGx3), the remote stop signal SGx2, and the remote start signal SGx4. When the control signal is the remote operation signal SGx1, the vehicle CPU 64 also grasps each operation information pieces Dx1 and Dx2 included in the control signal.

The reception buffer 69b may have a configuration of storing one control signal or may have a configuration of storing a plurality of control signals. In the configuration in which a plurality of control signals are stored in the reception buffer 69b, the vehicle CPU 64 grasps the oldest one from the plurality of control signals stored in the reception buffer 69b.

In subsequent step S402, the vehicle CPU 64 determines whether or not the movement stop control for stopping the movement is being performed regardless of the operation of vehicle operation unit 40. Specifically, the vehicle memory 65 is provided with a storage area in which a movement stop control flag for specifying whether or not the movement stop control is being performed is set. The vehicle CPU 64 is configured to set the movement stop control flag when the movement stop control is being performed.

The vehicle CPU 64 determines that the movement stop control is being performed when the movement stop control flag is set in the storage area, while the vehicle CPU 64 determines that the movement stop control is not being performed when the movement stop control flag is not set.

When determining that the movement stop control is being performed, the vehicle CPU 64 executes the movement stop control in-execution process corresponding to the movement stop control being performed in step S403, and proceeds to step S411.

The movement stop control in-execution process is a process performed during a period from the start of the movement stop control until the movement stop control is terminated. Specifically, the traveling of the forklift 20 and the movement of the forks 26 may not be stopped immediately after the movement stop control is started because of the inertial force. Therefore, a time lag may occur from the start of the movement stop control to the termination of the movement stop control. The time lag (particularly stop control that is related to traveling stop) may be longer than the execution cycle of the vehicle control process. Therefore, in the present embodiment, the vehicle CPU 64 is configured to execute the movement stop control in-execution process.

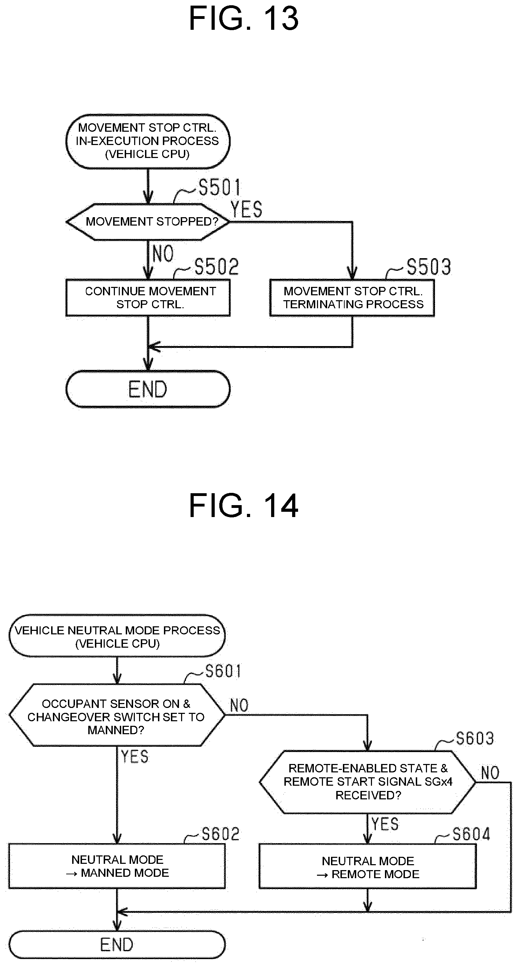

The movement stop control in-execution process will be described with reference to FIG. 13.

As shown in FIG. 13, the vehicle CPU 64 first determines in step S501 whether or not the movement of the forklift 20 is stopped. Specifically, the vehicle CPU 64 determines whether or not the vehicle is traveling and the movement of the forks 26 is stopped, based on the detection result of the vehicle state detection unit 66.

If either the traveling or the movement of the forks 26 is being performed, the vehicle CPU 64 proceeds to step S502, continues the movement stop control, and terminates the movement stop control in-execution process.

Describing the process of step S502 in detail, when the vehicle is currently traveling, the vehicle CPU 64 continues the drive and control of the traveling actuator 61 so that the traveling is stopped. In this case, the vehicle CPU 64 may be configured to decelerate the forklift 20 at a constant forced stop deceleration, or calculate the forced stop deceleration based on the current traveling speed or acceleration every time the process of step S502 is executed to decelerate the forced stop deceleration.

In short, the deceleration mode in the movement stop control is not limited to a configuration of decelerating at a constant deceleration, and may be a configuration in which the deceleration is varied. In the configuration in which the deceleration is varied, for example, the vehicle CPU 64 may gradually increase the deceleration or gradually decrease the deceleration.

Furthermore, when the forks 26 is in movement, the vehicle CPU 64 continues the drive and control of the cargo handling actuator 62 so that the movement of the forks 26 immediately stops.

On the other hand, when the movement of the forklift 20 is stopped, the vehicle CPU 64 determines that the movement stop control is completed, makes a positive determination in step S501, and proceeds to step S503.

In step S503, the vehicle CPU 64 executes a process of terminating the movement stop control and terminates the movement stop control in-execution process. Specifically, the vehicle CPU 64 erases the movement stop control in-execution flag. Thus, the vehicle CPU 64 can specify the termination of the movement stop control.

In the movement stop control in-execution process, the process corresponding to the control signal grasped in step S401 and the process corresponding to the operation of the vehicle operation unit 40 are not executed. That is, the forklift 20 is configured not to perform the movement corresponding to the signal transmitted from the remote operation device 70 and the movement corresponding to the operation of the vehicle operation unit 40 during the movement stop control. In other words, the movement stop control can be said to be control for stopping the movement regardless of the remote control operation and the operation of the vehicle operation unit 40.

As shown in FIG. 12, when the movement stop control is not being performed, the vehicle CPU 64 makes a negative determination in step S402 and determines whether or not the current control mode is the neutral mode in step S404. Specifically, the vehicle CPU 64 specifies the current control mode based on the mode information stored in the mode storage area provided in the vehicle memory 65, and determines whether or not the current control mode is the neutral mode.

The vehicle CPU 64 proceeds to step S406 when the current control mode is not the neutral mode, and executes the vehicle neutral mode process in step S405 when the current control mode is the neutral mode, and proceeds to step S411.

The vehicle neutral mode process will be described with reference to FIG. 14.

As shown in FIG. 14, the vehicle CPU 64 first determines in step S601 whether or not a manned mode shift condition, which is a shift condition from the neutral mode to the manned mode, is satisfied.

The manned mode shift condition in the present embodiment is that there is an occupant (specifically, the occupant sensor 51 is in the ON state), and the changeover switch 52 is set to "MANNED".

When the occupant sensor 51 is in the ON state and the changeover switch 52 is set to "MANNED", the vehicle CPU 64 determines that the manned mode shift condition is satisfied, proceeds to step S602, shifts the control mode from the neutral mode to the manned mode, and terminates the vehicle neutral mode process. Specifically, the vehicle CPU 64 updates the mode information stored in the mode storage area to information corresponding to the manned mode.

On the other hand, when the manned mode shift condition is not satisfied, that is, when the occupant sensor 51 is in the OFF state or when the changeover switch 52 is set to "REMOTE", the vehicle CPU 64 proceeds to step S603 and determines whether or not the remote mode shift condition is satisfied.

Specifically, the vehicle CPU 64 determines whether or not the current forklift 20 is in the remote-enabled state and the remote start signal SGx4 is received by the vehicle CPU 64.

As described above, the remote-enabled state is a state in which all three conditions, (A) the control mode is the neutral mode, (B) the occupant sensor 51 is in the OFF state, and (C) the changeover switch 52 is set to "remote" are satisfied. Here, the vehicle neutral mode process is a process executed when the control mode is the neutral mode, and thus the condition (A) is already satisfied. Therefore, the vehicle CPU 64 determines in step S603 whether or not the conditions (B), (C) are satisfied, and whether or not the control signal grasped in step S401 in the vehicle control process of this time is a conversion signal of the remote start signal SGx4.

The vehicle CPU 64 terminates the vehicle neutral mode process while maintaining the control mode in the neutral mode when the occupant sensor 51 is in the ON state, when the changeover switch 52 is set to "MANNED", or when the control signal grasped in step S401 in the vehicle control process of this time is not a conversion signal of the remote start signal SGx4.

On the other hand, when the conditions (B), (C) are satisfied and the remote start signal SGx4 is received, the vehicle CPU 64 proceeds to step S604, shifts the control mode from the neutral mode to the remote mode, and terminates the vehicle neutral mode process. Specifically, vehicle CPU 64 updates the mode information to information corresponding to the remote mode.

According to this configuration, when the manned mode shift condition is satisfied during the neutral mode, the control mode is shifted from the neutral mode to the manned mode, while when the remote mode shift condition is satisfied, the control mode is shifted from the neutral mode to the remote mode.

Here, in the present embodiment, the remote mode shift condition and the manned mode shift condition cannot be satisfied at the same time. For example, the manned mode shift condition includes that the occupant sensor 51 is in the ON state, while the remote mode shift condition includes that the occupant sensor 51 is in the OFF state. Thus, the movement of the forklift 20 becoming unstable and the operability deteriorating due to the inconvenience caused by the remote mode shift condition and the manned mode shift condition being satisfied at the same time, specifically, to which control mode is to be shifted being uncertain can be avoided.

In the vehicle neutral mode process, the drive and control process of each actuator 61 and 62 based on the signal received by the vehicle communication unit 69, and the drive and control process of each actuator 61 and 62 based on the operation of the vehicle operation unit 40 are not executed. That is, the vehicle CPU 64 restricts (in other words, prohibits) both the remote operation and the manned operation using the remote operation device 70 from being performed during the neutral mode.

As shown in FIG. 12, vehicle CPU 64 determines in step S406 whether or not the current control mode is the manned mode. When the current control mode is not the manned mode, the vehicle CPU 64 proceeds to step S408, while when the current control mode is the manned mode, the vehicle CPU 64 executes the vehicle manned mode process in step S407, and then proceeds to step S411.

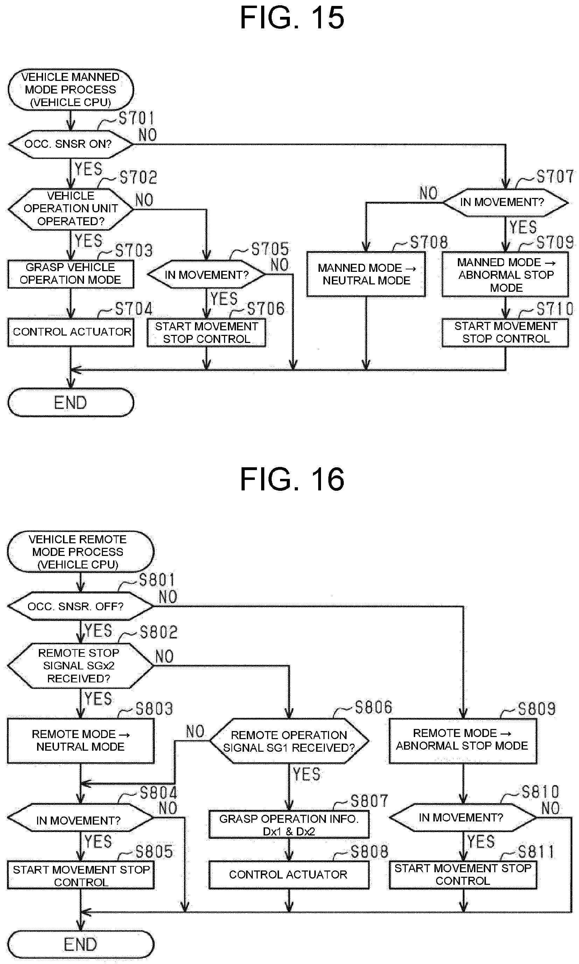

The vehicle manned mode process will be described with reference to FIG. 15.

As shown in FIG. 15, vehicle CPU 64 first determines in step S701 whether or not the occupant sensor 51 is in the ON state. When the occupant sensor 51 is in the ON state, the vehicle CPU 64 executes a process of executing the manned operation in steps S702 to S706.

Specifically, in step S702, the vehicle CPU 64 determines whether or not the operation of the vehicle operation unit 40 is being performed based on the detection result of operation sensor 63. When the operation of the vehicle operation unit 40 is being performed, the vehicle CPU 64 proceeds to step S703 and grasps the vehicle operation mode which corresponds to the operation mode of the vehicle operation unit 40. For example, when the direction control lever 41 is operated, the vehicle CPU 64 grasps the operation direction and the operation amount of the direction control lever 41 based on the detection result of the operation sensor 63. Similarly, for example, when the cargo handling lever 43 is operated, the vehicle CPU 64 grasps which cargo handling lever 43 is being operated, and grasps the operation direction and operation amount of the cargo handling lever 43 based on the detection result of the operation sensor 63. The same applies to the brake pedal 44 and the steering wheel 42.

Thereafter, in step S704, the vehicle CPU 64 drives and controls the actuators 61 and 62 based on the vehicle operation mode grasped in step S703, and terminates the vehicle manned mode process.

On the other hand, when the operation of the vehicle operation unit 40 is not being performed, the vehicle CPU 64 makes a negative determination in step S702 and proceeds to step S705. In step S705, the vehicle CPU 64 determines whether or not the forklift 20 is in movement.

The vehicle CPU 64 terminates the vehicle manned mode process when the forklift 20 is not in movement, that is, when traveling is stopped and the forks 26 is stopped.

On the other hand, when the forklift 20 is in movement, that is, when the forklift 20 is traveling or the forks 26 is in movement, the vehicle CPU 64 starts the movement stop control for controlling the actuators 61 and 62 to stop the movement in step S706, and terminates the vehicle manned mode process. The movement stop control includes a process of setting a movement stop control flag indicating that the movement stop control is being performed.

Note that the specific drive and control mode at the start of the movement stop control is arbitrary, and for example, when the movement stop control is started while the forklift 20 is traveling, the vehicle CPU 64 may start the deceleration at the specified forced stop deceleration, or may derive the forced stop deceleration based on the current traveling speed and acceleration and decelerate at the forced stop deceleration. Furthermore, when the movement stop control is started during the movement of the forks 26, the vehicle CPU 64 may immediately stop the movement of the forks 26, or the vehicle CPU 64 may decrease the movement speed at a predetermined deceleration and then stop the movement.

According to such a configuration, the movement of the forklift 20 is performed based on the operation of the vehicle operation unit 40 under the situation where the occupant is detected by the occupant sensor 51. Furthermore, even when the occupant is detected by the occupant sensor 51, if the operation of the vehicle operation unit 40 is not performed, the movement of the forklift 20 is automatically stopped.

In the vehicle manned mode process, a process corresponding to the remote operation signal SGx1 is not executed. That is, the vehicle CPU 64 restricts (in other words, prohibits) so that the remote operation using the remote operation device 70 is performed during the manned mode.

When the occupant sensor 51 is not in the ON state, that is, when the occupant is not detected by the occupant sensor 51, the vehicle CPU 64 makes a negative determination in step S701 and proceeds to step S707. In step S707, the vehicle CPU 64 determines whether or not the forklift 20 is in movement.

When the forklift 20 is not in movement (that is, when the movement is stopped), the vehicle CPU 64 executes a process of normally terminating the manned mode. Specifically, the vehicle CPU 64 proceeds to step S708, shifts the control mode from the manned mode to the neutral mode, and terminates the vehicle manned mode process.

On the other hand, when the forklift 20 is in movement, the vehicle CPU 64 executes a process related to abnormal stop.

Specifically, the vehicle CPU 64 shifts the control mode from the manned mode to the abnormal stop mode in step S709. Specifically, the vehicle CPU 64 updates the mode information with information corresponding to the abnormal stop mode. Then, in step S710, the vehicle CPU 64 starts the movement stop control and terminates the vehicle manned mode process. Note that the specific content of the processing of step S710 is the same as that of step S706.

According to such a configuration, the control mode shifts from the manned mode to the neutral mode based on the occupant sensor 51 being in the OFF state in a situation where the control mode is the manned mode and the movement of the forklift 20 is stopped. This allows the occupant to get off from the driver's compartment 32 after the movement of the forklift 20 is stopped, and the manned mode can be normally terminated.

On the other hand, the control mode shifts from the manned mode to the abnormal stop mode based on the occupant sensor 51 being in the OFF state in a situation where the control mode is the manned mode and the movement of the forklift 20 is being performed. Thus, for example, when the occupant gets off the vehicle while the movement based on the operation of the vehicle operation unit 40 is being performed, the control mode shifts from the manned mode to the abnormal stop mode assuming it is an abnormal situation. Furthermore, the movement stop control is performed, and the movement of the forklift 20 is stopped.

As shown in FIG. 12, the vehicle CPU 64 determines in step S408 whether or not the current control mode is the remote mode. When the current control mode is the remote mode, the vehicle CPU 64 executes the vehicle remote mode process in step S409, and proceeds to step S411.

The vehicle remote mode process will be described with reference to FIG. 16.

As shown in FIG. 16, the vehicle CPU 64 first determines in step S801 whether or not the occupant sensor 51 is in the OFF state.

When the occupant sensor 51 is in the OFF state, that is, when there is no occupant in the driver's compartment 32, the vehicle CPU 64 executes a process corresponding to the signal transmitted from the remote communication unit 76 in steps S802 to S808.

Specifically, the vehicle CPU 64 determines in step S802 whether or not the vehicle communication unit 69 has received the remote stop signal SGx2. Specifically, the vehicle CPU 64 determines whether or not the control signal grasped in step S401 of the vehicle control process of this time is a conversion signal of the remote stop signal SGx2.

When the control signal grasped this time is a conversion signal of the remote stop signal SGx2, the vehicle CPU 64 executes a process of normally terminating the remote mode in steps S803 to S805.

Specifically, the vehicle CPU 64 shifts the control mode from the remote mode to the neutral mode in step S803.

Thereafter, the vehicle CPU 64 executes the processes of steps S804 and S805. Since the processes of steps S804 and S805 are the same as the processes of steps S705 and S706, detailed description thereof will be omitted.

When the vehicle communication unit 69 has not received the remote stop signal SGx2, the vehicle CPU 64 makes a negative determination in step S802, proceeds to step S806, and determines whether or not the vehicle communication unit 69 has received the remote operation signal SGx1. Specifically, the vehicle CPU 64 determines whether or not the control signal grasped in step S401 of the vehicle control process of this time is a conversion signal of the remote operation signal SGx1.

When the control signal grasped this time is not the conversion signal of the remote operation signal SGx1, the vehicle CPU 64 proceeds to step S804. On the other hand, when the control signal grasped this time is a conversion signal of the remote operation signal SGx1, the vehicle CPU 64 drives and controls each of the actuators 61 and 62 so that the forklift 20 performs the movement corresponding to the remote operation signal SGx1 in steps S807 and S808.

Specifically, the vehicle CPU 64 grasps both operation information pieces Dx1 and Dx2 included in the remote operation signal SGx1 of this time in step S807. Then, in step S808, the vehicle CPU 64 controls the actuators 61 and 62 based on the operation information Dx1 and Dx2, and terminates the vehicle remote mode process.

According to this configuration, when the vehicle communication unit 69 receives the remote stop signal SGx2 during the remote mode, that is, when the remote stop operation is performed, the control mode shifts from the remote mode to the neutral mode regardless of whether or not the forklift 20 is in movement. The remote operation by the remote operation device 70 is thereby stopped. That is, in the present embodiment, the shift condition from the remote mode to the neutral mode is that the remote stop operation is performed regardless of whether or not the forklift 20 is in movement. Furthermore, when the remote stop operation is performed while the forklift 20 is in movement, the movement of the forklift 20 is stopped regardless of the remote control operation and the operation of the vehicle operation unit 40.

When the occupant sensor 51 is in the ON state, the vehicle CPU 64 executes a process related to the abnormal stop in steps S809 to S811. That is, in the present embodiment, the shift condition from the remote mode to the abnormal stop mode is that the occupant sensor 51 is in the ON state.

Specifically, the vehicle CPU 64 shifts the control mode from the remote mode to the abnormal stop mode in step S809. In subsequent step S810, the vehicle CPU 64 determines whether or not the forklift 20 is in movement. Then, the vehicle CPU 64 ends the vehicle remote mode process as it is when the forklift 20 is not in movement, and starts the movement stop control in step S811 and terminates the vehicle remote mode process when the forklift 20 is in movement. The specific processing content of step S811 is the same as that of step S710.

According to such a configuration, in a situation where the control mode is the remote mode, when neither the shift condition to the abnormal stop mode nor the shift condition to the neutral mode is satisfied, and the vehicle communication unit 69 has received the remote operation signal SGx1, the movement corresponding to the remote operation signal SGx1 (in other words, movement corresponding to the remote control operation) is performed. Thus, the forklift 20 can be remotely operated using the remote operation device 70.

On the other hand, when the shift condition to the abnormal stop mode or the shift condition to the neutral mode is satisfied, the control mode shifts from the remote mode to the abnormal stop mode or the neutral mode.

Here, in the present embodiment, the success/failure determination of the shift condition to the abnormal stop mode (step S801) is performed before the success/failure determination of the shift condition to the neutral mode (step S802). Therefore, the vehicle CPU 64 gives priority to the shift to the abnormal stop mode when both the shift condition to the abnormal stop mode and the shift condition to the neutral mode are satisfied. As a result, it is possible to prevent the remote operation from being normally stopped despite the abnormal situation.

Considering that the process of step S802 is executed when the occupant sensor 51 is in the OFF state, the shift condition from the remote mode to the neutral mode is that the occupant sensor 51 is in the OFF state and the remote stop operation is performed.

In the vehicle remote mode process, the drive and control process of the actuators 61 and 62 based on the operation of the vehicle operation unit 40 is not executed. Therefore, it can be said that the vehicle CPU 64 restricts (in other words, prohibits) the manned operation of the forklift 20 during the remote mode.

Note that, in the present embodiment, the movement stop control is performed if the forklift 20 is in movement when the remote mode shifts to the neutral mode. The vehicle CPU 64 is configured not to execute the vehicle neutral mode process during the movement stop control. Therefore, in the present embodiment, when the control mode shifts from the remote mode to the neutral mode during the movement of the forklift 20, the shift from the neutral mode to the remote mode or the manned mode is performed until the movement is stopped. The safety thus can be improved.

However, this not the sole case, and when the control mode shifts from the remote mode to the neutral mode during the movement of the forklift 20, the vehicle CPU 64 may allow the shift from the neutral mode to the remote mode or the manned mode before the movement is stopped. In this case, early shift of the control mode and improvement in the responsiveness can be achieved.

In the present embodiment, since one of the shift conditions from the manned mode to the neutral mode is that the movement is stopped, the movement of the forklift 20 is already stopped when the manned mode is shifted to the neutral mode.

As shown in FIG. 12, when the current control mode is not the remote mode, the vehicle CPU 64 executes the vehicle abnormal stop mode process in step S410, and proceeds to step S411.

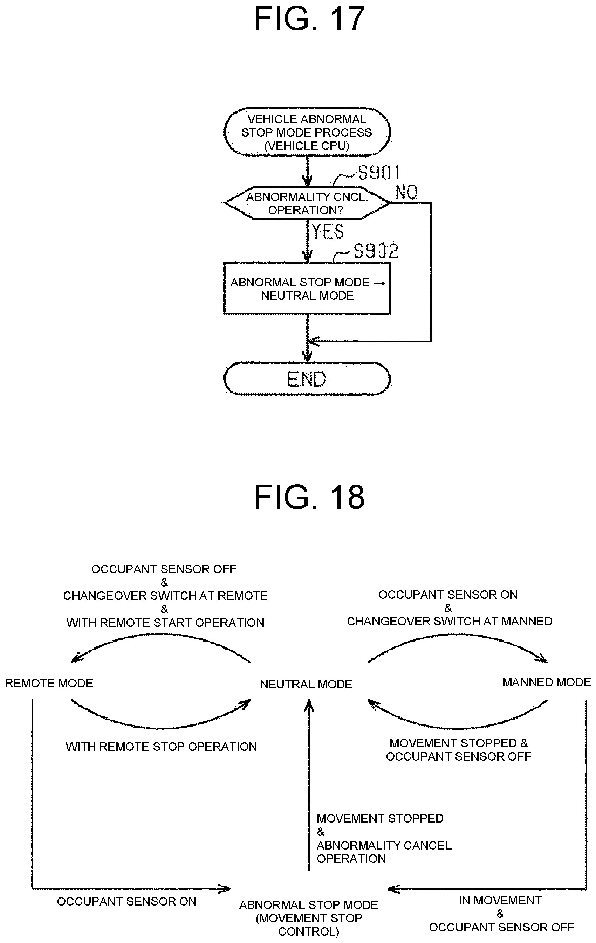

The vehicle abnormal stop mode process will be described with reference to FIG. 17.

As shown in FIG. 17, the vehicle CPU 64 determines in step S901 whether or not an abnormality cancel operation has been performed. The abnormality cancel operation in the present embodiment is for operating the abnormality cancel switch 53.

In the present embodiment in which two abnormality cancel switches 53 are provided, the abnormality cancel operation is that at least one of the abnormality cancel switches 53 is operated. However, the abnormality cancel operation is not limited to this and is arbitrary.

When the abnormality cancel switch 53 is not operated, the vehicle CPU 64 continues the abnormal stop mode and terminates the vehicle abnormal stop mode process.

On the other hand, when the abnormality cancel switch 53 is operated, the vehicle CPU 64 terminates (that is, cancels) the abnormal stop mode in step S902. Specifically, the vehicle CPU 64 shifts the control mode from the abnormal stop mode to the neutral mode. Then, the vehicle CPU 64 terminates the vehicle abnormal stop mode process.

Here, as described above, if the forklift 20 is in movement when the control mode shifts to the abnormal stop mode, the movement stop control is started (steps S710, S811). The movement stop control is continued until the movement is stopped, and the vehicle abnormal stop mode process is not executed during the period in which the movement stop control is being performed. Therefore, even if an abnormality cancel operation is performed during the movement stop control, the control mode maintains the abnormal stop mode without shifting to the neutral mode.

Furthermore, in the present embodiment, the vehicle abnormal stop mode process is executed after the movement stop control is terminated, that is, when the movement of the forklift 20 is stopped. Focusing on this point, it can be said that the condition for releasing the abnormal stop mode in the present embodiment is that the abnormality cancel operation is performed while the movement is stopped.

As shown in FIG. 12, in step S411, the vehicle CPU 64 erases the control signal grasped this time from reception buffer 69b. Thus, each time the vehicle control process is executed, the control signal stored in the reception buffer 69b is erased. Note that in the configuration in which a plurality of control signals are stored in the reception buffer 69b and the vehicle CPU 64 grasps from the old control signals in order, the control signals are erased in order from the old control signal.

Here, in the present embodiment, the control signal may be erased without being used. For example, the control signal is not referred to in the movement stop control in-execution process and the abnormal stop mode process. Moreover, in the vehicle remote mode process, the control signal is not referred to when the shift to the abnormal stop mode or the neutral mode is performed. In these cases, the control signal is erased without the control based on the information included in the control signal being performed.

In particular, in the present embodiment, the remote CPU 73 continues to regularly transmit the connection maintaining signal SGx3 even when the control mode is the abnormal stop mode. In this case, the vehicle CPU 64 maintains the abnormal stop mode without referring to the control signal until the abnormality cancel operation is performed. Therefore, the forklift 20 continues to erase the control signal obtained by converting the connection maintaining signal SGx3 without performing the movement corresponding to the connection maintaining signal SGx3 received by the vehicle communication unit 69 during the abnormal stop mode.

Then, the vehicle CPU 64 executes a process of transmitting the vehicle signal SGy, and terminates the vehicle control process.

Specifically, the vehicle CPU 64 grasps the current vehicle state in step S412. As the vehicle state, the traveling speed and acceleration regarding the traveling information Dy1 and the position and movement speed of the forks 26 regarding the cargo handling information Dy2 are grasped. Furthermore, the vehicle CPU 64, based on the detection result of the vehicle state detection unit 66 and the information of the mode storage area, grasps as regarding the machine base information Dy3, the detection result of the occupant sensor 51, the state of the changeover switch 52, the current control mode, and the abnormality of the forklift 20.

In the following step S413, the vehicle CPU 64 generates, based on the vehicle state grasped in step S412, a control signal of the in-vehicle communication standard in which the traveling information Dy1, the cargo handling information Dy2 and the machine base information Dy3 are set, and outputs the control signal to the vehicle communication unit 69. The vehicle communication unit 69, based on the input of the control signal, uses the signal conversion unit 69a to convert to vehicle signal SGy of the wireless communication standard and transmits the vehicle signal SGy to the remote communication unit 76.

According to this configuration, the vehicle signal SGy corresponding to the current vehicle state is transmitted after the process corresponding to the current control mode or the movement stop control in-execution process is executed. Thus, the remote CPU 73 can grasp the vehicle state.

Here, as described above, a process of transmitting the vehicle signal SGy (step S413) is regularly executed as the vehicle control process is regularly executed. The vehicle signal SGy is thus regularly transmitted. For example, when the control mode is the abnormal stop mode, the vehicle signal SGy in which the mode information Dy3c indicating the abnormal stop mode is set is repeatedly transmitted, and when the control mode is the neutral mode, the vehicle signal SGy in which the mode information Dy3c indicating the neutral mode is set is repeatedly transmitted.

In the present embodiment, the vehicle control process corresponds to the "mode control step", and the vehicle CPU 64 that executes the vehicle control process corresponds to the "mode control unit".

Next, as an operation of the present embodiment, the relationship of the neutral mode, the remote mode, the manned mode, and the abnormal stop mode will be described with reference to FIG. 18.

As shown in FIG. 18, during the neutral mode, the control mode shifts to the remote mode based on the remote start operation performed in a situation where the occupant sensor 51 is in the OFF state and the changeover switch 52 is set to "REMOTE", and the control mode shifts to the manned mode when the occupant sensor 51 is in the ON state and the changeover switch 52 is set to "MANNED".

During the remote mode, the control mode shifts to the neutral mode by performing a remote stop operation. Furthermore, when the remote stop operation is performed in a situation where the movement of the forklift 20 is performed, the movement stop control for stopping the movement regardless of the remote control operation and the operation of the vehicle operation unit 40 is performed in addition to the shift to the neutral mode.

Furthermore, when the occupant sensor 51 becomes the ON state during the remote mode, the control mode shifts to the abnormal stop mode. When the occupant sensor 51 becomes the ON state in a situation where the movement of the forklift 20 is performed, the movement stop control is performed in addition to the shift to the abnormal stop mode.

As shown in FIG. 18, during the manned mode, the control mode shifts to the neutral mode when the occupant sensor 51 becomes the OFF state while the movement is stopped. On the other hand, in the manned mode, the control mode shifts to the abnormal stop mode and the movement stop control is executed when the occupant sensor 51 becomes the OFF state during the movement of the forklift 20.

During the abnormal stop mode, when the abnormality cancel operation is performed while the movement of the forklift 20 is stopped, the control mode shifts to the neutral mode, but unless the abnormality cancel operation is performed, the abnormal stop mode is maintained.

In the present embodiment, shift from the abnormal stop mode to the remote mode or the manned mode is not performed. Therefore, in order to shift from the abnormal stop mode to the remote mode or the manned mode, it is necessary to always go through the neutral mode. Specifically, in order to shift from the abnormal stop mode to the remote mode, it is necessary to sequentially perform the abnormality cancel operation and the operation that satisfies the shift condition from the neutral mode to the remote mode. Similarly, in order to shift from the abnormal stop mode to the manned mode, it is necessary to sequentially perform the abnormality cancel operation and the operation that satisfies the shift condition from the neutral mode to the manned mode.

As described above, the vehicle control process is executed in a situation where the vehicle communication unit 69 and the remote communication unit 76 are in the communication connection state. Therefore, the vehicle CPU 64 maintains the communication connection state between the vehicle communication unit 69 and the remote communication unit 76 even during the movement stop control and after the movement stop control is terminated, and shifts the control mode while maintaining the communication connection state. Therefore, the communication connection state between the vehicle communication unit 69 and the remote communication unit 76 is maintained in any control mode.

Focusing on the point that the vehicle control process of shifting to various control modes is executed under the condition that both communication units 69 and 76 are in the communication connection state, in the present embodiment, the various control modes including the remote mode can be said as the control mode set when the communication units 69 and 76 are in the communication connection state.

When the communication connection between the communication units 69 and 76 is canceled or disconnected for some reason, the remote CPU 73 may execute the application terminating process, and the vehicle CPU 64 terminates the vehicle control process.

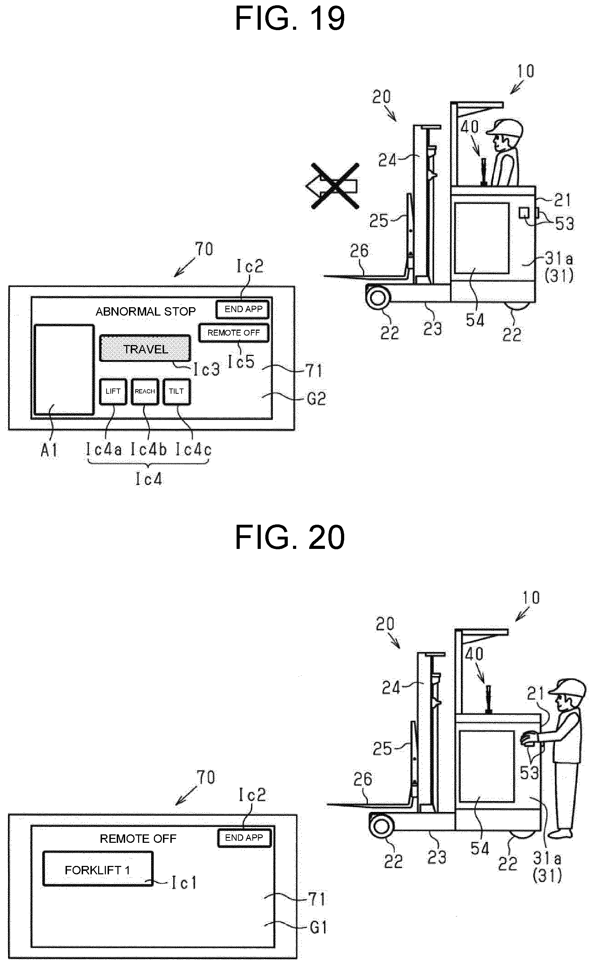

Next, with reference to FIGS. 19 and 20, as an example of an abnormal situation, an operation of the industrial vehicle remote operation system 10 when an occupant gets on the forklift 20 being remotely operated will be described.

As shown in FIG. 19, assume that an occupant gets on the forklift 20 in a situation where the control mode is the remote mode and the forklift 20 is traveling by the remote control operation. In this case, movement stop control is performed and the traveling of the forklift 20 is stopped.

Furthermore, since the control mode shifts to the abnormal stop mode, the remote operation by the remote operation device 70 stops. Moreover, the vehicle signal SGy in which the abnormal stop mode is set in the mode information Dy3c is transmitted from the vehicle communication unit 69 to the remote communication unit 76. When the remote communication unit 76 receives the vehicle signal SGy, an abnormal stop display is displayed on the operation image G2. Thus, the remote operator operating the remote operation device 70 can recognize the abnormal stop.

Thereafter, as shown in FIG. 20, assume that an abnormality cancel operation (specifically, the operation of the abnormality cancel switch 53) is performed. Thus, the abnormal stop mode is canceled and the control mode is set to the neutral mode. Then, the vehicle signal SGy in which the neutral mode is set in the mode information Dy3c is transmitted. When the remote communication unit 76 receives the vehicle signal SGy, the abnormal stop display is terminated, and the image displayed on the touch panel 71 is changed from the operation image G2 to the standby image G1. Thus, the remote operator can recognize that the abnormal stop mode has been canceled.

Here, since the abnormality cancel switch 53 is provided on the outer side surface 31 of the machine base 21, it is assumed that the occupant gets off from the driver's compartment 32 and then operates the switch. Therefore, it is assumed that the forklift 20 is in the remote-enabled state in the neutral mode returned from the abnormal stop mode. Therefore, the disabled-display is not performed on the remote target icon Ic1.

Thereafter, when the remote operator performs a remote start operation (specifically, an input operation of the remote target icon Ic1), the operation image G2 is displayed, and the forklift 20 is moved based on the remote control operation.

Explaining just in case, the control mode before the abnormal stop mode is the remote mode, and the shift condition of the remote mode includes that the changeover switch 52 is set to "REMOTE". Therefore, the changeover switch 52 in the neutral mode has a high probability of being set to "REMOTE".

On the other hand, when the manned operation is started in the situation of FIG. 20, the occupant gets on the driver's compartment 32 and changes the changeover switch 52 from "REMOTE" to "MANNED". This allows the manned operation.

The present embodiment described in detail above has the following effects.

(1-1) The industrial vehicle remote operation system 10 includes a forklift 20 serving as an industrial vehicle and a remote operation device 70 used for remotely operating the forklift 20. The forklift 20 includes a vehicle communication unit 69 that performs wireless communication, an occupant sensor 51, and a vehicle operation unit 40 used for manned operation. The remote operation device 70 includes a remote communication unit 76 that wirelessly communicates with the vehicle communication unit 69. The industrial vehicle remote operation system 10 includes a vehicle CPU 64 that performs the movement stop control for stopping the movement regardless of the operation of the vehicle operation unit 40 and the remote operation stop control for stopping the remote operation based on a detection of the occupant by the occupant sensor 51 in a situation where the movement is performed in the forklift 20 by the remote operation by the remote operation device 70.

According to this configuration, when an occupant gets on the forklift 20 in which movement is performed by the remote operation, the movement is stopped and the remote operation by the remote operation device 70 is stopped. Thus, the movement of the forklift 20 can be prevented from being continued even after the occupant has got on the vehicle, and the remote operation can be prevented from being performed. Therefore, the safety can be improved.

Particularly, in the forklift 20 in which both manned operation and remote operation can be performed, for example, a case where an occupant gets on the forklift 20 in operation and performs the operation of the vehicle operation unit 40 to directly operate the forklift 20 in which movement by remote operation is performed can be considered. In this case, two different operations, the remote operation and the manned operation, are performed at the same time, which may cause the movement of the forklift 20 to be unstable.

On the other hand, in the present embodiment, the movement stop control is executed regardless of the operation of the vehicle operation unit 40. Therefore, even if the occupant gets on the forklift 20 in movement and operates the vehicle operation unit 40, the movement performed by the remote operation is stopped. As a result, the above inconvenience can be suppressed and the safety can be improved.

(1-2) The industrial vehicle remote operation system 10 is configured to perform movement stop notification in addition to the movement stop control and the remote operation stop control. With this configuration, the remote operator of the remote operation device 70 or the occupant can recognize that the movement of the forklift 20 has stopped. Thus, the remote operator or the occupant can be urged to take further measures.

(1-3) The vehicle CPU 64, based on a detection of the occupant during the movement of the forklift 20 by the remote operation, uses the vehicle communication unit 69 to execute the vehicle signal transmission process (step S413) for transmitting the vehicle signal SGy indicating the stopping of the movement to the remote communication unit 76. The remote CPU 73 performs a movement stop notification using the touch panel 71 serving as a notifying unit provided in the remote operation device 70 based on the remote communication unit 76 receiving the vehicle signal SGy indicating the operation stop.

According to such a configuration, it is easy for the remote operator operating the remote operation device 70 to recognize that the operation has been stopped. In particular, as a remote operator who performs the remote operation using the remote operation device 70, there is a possibility that the operator may focus on the operation and pay attention to the remote operation device 70 instead of the forklift 20. In this case, the timing of recognizing the operation stop may be delayed. On the other hand, in the present embodiment, since the movement stop notification is performed by the remote operation device 70, the operation stop can be recognized early even when the remote operation device 70 is given attention.

Note that it can be said that the vehicle CPU 64 is executing the movement stop notification when focusing on the fact that the movement stop notification is performed by the vehicle CPU 64 transmitting the vehicle signal SGy indicating the operation stop. In other words, it can also be said that the vehicle CPU 64 instructs the remote operation device 70 so that the movement stop notification is performed.

(1-4) The industrial vehicle remote operation system 10 has a remote mode, a manned mode, and an abnormal stop mode as control modes.

The remote mode is a control mode in which the forklift 20 operates not by the operation of the vehicle operation unit 40 but by the remote operation of the remote operation device 70. The manned mode is a control mode in which the forklift 20 operates not by the remote operation by the remote operation device 70 but by the operation of the vehicle operation unit 40. The abnormal stop mode is a control mode in which neither the operation based on the remote operation by the remote operation device 70 nor the operation based on the operation of the vehicle operation unit 40 is performed.

In such a configuration, both communication units 69 and 76 are in a communication connection state for exchanging signals during the remote mode. Then, as the remote operation stop control, the vehicle CPU 64 shifts the control mode from the remote mode to the abnormal stop mode while maintaining the communication state of both communication units 69 and 76.

According to this configuration, as the control mode shifts to the abnormal stop mode, the remote operation is stopped and the operation of the forklift 20 based on the operation of the vehicle operation unit 40 is not performed. Thus, the forklift 20 is stopped in any operation, and hence erroneous operation of the forklift 20 caused by the occupant and the remote operator performing different actions can be suppressed.

Furthermore, since the communication connection state of both the communication units 69 and 76 is maintained even during the abnormal stop mode, the remote operation device 70 and the forklift 20 can transmit and receive signals even during the abnormal stop mode. Thus, the remote operation device 70 can exchange information with the forklift 20 even in a situation where the remote operation by the remote operation device 70 is not performed, and thus can grasp the change in the situation (e.g., shift of control mode).

(1-5) The control mode includes a neutral mode in which neither the operation based on the remote operation by the remote operation device 70 nor the operation based on the operation of the vehicle operation unit 40 is performed. The abnormal stop mode is a control mode in which shift to both the remote mode and the manned mode is prohibited, while the neutral mode is a control mode in which shift to both the remote mode and the manned mode is permitted. Then, the vehicle CPU 64 shifts the control mode from the abnormal stop mode to the neutral mode while maintaining the communication connection state of both communication units 69 and 76 based on the abnormality cancel operation being performed during the abnormal stop mode.

According to such a configuration, when the remote operation or the manned operation is restarted in a situation where the control mode is the abnormal stop mode, the abnormality cancel operation always needs to be performed. Thus, the remote operation or the manned operation can be prevented from being restarted without performing the abnormality cancel operation, and the remote operation or the manned operation can be prevented from being unintentionally restarted. Furthermore, since the remote operator or the occupant needs to perform the abnormality cancel operation after confirming the abnormality, it is possible to secure a postponement period for confirming the abnormality. Therefore, the abnormal stop mode can be canceled safely.

Moreover, even when the abnormal stop mode is shifted to the neutral mode, the communication connection state is maintained, and therefore, it is not necessary to re-connect at the time of shift from the neutral mode to the remote mode. Thus, the shift from the neutral mode to the remote mode can be performed smoothly.

(1-6) The vehicle signal SGy includes the mode information Dy3c indicating the control mode, and during the abnormal stop mode, the vehicle CPU 64 repeatedly transmits the vehicle signal SGy including the mode information Dy3c indicating the abnormal stop mode as the vehicle signal SGy indicating the operation stop using the remote communication unit 76. On the other hand, during the neutral mode, the vehicle CPU 64 repeatedly transmits the vehicle signal SGy including the mode information Dy3c indicating the neutral mode using the remote communication unit 76.

The remote CPU 73 continues the movement stop notification over a period in which the remote communication unit 76 receives the vehicle signal SGy including the mode information Dy3c indicating the abnormal stop mode, and terminates the movement stop notification based on the remote communication unit 76 receiving the vehicle signal SGy including the mode information Dy3c indicating the neutral mode.

According to such a configuration, the movement stop notification is continuously executed during the abnormal stop mode, and the movement stop notification is terminated when the control mode shifts from the abnormal stop mode to the neutral mode. Thus, the remote operator can recognize that the abnormal stop mode has been canceled when the movement stop notification is terminated.

Furthermore, focusing on the fact that the control mode shifts from the abnormal stop mode to the neutral mode when the abnormality cancel operation is performed, the movement stop notification is performed until the abnormality cancel operation is performed. As a result, the remote operator or the occupant can be urged to perform the abnormality cancel operation.

It can be said that by focusing on the fact that the abnormal stop mode shifts to the neutral mode by the abnormality cancel operation, the remote CPU 73 continues the movement stop notification until the abnormality cancel operation is performed.

(1-7) The vehicle CPU 64 executes the process of step S602 for shifting the control mode from the neutral mode to the manned mode based on a satisfaction of the manned mode shift condition during the neutral mode. The vehicle CPU 64 executes the process of step S604 for shifting the control mode from the neutral mode to the remote mode based on a satisfaction of the remote mode shift condition during the neutral mode. The manned mode shift condition and the remote mode shift condition are set so as not to be satisfied at the same time.

According to such a configuration, the manned mode shift condition and the remote mode shift condition are not satisfied at the same time during the neutral mode, which suppresses the inconvenience caused when both shift conditions are satisfied and, more specifically, the control mode of the shift destination to become unstable when both shift conditions are satisfied.

(1-8) The manned mode shift condition includes that the occupant is detected by the occupant sensor 51, and the remote mode shift condition includes that the occupant is not detected by the occupant sensor 51. As a result, the effect of (1-7) can be obtained.

(1-9) The forklift 20 includes a changeover switch 52 that changes between "MANNED" corresponding to a manned state and "REMOTE" corresponding to a remote state. The manned mode shift condition includes that the changeover switch 52 is set to "MANNED", and the remote mode shift condition includes that the changeover switch 52 is set to "REMOTE". The operation of the changeover switch 52 is a different operation from the abnormality cancel operation.

According to such a configuration, since the remote mode shift condition includes that the changeover switch 52 is set to "REMOTE", it is assumed that the changeover switch 52 is set to "REMOTE" during the remote mode. Therefore, when the abnormal stop mode is set when the occupant goes on the vehicle during the remote mode, and then the abnormal stop mode is shifted to the neutral mode when the abnormality cancel operation is performed, it is assumed that the changeover switch 52 is set to "REMOTE". Therefore, in order to perform the manned operation in such a situation, it is necessary to change the changeover switch 52 from "REMOTE" to "MANNED". Since the operation of the changeover switch 52 is a different operation from the abnormality cancel operation, at least the abnormality cancel operation and the operation of the changeover switch 52 must be performed in order to release the abnormal stop mode and perform the manned operation. As a result, the occupant needs to perform a plurality of operations in order to perform the manned operation from the state of abnormal stop mode, and thus the manned operation can be prevented from being accidentally performed.

(1-10) The manned mode shift condition is when the changeover switch 52 is set to "MANNED" and the occupant is detected by the occupant sensor 51. With such a configuration, the unintended shift of the control mode from the abnormal stop mode to the manned mode through the neutral mode can be suppressed.

More specifically, for example, when the manned mode shift condition is only that the occupant is detected by the occupant sensor 51, the abnormal stop mode is automatically shifted to the manned mode through the neutral mode by performing the abnormality cancel operation in a state where the occupant is riding during the abnormal stop mode. Then, there is a concern that an unintended shift to the manned mode may occur.

On the other hand, according to the present embodiment, when the occupant is detected during the remote mode and the mode is the abnormal stop mode, the shift to the manned mode is not performed with only the abnormality cancel operation. In other words, in order to perform the manned operation after shifting from the remote mode to the abnormal stop mode, an active operation of changing the changeover switch 52 from "REMOTE" to "MANNED" is required. The inconvenience mentioned above thus can be suppressed.

(1-11) The remote mode shift condition is that a remote start operation is performed on the remote operation device 70 in a situation where the occupant is not detected by the occupant sensor 51 and the changeover switch 52 is set to "REMOTE". The abnormality cancel operation and the remote start operation are different operations.

With such a configuration, even when the abnormal stop mode is shifted to the neutral mode by the abnormality cancel operation, the neutral mode is not shifted to the remote mode unless the remote start operation is performed. Thus, when attempting to start the remote operation by the remote operation device 70 from a situation of the abnormal stop mode, it is necessary to perform at least two-step operations of first performing the abnormality cancel operation and then performing the remote start operation. Therefore, the unintended remote operation can be prevented from being started.

Furthermore, the remote mode shift condition includes that the occupant is not detected by the occupant sensor 51, and thus the remote operation can be prevented from being restarted in the presence of the occupant.

(1-12) The remote operation device 70 has a touch panel 71, and the forklift 20 is remotely operated by the remote control operation including an operation on the touch panel 71. The remote CPU 73 displays an abnormal stop display on the touch panel 71 as a movement stop notification.

According to this configuration, since the forklift 20 is remotely operated by a remote control operation including an operation on the touch panel 71, it is assumed that the degree of attention of the touch panel 71 will be high to the remote operator. Since the abnormal stop display is performed on the touch panel 71 having such a high degree of attention, the remote operator can easily recognize that the abnormal stop has been performed. Thus, the movement stop notification can be suitably made to the remote operator.

(1-13) The remote communication unit 76 transmits a remote operation signal SGx1 used for remote operation of the forklift 20 to the vehicle communication unit 69. The forklift 20 includes actuators 61 and 62 serving as drive units for performing traveling and cargo handling movements, and the vehicle CPU 64 has a function of executing the processes of steps S807 and S808 for driving and controlling the actuators 61 and 62 based on the remote operation signal SGx1 received by the vehicle communication unit 69.

In such a configuration, the vehicle CPU 64 performs the movement stop control by driving and controlling the actuators 61 and 62, and prohibits the drive and control based on the remote operation signal SGx1 during the movement stop control (processes of steps S710 and S811 and movement stop control in-execution process).

With such a configuration, the movement stop control is performed regardless of the remote operation signal SGx1, and hence it is possible to avoid the movement of the forklift 20 based on the remote operation signal SGx1 from being performed during the movement stop control. As a result, the movement stop control can be prevented from being inhibited by the operation on the remote operation device 70, and the smooth movement stop control can be realized.

(1-14) The vehicle CPU 64 executes, based on the fact that the occupant is no longer detected by the occupant sensor 51 in a situation where the movement of the forklift 20 is performed by the manned operation, a process of performing the movement stop control, the manned stop control for stopping the manned operation, and the movement stop notification (steps S709 and S710 and movement stop control process).

According to such a configuration, when the occupant gets off from the vehicle while the forklift 20 is in movement by manned operation, the movement is stopped and the manned operation is stopped. Thus, it is possible to suppress the movement from being continued in the absence of the occupant and the new movement from being performed by the manned operation. Furthermore, as the movement stop notification is made, the remote operator or the worker who got off from the vehicle can be made aware that the movement has been stopped.

(1-15) The vehicle CPU 64 maintains the control mode in the abnormal stop mode even when the abnormality cancel operation is performed during the movement stop control. Thus, it is possible to suppress the control mode from shifting to the neutral mode during the movement stop control, so that it is possible to avoid the control mode from shifting again to the remote mode or the manned mode during the movement stop control. Therefore, the movement of the forklift 20 can be surely stopped.

(1-16) The remote communication unit 76 repeatedly transmits the connection maintaining signal SGx3 during the abnormal stop mode. Thus, even if the vehicle communication unit 69 has a configuration of determining as a communication error when it does not receive a signal even after elapse of a specified period, the communication connection state can be maintained.

Furthermore, since the connection maintaining signal SGx3 is the remote operation signal SGx1 for stopping, even if the drive and control of the actuators 61 and 62 based on the connection maintaining signal SGx3 is performed for some reason, the forklift 20 stops. As a result, the erroneous movement of the forklift 20 during the abnormal stop mode can be suppressed.

In the present embodiment, the remote communication unit 76 repeatedly transmits the connection maintaining signal SGx3 even in the neutral mode. Thus, similar effects can be obtained even in the neutral mode.

(1-17) The forklift 20 including the occupant sensor 51 and the vehicle operation unit 40 includes the vehicle CPU 64 that executes a process of performing the movement stop control and the remote operation stop control (specifically, processes of steps S809 to S811 and movement stop control in-execution process) based on a detection of the occupant by the occupant sensor 51 during the movement by the remote operation. The effect of (1-1) is thereby achieved. Furthermore, the vehicle CPU 64 causes the movement stop notification to be performed in the remote operation device 70 by transmitting the vehicle signal SGy indicating the stopping of the movement using the vehicle communication unit 69 (in the present embodiment, a vehicle signal SGy having the mode information Dy3c in which the abnormal stop mode is set). The effect of (1-2) is thereby achieved.

(1-18) The vehicle control process execution program 65a is for remotely operating the forklift 20 using the remote operation device 70. The vehicle control process execution program 65a causes the vehicle CPU 64 to execute the movement stop control and the remote operation stop control based on a detection of the occupant by the occupant sensor 51 in a situation where the movement is performed in the forklift 20 by the remote operation by the remote operation device 70. The effect of (1-1) is thereby achieved.

Moreover, the vehicle control process execution program 65a causes the vehicle CPU 64 to transmit a vehicle signal SGy indicating stopping of the movement, thereby causing a movement stop notification to be made. The effect of (1-2) is thereby achieved.

(1-19) In the industrial vehicle remote operation method, the remote operation device 70 is used to remotely operate the forklift 20 including the occupant sensor 51. The industrial vehicle remote operation method includes a step in which the forklift 20 (specifically, the vehicle CPU 64) performs the movement stop control and the remote operation stop control based on a detection of the occupant by the occupant sensor 51 in a situation where movement is formed in the forklift 20 by the remote operation by the remote operation device 70. The effect of (1-1) is thereby achieved.

In addition, the industrial vehicle remote operation method includes a step of performing the movement stop notification by transmitting a vehicle signal SGy indicating that the forklift 20 has stopped movement. The effect of (1-2) is thereby achieved.

### (Second embodiment)

In the present embodiment, the shift condition to the abnormal stop mode and the abnormality cancel operation are different from those in the first embodiment. This point will be described below.

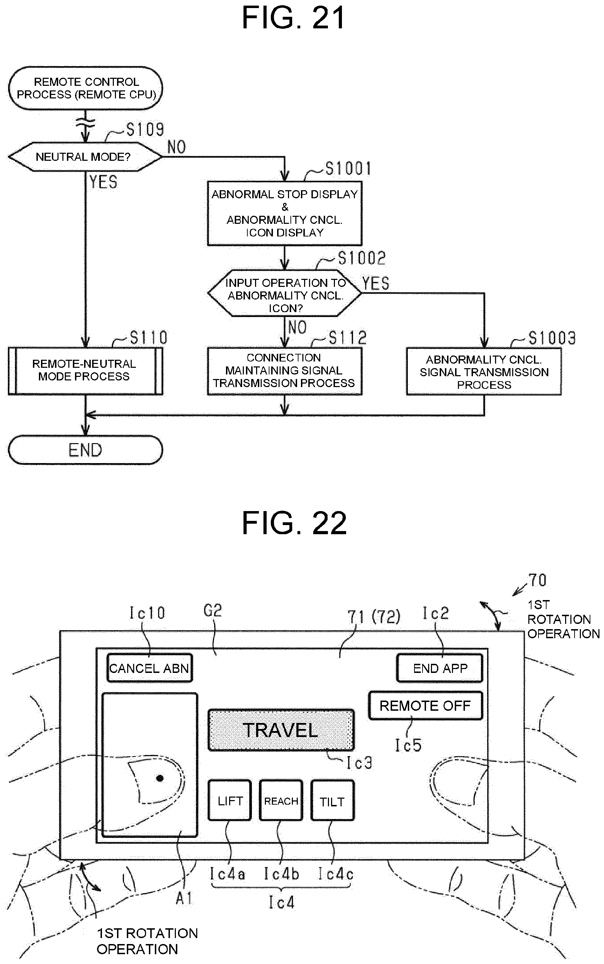

As shown in FIG. 21, in the remote control process of the present embodiment, in a case where a negative determination is made in step S109, the remote CPU 73 performs an abnormal stop display and displays the abnormality cancel icon Ic10 on the touch panel 71 in step S1001.

As shown in FIG. 22, the abnormality cancel icon Ic10 is disposed at a position where an input operation is difficult to perform unless the remote operator intends to, for example, at the upper left portion of the touch panel 71. The abnormality cancel icon Ic10 is an icon for the remote operation device 70 to accept an abnormality cancel operation. In other words, the abnormality cancel icon Ic10 can also be said to be an abnormality cancel operation accepting unit for the remote operation device 70 to accept the abnormality cancel operation.

If the abnormal stop display and the abnormality cancel icon Ic10 are already being displayed on the touch panel 71, the remote CPU 73 maintains these displays in step S1001.

As shown in FIG. 21, after executing the process of step S1001, the remote CPU 73 determines in step S1002 whether or not the abnormality cancel operation is performed on the remote operation device 70. Specifically, the remote CPU 73 determines whether or not an input operation to the abnormality cancel icon Ic10 is performed based on the detection result of the touch sensor 72.

When there is no input operation to the abnormality cancel icon Ic10, the remote CPU 73 executes the process of transmitting the connection maintaining signal SGx3 using the remote communication unit 76 in step S112, and terminates the remote operation process.

When there is no input operation to the abnormality cancel icon Ic10, the remote CPU 73 executes the process of transmitting the abnormality cancel signal SGx5 using the remote communication unit 76 in step S1003, and terminates the remote operation process. The abnormality cancel signal SGx5 is a signal of the wireless communication standard indicating that the abnormality cancel operation is performed.

In the present embodiment, the abnormality cancel signal SGx5 is a signal having a data format different from that of the remote operation signal SGx1. However, this is not the sole case, and the abnormality cancel signal SGx5 and the remote operation signal SGx1 may be signals of the same data format. In this case, in addition to both operation information Dx1 and Dx2, information for specifying the presence or absence of the abnormality cancel operation is preferably set in the remote operation signal SGx1. In such a configuration, the remote operation signal SGx1 in which the information indicating that the abnormality cancel operation has been performed is set corresponds to the abnormality cancel signal SGx5.

Next, the vehicle manned mode process in the present embodiment will be described.

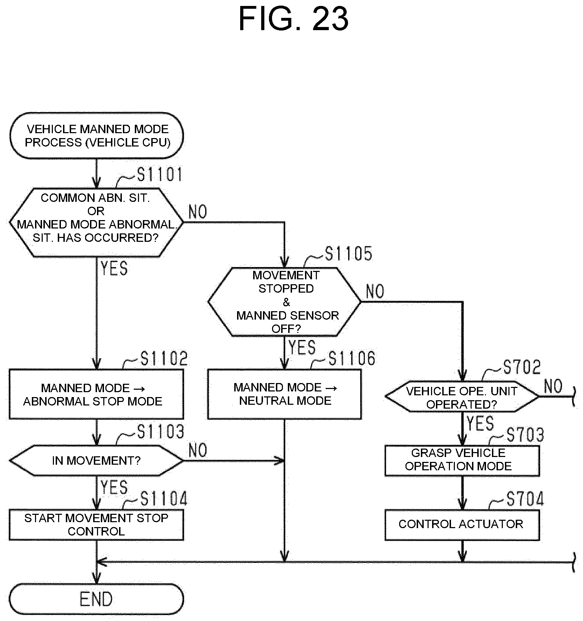

As shown in FIG. 23, the vehicle CPU 64 first determines in step S1101 whether or not an abnormal situation has occurred.

Here, the abnormal situation includes a common abnormal situation that is a common abnormal situation regardless of the control mode and a mode abnormal situation set for each control mode.

The common abnormal situation is arbitrary as long as it may hinder the movement of the forklift 20, but includes for example, at least one of the abnormality of the forklift 20, the presence of obstacles around the forklift 20, the opening of the first door 54 and the opening of the second door 56.

The common abnormal situation is detected by the vehicle state detection unit 66. For example, the abnormality of the forklift 20 is detected by the abnormality detection sensor 68, the obstacle is detected by the obstacle sensor 67, and the opening of the doors 54 and 56 is detected by the door sensors 55 and 57.

The mode abnormal situation includes an unexpected situation in the set control mode. For example, in a mode abnormal situation when the control mode is the manned mode (hereinafter, simply referred to as "manned mode abnormal situation"), the occupant is no longer detected during the movement of the forklift 20, or the changeover switch 52 is set to be "REMOTE".

In such a configuration, the vehicle CPU 64 determines in step S1101 whether or not a common abnormal situation or a manned mode abnormal situation has occurred based on the detection result of the vehicle state detection unit 66.

When the common abnormal situation or the manned mode abnormal situation has occurred, the vehicle CPU 64 proceeds to step S1102 and sets the control mode to the abnormal stop mode. Specifically, the vehicle CPU 64 shifts the control mode from the manned mode to the abnormal stop mode. This stops the manned operation.

Thereafter, the vehicle CPU 64 determines in step S1103 whether or not the forklift 20 is in movement. The vehicle CPU 64 terminates the vehicle manned mode process as it is when the forklift is not in movement, and starts the movement stop control in step S1104 and terminates the vehicle manned mode when the forklift is in movement.

On the other hand, when neither the common abnormal situation nor the manned mode abnormal situation has occurred, the vehicle CPU 64 makes a negative determination in step S1101 and determines whether or not the shift condition to the neutral mode is satisfied in step S1105. Specifically, the vehicle CPU 64 determines whether or not the movement of the forklift 20 is stopped and the occupant sensor 51 is in the OFF state.

When the shift condition to the neutral mode is satisfied, the vehicle CPU 64 shifts the control mode from the manned mode to the neutral mode in step S1106, and terminates the process. On the other hand, when the shift condition to the neutral mode is not satisfied, the vehicle CPU 64 executes the processes of steps S702 to S706.

According to this configuration, when the common abnormal situation or the manned mode abnormal situation has occurred in a situation where the control mode is the manned mode, the manned operation is stopped, and furthermore, the movement stop control is performed when the forklift 20 is in movement. The communication connection state is maintained even when the manned operation is stopped.

Next, the vehicle remote mode process in the present embodiment will be described.

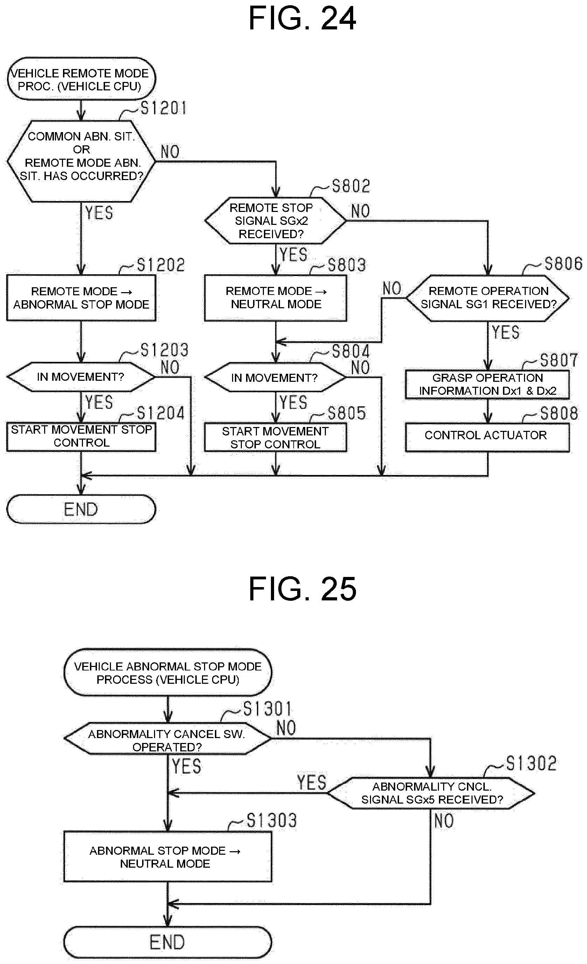

As shown in FIG. 24, the vehicle CPU 64 determines in step S1201 whether or not an abnormal situation has occurred. Specifically, the vehicle CPU 64 determines whether or not a common abnormal situation or a remote mode abnormal situation has occurred based on the detection result of the vehicle state detection unit 66.

The remote mode abnormal situation is a mode abnormal situation when the control mode is the remote mode. The remote mode abnormal situation in the present embodiment is, for example, when an occupant is detected, or the changeover switch 52 set to "MANNED".

When the common abnormal situation or the remote mode abnormal situation has occurred, the vehicle CPU 64 proceeds to step S1202 and sets the control mode to the abnormal stop mode. Specifically, the vehicle CPU 64 shifts the control mode from the remote mode to the abnormal stop mode. This stops the remote operation.

Thereafter, the vehicle CPU 64 determines in step S1203 whether or not the forklift 20 is in movement. The vehicle CPU 64 terminates the vehicle remote mode process as it is when the forklift is not in movement, and starts the movement stop control in step S1204 and terminates the vehicle remote mode when the forklift is in movement.

On the other hand, when neither the common abnormal situation nor the remote mode abnormal situation has occurred, the vehicle CPU 64 executes the processes of steps S802 to S808.

According to such a configuration, when the common abnormal situation or the remote mode abnormal situation has occurred in a situation where the control mode is the remote mode, the remote operation by the remote operation device 70 is stopped, and furthermore, the movement stop control is performed when the forklift 20 is in movement. The communication connection state is maintained even when the remote operation is stopped.

Next, the vehicle abnormal stop mode process of the present embodiment will be described with reference to FIG. 25.

As shown in FIG. 25, the vehicle CPU 64 determines in step S1301 whether or not the operation of the abnormality cancel switch 53 serving as the abnormality cancel operation is performed.

When the operation of the abnormality cancel switch 53 is not performed, the vehicle CPU 64 proceeds to step S1302 and determines whether or not the abnormality cancel signal SGx5 is received. Specifically, the vehicle CPU 64 determines whether or not the control signal grasped in step S401 of the vehicle control process of this time is converted from the abnormality cancel signal SGx5.

Here, considering that the abnormality cancel signal SGx5 is a signal transmitted from the remote communication unit 76 based on the input operation on the abnormality cancel icon Ic10 being performed, the process of step S1302 can also be said as a process of determining whether or not the input operation on the abnormality cancel icon Ic10 is performed.

When either one of the operation of the abnormality cancel switch 53 or the reception of the abnormality cancel signal SGx5 is performed, the vehicle CPU 64 sets the control mode to the neutral mode in step S1303, and terminates the process. Specifically, the vehicle CPU 64 shifts the control mode from the abnormal stop mode to the neutral mode. On the other hand, when neither the operation of the abnormality cancel switch 53 nor the reception of the abnormality cancel signal SGx5 is performed, the vehicle CPU 64 terminates the process while maintaining the control mode in the abnormal stop mode.

According to this configuration, when the control mode is the abnormal stop mode, the abnormal stop mode is canceled and the control mode shifts to the neutral mode based on the operation of the abnormality cancel switch 53 provided on the forklift 20 or the input operation to the abnormality cancel icon Ic10 being performed. That is, the abnormality cancel operation in the present embodiment is an operation of the abnormality cancel switch 53 or an input operation to the abnormality cancel icon Ic10.

As described in the first embodiment, the vehicle CPU 64 shifts the control mode in a state where the communication units 69 and 76 maintain the communication connection state. Then, the vehicle CPU 64 maintains the communication connection state regardless of the control mode. Therefore, for example, even if the control mode is the abnormal stop mode, signals are regularly exchanged between the communication units 69 and 76.

As described in the first embodiment, during the movement stop control, the control based on the control signal received from the remote communication unit 76 and converted is not performed, and the control signal is erased. Therefore, even if the vehicle communication unit 69 receives the abnormality cancel signal SGx5 during the movement stop control, the control mode remains the abnormal stop mode. That is, the vehicle CPU 64 maintains the control mode in the abnormal stop mode even when the abnormality cancel operation is performed on the remote operation device 70 during the movement stop control.

The remote-enabled state in the present embodiment is that (D) a common abnormal situation has not occurred in addition to the conditions (A) to (C) of the first embodiment. In step S302, the remote CPU 73 determines whether or not a common abnormal situation has occurred based on the abnormality information Dy3d of the machine base information Dy3 included in the vehicle signal SGy, in addition to the determination in the first embodiment. Therefore, for example, when an abnormality has occurred in the forklift 20, disabled-display is performed even if the conditions (A) to (C) are satisfied.

Furthermore, the remote mode shift condition in the present embodiment includes that a common abnormal situation has not occurred, in addition to the condition of the first embodiment. That is, the remote mode shift condition of the present embodiment is that the changeover switch 52 is set to "REMOTE", the occupant is not detected, and the remote start operation is performed in a situation where the common abnormal situation has not occurred. In step S601, the vehicle CPU 64 also determines the presence or absence of the common abnormal situation in addition to the determination in the first embodiment.

The manned mode shift condition in the present embodiment includes that a common abnormal situation has not occurred, in addition to the condition of the first embodiment. That is, the manned mode shift condition of the present embodiment is an occupant is present, the changeover switch 52 is set to "MANNED", and that the common abnormal situation has not occurred. In step S603, the vehicle CPU 64 also determines the presence or absence of the common abnormal situation in addition to the determination in the first embodiment.

In the present embodiment, the vehicle state detection unit 66 and the vehicle CPU 64 that executes the processes of steps S1101 and S1201 correspond to the "abnormal situation detection unit". The touch sensor 72 that detects an input operation to the abnormality cancel icon Ic10 and the vehicle state detection unit 66 that detects the operation of the abnormality cancel switch 53 correspond to the "cancel operation detection unit". Note that focusing on the fact that the vehicle CPU 64 detects the abnormal situation based on the reception of the abnormality cancel signal SGx5, the process of determining whether or not the abnormality cancel signal SGx5 is received corresponds to the "cancel operation detection unit".

In the present embodiment, the vehicle control process corresponds to the "mode control step", and the vehicle CPU 64 that executes the vehicle control process corresponds to the "mode control unit".

Next, the operation of the present embodiment will be described.

When an abnormal situation is detected during the remote mode, the control mode shifts from the remote mode to the abnormal stop mode while maintaining the communication connection state of both communication units 69 and 76. Even during the abnormal stop mode, the communication connection state between both communication units 69 and 76 is maintained.

Thereafter, the control mode shifts from the abnormal stop mode to the neutral mode while maintaining the communication connection state based on the abnormality cancel operation being performed. As a result, the shift to the remote mode becomes possible.

In the present embodiment, under a situation where the control mode is the remote mode, when the common abnormal situation occurs even when the movement of the forklift 20 is stopped, the remote mode shifts to the abnormal stop mode.

In the present embodiment, even when the common abnormal situation (e.g., an abnormality of the forklift 20) has occurred, and the common abnormal situation has not been canceled, the control mode shifts from the abnormal stop mode to the neutral mode by the abnormality cancel operation.

However, in this case, since the vehicle signal SGy in which the abnormality information Dy3d indicating the abnormality is set is transmitted, the forklift 20 is determined to be in the remote-disabled state, and the remote-disabled-display is performed. Thus, the remote operator can recognize that the abnormality has not been canceled and the remote operation cannot be performed.

Furthermore, in the present embodiment, the remote mode shift condition and the manned mode shift condition include that a common abnormal situation has not occurred, so unless the common abnormal situation is canceled, the shift of the control mode to the remote mode or the manned mode is not performed.

According to the present embodiment described in detail above, the following effects are obtained.

(2-1) The industrial vehicle remote operation system 10 (the forklift 20 in the present embodiment) includes the vehicle CPU 64 that controls the control mode of the forklift 20. The vehicle CPU 64, based on the detection of an abnormal situation (specifically, a common abnormal situation or a remote mode abnormal situation) during the remote mode, shifts the control mode from the remote mode to the abnormal stop mode while maintaining the communication connection state of both communication units 69 and 76. Then, the vehicle CPU 64 shifts the control mode from the abnormal stop mode to the neutral mode while maintaining the communication connection state based on the abnormality cancel operation being performed during the abnormal stop mode.

With this configuration, the control mode is shifted from the remote mode to the abnormal stop mode while maintaining the communication connection state based on the detection of the abnormal situation in the situation where the control mode is the remote mode. As a result, the remote operation of the forklift 20 using the remote operation device 70 is stopped. Therefore, it is possible to prevent the remote operation from being continued while an abnormal situation is occurring, and it is possible to improve safety.

Furthermore, the control mode shifts from the abnormal stop mode to the neutral mode based on the abnormality cancel operation being performed in the situation where the control mode is the abnormal stop mode and the communication connection state is established. Thus, the control mode can be shifted to the remote mode. Therefore, even when the control mode is shifted from the remote mode to the abnormal stop mode, the remote operation can be restarted.

Here, during the abnormal stop mode and the neutral mode, the remote operation of the forklift 20 using the remote operation device 70 is not performed. In the abnormal stop mode, the shift of the control mode to the remote mode is prohibited, while in the neutral mode, the shift of the control mode to the remote mode is permitted. Therefore, in order to perform the remote operation again from the state where the control mode is the abnormal stop mode, it is necessary to first perform the abnormality cancel operation to set the control mode to the neutral mode and then to set the control mode to the remote mode. As a result, it is necessary to always perform the abnormality cancel operation, and hence it is possible to avoid the remote operation from being restarted without performing the abnormality cancel operation. Therefore, the remote operation can be restarted as necessary while suppressing unintended restart of the remote operation.

(2-2) In particular, according to the present embodiment, both communication units 69 and 76 maintain the communication connection state even during the abnormal stop mode and at the time of the shift to the neutral mode, and thus can exchange signals with each other. Thus, the remote operation device 70 and the forklift 20 can grasp each other's state even in the abnormal stop mode. Therefore, for example, the forklift 20 can grasp that the abnormality cancel operation has been performed on the remote operation device 70.

Furthermore, when the communication connection state is canceled accompanying the shift from the remote mode to the abnormal stop mode, both communication units 69 and 76 need to again be in the communication connection state when shifting again from the abnormal stop mode to the remote mode through the neutral mode, and accompanying therewith, a time lag may occur. On the other hand, according to the present configuration, since the communication connection state of both communication units 69 and 76 is maintained, the occurrence of the time lag can be suppressed, and a smooth shift to the remote mode can be realized.

(2-3) The abnormality cancel operation may be the operation of the abnormality cancel switch 53 provided on the forklift 20.

According to this configuration, the abnormality cancel operation can be performed without using the remote operation device 70, so that a person other than the remote operator can perform the abnormality cancel operation. For example, when the abnormal stop mode is set in a situation where an occupant is present in the driver's compartment 32, the occupant can operate the abnormality cancel switch 53 to set the control mode to the neutral mode. The convenience thus can be improved.

When an abnormal situation occurs in a situation where a person other than the remote operator is not present, the remote operator may approach the forklift 20 and directly operate the abnormality cancel switch 53.

(2-4) The forklift 20 includes a machine base 21. The machine base 21 has an outer side surface 31 and an inner side surface 34 that partitions a driver's compartment 32 to which an occupant gets on. The abnormality cancel switch 53 is provided on the outer side surface 31.

According to this configuration, since the abnormality cancel switch 53 is provided on the outer side surface 31, the operator of the abnormality cancel switch 53 can operate the abnormality cancel switch 53 without getting on the driver's compartment 32. Thus, the abnormality cancel operation can be prevented from being performed in a state where an occupant is in the driver's compartment 32, so that even if erroneous movement of the forklift 20 occurs with the abnormality cancel operation, such erroneous movement can be responded and the safety can be improved.

(2-5) The manned mode shift condition includes that an occupant is present in the driver's compartment 32. With this configuration, it is possible to prevent the manned mode from being set in a state where the occupant is absent.

Here, when the abnormality cancel operation is performed in a state where an occupant is in the driver's compartment 32, the mode may unintentionally shift from abnormal stop mode → neutral mode → manned mode with the abnormality cancel operation.

On the other hand, as shown in (2-4), in the present embodiment, since the abnormality cancel operation can be prevented from being performed in a state where an occupant is in the driver's compartment 32, the unintentional shift to the manned mode involved in the abnormality cancel operation can be suppressed.

(2-6) The abnormality cancel operation may be an operation on the remote operation device 70. According to this configuration, the remote operator can perform the abnormality cancel operation without approaching the forklift 20. The convenience thus can be improved.

(2-7) The remote operation device 70 includes a touch panel 71 and a remote CPU 73 that performs the display control of the touch panel 71, and remotely operates the forklift 20 by the remote control operation including operation on the touch panel 71 during the remote mode. When the control mode is the abnormal stop mode, the remote CPU 73 causes the touch panel 71 to display the abnormality cancel icon Ic10. The abnormality cancel operation may be an input operation to the abnormality cancel icon Ic10.

With this configuration, the control mode can be shifted to the neutral mode by performing an input operation to the abnormality cancel icon Ic10 during the abnormal stop mode. Thus, the abnormal stop mode can be canceled by an intuitive operation.

In particular, when the control mode is the remote mode, the remote operation of the forklift 20 is performed by the remote control operation including the operation on the touch panel 71, so that it is assumed that the degree of attention of the touch panel 71 will be high to the remote operator. Since the abnormality cancel icon Ic10 is displayed on the touch panel 71 having such a high degree of attention, the inconvenience that the abnormality cancel icon Ic10 that triggers the abnormality cancel operation is overlooked can be suppressed.

(2-8) The abnormality cancel icon Ic10 is displayed when the control mode is the abnormal stop mode, but is not displayed during the control modes other than the abnormal stop mode. With this configuration, the abnormality cancel operation is not performed during the control modes other than the abnormal stop mode. As a result, the erroneous operation of the remote operator and the erroneous movement of the forklift 20 can be suppressed.

(2-9) The forklift 20 has doors 54 and 56, and the vehicle state detection unit 66 includes door sensors 55 and 57. The abnormal situation that triggers the shift from the remote mode to the abnormal stop mode includes that the door sensors 55 and 57 detect the opening of the doors 54 and 56 during the remote mode.

With this configuration, when the doors 54 and 56 are opened during the remote mode, the remote operation is stopped. As a result, the remote operation can be prevented from being continued in a state where the doors 54 and 56 are opened. Furthermore, since the control mode does not shift to the neutral mode unless the abnormality cancel operation is performed, the remote operator can perform the work of closing the doors 54 and 56 and resolving the abnormal situation before performing the abnormality cancel operation.

(2-10) The vehicle state detection unit 66 includes an obstacle sensor 67 that detects an obstacle around the forklift 20, and an abnormal situation that triggers the shift from the remote mode to the abnormal stop mode includes that an obstacle is detected by the obstacle sensor 67 during the remote mode.

With this configuration, when the obstacle is detected during the remote mode, the remote operation is stopped. Thus, the remote operation can be prevented from being continued in a state where the obstacle is detected, and the collision between the forklift 20 and the obstacle can be avoided. Moreover, since the control mode does not shift to the neutral mode unless the abnormality cancel operation is performed, the remote operator can perform the work of checking or eliminating the obstacle to resolve the abnormal situation before performing the abnormality cancel operation.

(2-11) The forklift 20 includes the vehicle operation unit 40 used for manned operation for directly operating the forklift 20, and the control mode is the manned mode in which the forklift 20 moves based on the operation of the vehicle operation unit 40. The shift to both the remote mode and the manned mode is prohibited during the abnormal stop mode, and the shift to both the remote mode and the manned mode is permitted during the neutral mode.

According to such a configuration, after the control mode shifts to the neutral mode due to the abnormality cancel operation performed in the abnormal stop mode, the control mode can be shifted to the desired control mode of the remote mode and the manned mode.

(2-12) The vehicle CPU 64 shifts the control mode from the remote mode to the abnormal stop mode based on the occurrence of the common abnormal situation or the remote mode abnormal situation as the abnormal situation during the remote mode. The vehicle CPU 64 shifts the control mode from the manned mode to the abnormal stop mode based on the occurrence of the common abnormal situation or the manned mode abnormal situation as the abnormal situation during the manned mode. The remote mode abnormal situation is set to correspond to the remote mode, and the manned mode abnormal situation is set to correspond to the manned mode, and both abnormal situations are different.

With this configuration, when a common abnormal situation occurs, the control mode shifts to the abnormal stop mode regardless of the control mode. This makes it possible to respond to an abnormal situation unrelated to the control mode, such as an abnormality of the forklift 20.

Here, an assumed abnormal situation is different between the remote mode in which remote operation is performed and the manned mode in which manned operation is performed. In this regard, according to the present embodiment, even a specific abnormal situation assumed in each control mode, for example, an abnormal situation in which an occupant is detected in the remote mode or an abnormal situation in which the occupant is absent in the manned mode can be responded.

(2-13) The vehicle CPU 64 shifts the control mode from the neutral mode to the remote mode based on a satisfaction of the remote mode shift condition during the neutral mode. The remote mode shift condition includes that no common abnormal situation has occurred.

According to this configuration, even if the abnormal stop mode is shifted to the neutral mode by the abnormality cancel operation, the control mode cannot be set to the remote mode when the common abnormal situation is occurring. Thus, the remote operation can be prevented from being performed in a state where the common abnormal situation has not been resolved. Furthermore, the worker can be urged to resolve the common abnormal situation.

(2-14) The vehicle CPU 64 shifts the control mode from the neutral mode to the manned mode based on a satisfaction of the manned mode shift condition during the neutral mode. The manned mode shift condition includes that no common abnormal situation has occurred.

According to this configuration, even if the abnormal stop mode is shifted to the neutral mode by the abnormality cancel operation, the control mode cannot be set to the manned mode when the common abnormal situation is occurring. Thus, the manned operation can be prevented from being performed in a state where the common abnormal situation has not been resolved. Furthermore, the worker can be urged to resolve the common abnormal situation.

(2-15) The vehicle control process execution program 65a for remotely operating the forklift 20 using the remote operation device 70 causes the vehicle CPU 64 to control the control mode of the forklift 20. The vehicle control process execution program 65a causes the vehicle CPU 64 to shift the control mode from the remote mode to the abnormal stop mode while maintaining the communication connection state of the communication units 69 and 76 based on the detection of the abnormal situation during the remote mode. Then, the vehicle control process execution program 65a causes the vehicle CPU 64 to shift the control mode from the abnormal stop mode to the neutral mode while maintaining the communication connection state based on the abnormality cancel operation being performed during the abnormal stop mode. According to this configuration, the effects of (2-1) and the like can be obtained.

(2-16) The industrial vehicle remote operation method that remotely operates the forklift 20 using the remote operation device 70 includes step S1202 in which the vehicle CPU 64 shifts the control mode from the remote mode to the abnormal stop mode while maintaining the communication connection state of the communication units 69 and 76 based on the detection of the abnormal situation during the remote mode. Furthermore, the industrial vehicle remote operation method includes step S1303 in which the vehicle CPU 64 shifts the control mode from the abnormal stop mode to the neutral mode while maintaining the communication connection state based on the abnormality cancel operation being performed during the abnormal stop mode. According to this configuration, the effects of (2-1) and the like can be obtained.

The embodiments described above may be modified as follows.
- The movement stop notification is not limited to the configuration indicating both the abnormality and the stopping of movement, and may simply notify that the movement has been stopped.
- The notification mode of the movement stop notification is not limited to the display using the touch panel 71 and may be arbitrary, and for example, audio notification may be performed using a speaker or the like, or both display and audio may be performed.
- In addition to or in place of stopping the movement, the movement stop notification may be a notification that urges an abnormality cancel operation, or a notification that urges an abnormality confirmation.
- The movement stop notification may be performed by the forklift 20. In this case, the forklift 20 may be provided with a dedicated notifying unit (e.g., a lamp) for performing movement stop notification.

For example, a notifying unit that makes a movement stop notification may be provided on the roof 37 of the forklift 20. In this case, since the notifying unit is provided on the roof 37, which is the highest position of the forklift 20, it can be easily visually recognized by the remote operator of the remote operation device 70.

Furthermore, for example, the steering table 35 may be provided with a notifying unit. In this case, since the occupant can easily see the notifying unit, the occupant can easily confirm the stopping of movement. If the steering table 35 is provided with a display panel showing various kinds of information regarding the forklift 20, the movement stop notification may be performed using the display panel. In short, the movement stop notification may be performed by at least one of the remote operation device 70 and the forklift 20.

It is note that, if an occupant is detected during the remote mode, it is highly possible that both the remote operator operating the remote operation device 70 and the occupant on the forklift 20 are present, and thus the movement stop notification may be performed by both the remote operation device 70 and the forklift 20.

If the forklift 20 is provided with a notifying unit, the vehicle CPU 64 may perform the movement stop notification using the notifying unit. That is, the forklift 20 may include the "notification executing unit".
- The vehicle signal SGy indicating the stopping of movement is not limited to the vehicle signal SGy in which the abnormal stop mode is set in the mode information Dy3c, and may be for example, the vehicle signal SGy in which the abnormality information Dy3d indicating abnormality is set. In this case, the remote CPU 73 may issue the abnormal stop notification based on the reception of the vehicle signal SGy in which the abnormality information Dy3d indicating abnormality is set.
- The information set in the machine base information Dy3 is arbitrary. For example, the mode information Dy3c may be omitted from the machine base information Dy3.
- The neutral mode may be omitted. In this case, the abnormal stop mode may be a control mode in which the shift to the remote mode or the manned mode is permitted. In such a configuration, for example, the vehicle CPU 64 may be configured to reset the control mode before the shift to the abnormal stop mode based on the abnormality cancel operation being performed.
- The control mode may be directly shifted between the remote mode and the manned mode without going through the neutral mode.
- The abnormality cancel operation may be omitted. For example, the vehicle CPU 64 determines whether or not the abnormal situation is resolved based on the detection result of the vehicle state detection unit 66 during the abnormal stop mode, and when the abnormal situation is resolved, automatically shifts the control mode from the abnormal stop mode to the neutral mode. That is, the abnormality cancel operation is not essential. However, from the viewpoint of safety such as ensuring the time for confirmation work, it is preferable that the shift condition from the abnormal stop mode to the neutral mode includes an abnormality cancel operation.
- The execution timing of the movement stop notification, the movement stop control, and the remote operation stop control may be the same time or before and after each other. For example, the movement stop notification may be performed after the movement stop control and the remote operation stop control are performed, or vice versa. The remote operation stop control may be performed after the movement stop control is performed, or vice versa. In short, these controls need to be performed when an abnormal situation has occurred.

Specifically, for example, the vehicle CPU 64 may first start the movement stop control and then shift the control mode to the abnormal stop mode. In this case, the control mode is shifted during the movement stop control. Furthermore, the vehicle CPU 64 may shift the control mode to the abnormal stop mode after the movement stop control is terminated. Even in this case, the movement based on the remote operation signal SGx1 is prohibited during the movement stop control. That is, the shift of the control mode to the abnormal stop mode may be performed before the movement stop control, during the movement stop control, or after the movement stop control.
- The industrial vehicle remote operation system 10 needs to be configured so that neither the movement of the forklift 20 based on the remote control operation nor the movement of the forklift 20 based on the operation of the vehicle operation unit 40 is performed during the abnormal stop mode and the neutral mode, and the specific configuration thereof is arbitrary.
- The changeover switch 52 may be omitted. In this case, the manned mode shift condition may be that the occupant is detected by the occupant sensor 51, and the remote mode shift condition may be that the remote start operation is performed in a situation where the occupant is not detected by the occupant sensor 51.
- The condition of (B) or (C) may be omitted from the conditions of the remote-enabled state.
- The remote operation device 70 may not include the touch panel 71, and the abnormality cancel operation with respect to the remote operation device 70 is not limited to the input operation to the abnormality cancel icon Ic10. For example, the abnormality cancel operation with respect to the remote operation device 70 may be an operation of an abnormality cancel switch provided in the remote operation device 70.
- During the abnormal stop mode or the manned mode, both communication units 69 and 76 may cancel the communication connection state. In this case, both communication units 69 and 76 may be in the communication connection state again when shifting from the abnormal stop mode to the neutral mode or when shifting from the manned mode to the neutral mode. In short, both communication units 69 and 76 need to be in the communication connection state at least during the remote mode. However, from the viewpoint of being able to grasp each other's states, it is preferable that the communication connection state of both communication units 69 and 76 is maintained regardless of the control mode.
- The control mode may be different between the movement stop control (steps S710, S811) accompanying the shift to the abnormal stop mode and the movement stop control (steps S706, S805) not accompanying the shift to the neutral mode or the shift to the control mode. For example, the movement stop control triggered by the processes of steps S706 and S805 is set to have lower forced stop deceleration than the movement stop control triggered by the processes of steps S710 and S811 so as to stop slowly. Thus, the movement of the forklift 20 can be quickly stopped when in an emergency, while the movement of the forklift 20 can be smoothly stopped when not in an emergency.
- The movement stop notification may be omitted. That is, the movement stop notification is not essential.
- The industrial vehicle remote operation system 10 may be configured to execute a reset (reactivate) process of a remote operation application when a reset operation is performed on at least one of the remote operation device 70 and the forklift 20. Reset means, for example, temporarily releasing the communication connection state of both communication units 69 and 76, terminating the application, and then again performing the initial setting.

In such a configuration, the abnormality cancel operation may include a reset operation. Specifically, the vehicle CPU 64 may execute the reset process when the reset operation is performed in a situation where the abnormal stop mode is set and the communication connection state is established. In this case, the communication connection state of both communication units 69 and 76 is temporarily canceled, and then the initial setting is performed. Thus, the control mode is set to the neutral mode, which is the control mode of the initial setting. Even in this case as well, the abnormal stop mode can be canceled. That is, the communication connection state may be temporarily canceled when shifting from the abnormal stop mode to the neutral mode. The same applies to the shift from the remote mode or the manned mode to the abnormal stop mode.
- The abnormality cancel operation on the forklift 20 is not limited to the abnormality cancel switch 53 and is arbitrary.
- The abnormality cancel icon Ic10 may have a configuration of being displayed regardless of the control mode. In this case, the remote CPU 73 may determine that the abnormality cancel operation has been performed when an input operation is performed on the abnormality cancel icon Ic10 during the abnormal stop mode.
- The abnormality cancel operation may be that both the operation of the abnormality cancel switch 53 and the input operation to the abnormality cancel icon Ic10 are performed. That is, the abnormality cancel operation may be a multi-step operation, or may be a combination of an operation on the remote operation device 70 and an operation on the forklift 20. Thus, the abnormality cancel operation becomes complicated, and needs to be intentionally performed. Therefore, the abnormality cancel operation can be prevented from being erroneously performed.
- The manned mode abnormal situation and the remote mode abnormal situation are not limited to those shown in the second embodiment and are arbitrary. For example, the manned mode abnormal situation may be that the operation of the vehicle operation unit 40 is performed under the condition that the occupant is absent, and the remote mode abnormal situation may be that the operation of the vehicle operation unit 40 is performed. Whether or not the vehicle operation unit 40 is operated is detected by the operation sensor 63.
- The remote mode abnormal situation and the manned mode abnormal situation may be omitted as the abnormal situations that trigger the shift to the abnormal stop mode.
- The vehicle CPU 64 is configured to execute the process of stopping the movement (steps S705 and S706) when the vehicle operation unit 40 is not operated in the manned mode, but this is not the sole case, and the steps S705 and S706 may be omitted. Even in this case as well, for example, when the operation of the vehicle operation unit 40 is stopped during the movement of the forklift 20 and the occupant immediately gets off, the control mode shifts to the abnormal stop mode and the movement stop control is performed.
- The vehicle CPU 64 may shift the control mode from the remote mode to the neutral mode based on a detection of the occupant by the occupant sensor 51 while the control mode is set to the remote mode and the forklift 20 is stopped.
- The disabled-display may be omitted. In this case, a remote start operation on the forklift 20 in the remote-disabled state, specifically, an input operation (tap operation) on the remote target icon Ic1 corresponding to the forklift 20 in the remote-disabled state may be performed. Even in this case, the control mode of the forklift 20 in the remote-disabled state does not shift to the remote mode. Therefore, the remote communication unit 76 receives the vehicle signal SGy in which the control mode other than the remote mode is set. Therefore, the remote CPU 73 maintains the state in which the standby image G1 is displayed without changing the image on the touch panel 71 from the standby image G1 to the operation image G2. Thus, the remote operator can recognize the remote-disabled state. However, focusing on the viewpoint of being able to notify the remote operator on whether or not in the remote-enabled state, it is better that the disabled-display is provided on the touch panel 71.
- The terminating operation is not limited to the input operation to the specific portion of the touch panel 71 (specifically, the standby image G1), and is arbitrary. For example, when the remote operation device 70 is provided with a dedicated end button, the end button may be operated.

The remote start operation and the remote stop operation are also arbitrary, and may be, for example, the second rotation operation, the input operation to a plurality of locations on the touch panel 71 at the same time, or the operation of a dedicated button when a dedicated button is provided.
- The vehicle CPU 64 may shift the control mode during the movement stop control. For example, the vehicle CPU 64 may shift the control mode from the abnormal stop mode to the neutral mode based on the abnormality cancel operation being performed during the movement stop control. In this case, it is advisable to add the fact that the movement of the forklift 20 is stopped to the shift condition from the neutral mode to the remote mode or the manned mode.
- The standby image G1 or the operation image G2 may be omitted, and the same image may be displayed on the touch panel 71 regardless of the control mode.
- The displayed image may be different between the neutral mode and the manned mode.
- As long as the remote CPU 73 can generate the remote operation signal SGx1 based on the remote control operation on the remote operation device 70, the specific control mode thereof is not limited to that of each embodiment and is arbitrary.
- The industrial vehicle remote operation system 10 of each embodiment is configured so that the traveling and the movement of the forks 26 are not performed at the same time, but may be configured so that the traveling and the movement of the forks 26 are performed at the same time.
- The remote operation device 70 is not limited to a small device that can be held by a remote operator. For example, the remote operation device 70 may be a dedicated device provided in a control room that manages the forklift 20.

In such another example, the remote operator may perform the remote operation of the forklift 20 without visually recognizing it directly from the control room. In this case, the forklift 20 is preferably provided with a camera, and the remote operation device 70 preferably has a display unit for displaying an image of the camera. Thus, the remote operator can perform the remote operation while looking at the image of the camera without visually recognizing the forklift 20 directly, so that the safety can be improved.

That is, the remote operation by the remote operation device 70 is not limited to the short-distance range of an extent the forklift 20 can be visually recognized directly, and may be a long-distance range so that the forklift 20 cannot be visually recognized directly. In other words, the industrial vehicle remote operation system 10 can be applied even to the remote operation in the above-mentioned long-distance range.
- The remote operation device 70 may control the control mode. That is, the remote operation device 70 may include a "mode control unit". Specifically, the remote program 74a may cause the remote CPU 73 to function to control the control mode. In this case, the vehicle communication unit 69 may regularly transmit various information for specifying the control mode, and the remote CPU 73 may control the control mode based on the various information and the operation on the remote operation device 70.

For example, the machine base information Dy3 of the vehicle signal SGy may include information indicating the state of the abnormality cancel switch 53. Then, the remote CPU 73 may control the control mode based on the received machine base information Dy3. For example, the remote CPU 73 may shift the control mode from the remote mode to the abnormal stop mode based on the remote communication unit 76 receiving the vehicle signal SGy in which the information indicating abnormality is set in the abnormality information Dy3d during the remote mode.

In this another example, the remote CPU 73 that detects an abnormal situation based on the vehicle signal SGy corresponds to the "abnormal situation detection unit". That is, the "abnormal situation detection unit" is not limited to the configuration of being provided in the industrial vehicle, and may be provided in the remote operation device 70.

Furthermore, in this another example, the remote CPU 73 executes a process of determining whether or not the abnormality cancel switch 53 is operated, based on the information indicating the state of the abnormality cancel switch 53 included in the machine base information Dy3 of the vehicle signal SGy. Focusing on this point, it can be said that the remote CPU 73 that executes the determination process corresponds to the "cancel operation detection unit".
- The remote CPU 73 may execute the movement stop control. Specifically, as the movement stop control, the remote CPU 73 performs a control of repeatedly transmitting the remote operation signal SGx1 in which the various information corresponding to the forced stop is set regardless of the remote control operation until the movement of the forklift 20 stops. In this case, the vehicle CPU 64 controls the actuators 61 and 62 based on the remote operation signal SGx1 regardless of the operation of the vehicle operation unit 40. Even in this case, the movement of the forklift 20 stops regardless of the remote control operation and the operation of the vehicle operation unit 40.

That is, the execution subject of the movement stop control may be the forklift 20 or the remote operation device 70. In other words, the remote operation device 70 may include a "stop control unit", the forklift 20 may include a "stop control unit", and the remote operation device 70 may include a part of the "stop control unit" and the forklift 20 may include the other parts.
- The remote program 74a of the remote operation device 70 may include an execution program for executing a process for performing movement stop control, remote operation stop control, and movement stop notification based on the occurrence of an abnormal situation. In short, an execution program (industrial vehicle remote operation program) for executing a process for performing movement stop control, remote operation stop control, and movement stop notification is stored in either the vehicle memory 65 or the remote memory 74.
- The industrial vehicle is not limited to the forklift 20 and may be arbitrary, and may include one or more movement targets other than the forks 26 (in other words, operation targets). The movement of the industrial vehicle may be at least one of the traveling and the movement of the movement target, and for an industrial vehicle including a plurality of movement targets, the movement of the industrial vehicle may be the movement of at least one of the plurality of movement targets.
- It may be an industrial vehicle that does not include the vehicle operation unit 40 or the driver's compartment 32 and cannot be manned operated. That is, the manned mode is not essential. In the industrial vehicle that cannot be manned operated, the occupant sensor 51 may be omitted.
- A storage medium in which the remote program 74a or the vehicle control process execution program 65a is stored may be prepared separately, and the remote operation of the forklift 20 by the remote operation device 70, and the like may be performed with the storage medium connected to the remote operation device 70 or the forklift 20.
- Each of the embodiments and each of the modifications may be combined appropriately.

Next, a suitable example that can be grasped from the above-described embodiment and another example will be described below.

(A) An industrial vehicle remote operation system including an industrial vehicle including a vehicle operation unit and a vehicle communication unit that performs wireless communication, a remote operation device used to remotely operate the industrial vehicle, an abnormal situation detection unit that detects an abnormal situation, and a mode control unit that controls a control mode of the industrial vehicle. The control mode includes a remote mode in which a remote operation of the industrial vehicle by the remote operation device is performed, a manned mode in which a manned operation for directly operating the industrial vehicle based on the operation of the vehicle operation unit is performed, and an abnormal stop mode in which neither the remote operation by the remote operation device nor the manned operation are performed. The abnormal situation includes a common abnormal situation which is a common abnormal situation regardless of the remote mode and the manned mode, a remote mode abnormal situation set in correspondence with the remote mode, and a manned mode abnormal situation different from the remote mode abnormal situation and set in correspondence with the manned mode. The mode control unit shifts, based on the detection of the common abnormal situation or the remote mode abnormal situation by the abnormal situation detection unit in a situation where the control mode is the remote mode, the control mode from the remote mode to the abnormal stop mode, and shifts, based on the detection of the common abnormal situation or the manned mode abnormal situation by the abnormal situation detection unit in a situation where the control mode is the manned mode, the control mode from the manned mode to the abnormal stop mode.

With this configuration, when a common abnormal situation occurs, the control mode shifts to the abnormal stop mode regardless of the control mode. Thus, an abnormal situation unrelated to the control mode, such as an abnormality of an industrial vehicle, for example, can be responded.

Here, an assumed abnormal situation is different between the remote mode in which remote operation is performed and the manned mode in which manned operation is performed. In this respect, according to the present configuration, a specific abnormal situation that is assumed in each control mode can be responded, so that the safety can be further improved.

Although (A) relates to the "industrial vehicle remote operation system", the main technical idea shown in (A) is not limited to the "industrial vehicle remote operation system", and can also be applied to "industrial vehicle", "remote operation device", "industrial vehicle remote operation program", and "industrial vehicle remote operation method".

### Reference Signs List

- 10: industrial vehicle remote operation system
- 20: forklift (industrial vehicle)
- 21: machine base
- 26: fork
- 31: outer side surface
- 32: driver's compartment
- 34: inner side surface
- 40: vehicle operation unit
- 51: occupant sensor
- 52: changeover switch
- 53: abnormality cancel switch
- 54, 56: door
- 55, 57: door sensor
- 61,62: actuator (drive unit)
- 64: vehicle CPU
- 65a: vehicle control process execution program
- 66: vehicle state detection unit
- 67: obstacle sensor
- 68: abnormality detection sensor
- 69: vehicle communication unit
- 70: remote operation device
- 71: touch panel
- 73: remote CPU
- 74a: remote program
- 76: remote communication unit
- SGx1: remote operation signal
- SGy: vehicle signal
- Ic10: abnormality cancel icon

## Claims

1. An industrial vehicle remote operation system (10) comprising:
an industrial vehicle (20) including a vehicle communication unit (69) that performs wireless communication;
a remote operation device (70) that includes a remote communication unit (76) for exchanging signals (SGxl, SGx2, SGx3, SGx4, SGx5, SGy) with the vehicle communication unit (69) through wireless communication by establishing a communication connection state with the vehicle communication unit (69), and that is used to remotely operate the industrial vehicle (20);
an abnormal situation detection unit (64, 73) that detects an abnormal situation in the communication connection state;
a mode control unit (64) that controls a control mode of the industrial vehicle (20), whereby
the control mode includes
a remote mode in which a remote operation of the industrial vehicle (20) by the remote operation device (70) is performed, **characterised in that** the system further comprises a cancel operation detection unit (66, 72, 64, 73) that detects an abnormality cancel operation; and **in that** the control mode includes
an abnormal stop mode in which the remote operation of the industrial vehicle (20) by the remote operation device (70) is not performed and shift to the remote mode is prohibited, and
a neutral mode in which the remote operation of the industrial vehicle (20) by the remote operation device (70) is not performed and shift to the remote mode is permitted,
at least during the remote mode, the vehicle communication unit (69) and the remote communication unit (76) are in the communication connection state, and
the mode control unit (64)
shifts, based on the detection of the abnormal situation by the abnormal situation detection unit (64, 73) in a situation where the control mode is the remote mode, the control mode from the remote mode to the abnormal stop mode while maintaining the communication connection state, and
shifts, based on the detection of the abnormality cancel operation by the cancel operation detection unit (66, 72, 64, 73) in a situation where the control mode is the abnormal stop mode and the communication connection state is established, the control mode from the abnormal stop mode to the neutral mode.

2. The industrial vehicle remote operation system (10) according to claim 1, **characterized in that**
the industrial vehicle (20) includes an abnormality cancel switch (53), and
the abnormality cancel operation includes operation of the abnormality cancel switch (53).

3. The industrial vehicle remote operation system (10) according to claim 2, **characterized in that**
the industrial vehicle (20) includes a machine base (21),
the machine base (21) includes,
an outer side surface (31), and
an inner side surface (34) that partitions a driver's compartment (32) to which an occupant gets on, and
the abnormality cancel switch (53) is provided on the outer side surface (31).

4. The industrial vehicle remote operation system (10) according to claim 1, **characterized in that** the abnormality cancel operation includes an operation on the remote operation device (70).

5. The industrial vehicle remote operation system (10) according to claim 4, **characterized in that**
the remote operation device (70) includes,
a touch panel (71), and
a display control unit (73) for performing display control of the touch panel (71),
when the control mode is the remote mode, the industrial vehicle (20) is remotely operated through a remote control operation including an operation on the touch panel (71),
the display control unit (73) displays an abnormality cancel icon (lc10) on the touch panel (71) when the control mode is the abnormal stop mode, and
the abnormality cancel operation includes an input operation on the abnormality cancel icon (lc10).

6. The industrial vehicle remote operation system (10) according to any one of claims 1 to 5, **characterized in that**
the industrial vehicle (20) has a door (54, 56),
the abnormal situation detection unit (64) includes a door sensor (55, 57) that detects opening and closing of the door (54, 56), and
the abnormal situation includes the opening of the door (54, 56) detected by the door sensor (55, 57) in a situation where the control mode is the remote mode.

7. The industrial vehicle remote operation system (10) according to any one of claims 1 to 6, **characterized in that**
the abnormal situation detection unit (64) includes an obstacle sensor (67) that detects an obstacle around the industrial vehicle (20), and
the abnormal situation includes the detection of an obstacle detected by the obstacle sensor (67) in a situation where the control mode is the remote mode.

8. The industrial vehicle remote operation system (10) according to any one of claims 1 to 7, **characterized in that**
the industrial vehicle (20) includes a vehicle operation unit (40) used to directly operate the industrial vehicle (20),
the control mode includes a manned mode in which a manned operation for directly operating the industrial vehicle (20) is performed based on an operation of the vehicle operation unit (40), while a remote operation by the remote operation device (70) is not performed,
the abnormal stop mode is a control mode in which neither the remote operation by the remote operation device (70) nor the manned operation are performed, and a shift to neither the remote mode nor the manned mode is prohibited, and
the neutral mode is a control mode in which neither the remote operation by the remote operation device (70) nor the manned operation are performed, and a shift to both the remote mode and the manned mode is permitted.

9. The industrial vehicle remote operation system (10) according to claim 8, **characterized in that**
the abnormal situation detection unit (64) detects, as the abnormal situation,
a common abnormal situation that is a common abnormal situation regardless of the control mode,
a remote mode abnormal situation set in correspondence with the remote mode, and
a manned mode abnormal situation that is set in correspondence with the manned mode and is different from the remote mode abnormal situation,
the mode control unit (64),
shifts, based on the detection of the common abnormal situation or the remote mode abnormal situation by the abnormal situation detection unit (64) in a situation where the control mode is the remote mode, the control mode from the remote mode to the abnormal stop mode while maintaining the communication connection state, and
shifts, based on the detection of the common abnormal situation or the manned mode abnormal situation by the abnormal situation detection unit (64) in a situation where the control mode is the manned mode, the control mode from the manned mode to the abnormal stop mode.

10. The industrial vehicle remote operation system (10) according to claim 9, **characterized in that**
the mode control unit (64) shifts, based on a satisfaction of a remote mode shift condition when the control mode is the neutral mode, the control mode from the neutral mode to the remote mode, and
the remote mode shift condition includes that the common abnormal situation has not occurred.

11. The industrial vehicle remote operation system (10) according to claim 9 or 10, **characterized in that**
the mode control unit (64) shifts, based on a satisfaction of a manned mode shift condition when the control mode is the neutral mode, the control mode from the neutral mode to the manned mode, and
the manned mode shift condition includes that the common abnormal situation has not occurred.

12. An industrial vehicle including a vehicle communication unit (69) that establishes a communication connection state with a remote communication unit (76) provided in a remote operation device (70) to exchange signals (SGxl, SGx2, SGx3, SGx4, SGx5, SGy) with the remote communication unit (76) through wireless communication,
the industrial vehicle (20) comprising:
an abnormal situation detection unit (64, 73) that detects an abnormal situation in the communication connection state; and
a mode control unit (64) that controls a control mode of the industrial vehicle (20), whereby
the control mode includes
a remote mode in which a remote operation of the industrial vehicle (20) by the remote operation device (70) is performed, **characterised in that** the contra mode further includes
an abnormal stop mode in which the remote operation of the industrial vehicle (20) by the remote operation device (70) is not performed and shift to the remote mode is prohibited, and
a neutral mode in which the remote operation of the industrial vehicle (20) by the remote operation device (70) is not performed and shift to the remote mode is permitted,
at least during the remote mode, the vehicle communication unit (69) and the remote communication unit (76) are in the communication connection state, and
the mode control unit (64) shifts, based on the detection of the abnormal situation by the abnormal situation detection unit (64, 73) in a situation where the control mode is the remote mode, the control mode from the remote mode to the abnormal stop mode while maintaining the communication connection state, and
shifts, based on the abnormality cancel operation performed on at least one of the remote operation device (70) and the industrial vehicle (20) in a situation where the control mode is the abnormal stop mode and the communication connection state is established, the control mode from the abnormal stop mode to the neutral mode.

13. A remote operation device (70) including a remote communication unit (76) that establishes a communication connection state with a vehicle communication unit (69) provided in an industrial vehicle (20) to exchange signals (SGxl, SGx2, SGx3, SGx4, SGx5, SGy) with the vehicle communication unit (69) through wireless communication, the remote operation device (70) being used to remotely operate the industrial vehicle (20), the remote operation device comprising:
a mode control unit (64) that controls a control mode of the industrial vehicle (20), whereby the control mode includes
a remote mode in which a remote operation of the industrial vehicle (20) by the remote operation device (70) is performed, **characterised in that** the contra mode further includes
an abnormal stop mode in which the remote operation of the industrial vehicle (20) by the remote operation device (70) is not performed and shift to the remote mode is prohibited, and
a neutral mode in which the remote operation of the industrial vehicle (20) by the remote operation device (70) is not performed and shift to the remote mode is permitted,
at least during the remote mode, the vehicle communication unit (69) and the remote communication unit (76) are in the communication connection state, and
the mode control unit (64)
shifts, based on an occurrence of an abnormal situation in a situation where the control mode is the remote mode, the control mode from the remote mode to the abnormal stop mode while maintaining the communication connection state, and
shifts, based on an abnormality cancel operation performed on at least one of the remote operation device (70) and the industrial vehicle (20) in a situation where the control mode is the abnormal stop mode and the communication connection state is established, the control mode from the abnormal stop mode to the neutral mode.

14. An industrial vehicle remote operation program that uses a remote operation device (70) that includes a remote communication unit (76) that establishes a communication connection state with a vehicle communication unit (69) provided in an industrial vehicle (20) to exchange signals (SGxl, SGx2, SGx3, SGx4, SGx5, SGy) with the vehicle communication unit (69) through wireless communication, to remotely operate the industrial vehicle (20), whereby
the industrial vehicle remote operation program causes the remote operation device (70) or the industrial vehicle (20) to function as a mode control unit (64) that controls a control mode of the industrial vehicle (20),
the control mode includes
a remote mode in which a remote operation of the industrial vehicle (20) by the remote operation device (70) is performed, **characterised in that** the control mode further includes
an abnormal stop mode in which the remote operation of the industrial vehicle (20) by the remote operation device (70) is not performed and shift to the remote mode is prohibited, and
a neutral mode in which the remote operation of the industrial vehicle (20) by the remote operation device (70) is not performed and shift to the remote mode is permitted,
at least during the remote mode, the vehicle communication unit (69) and the remote communication unit (76) are in the communication connection state, and
the mode control unit (64) shifts, based on an occurrence of an abnormal situation in a situation where the control mode is the remote mode, the control mode from the remote mode to the abnormal stop mode while maintaining the communication connection state, and
shifts, based on an abnormality cancel operation performed on at least one of the remote operation device (70) and the industrial vehicle (20) in a situation where the control mode is the abnormal stop mode and the communication connection state is established, the control mode from the abnormal stop mode to the neutral mode.

15. An industrial vehicle remote operation method that uses a remote operation device (70) that includes a remote communication unit (76) that establishes a communication connection state with a vehicle communication unit (69) provided in an industrial vehicle (20) to exchange signals (SGxl, SGx2, SGx3, SGx4, SGx5, SGy) with the vehicle communication unit (69) through wireless communication, to remotely operate the industrial vehicle (20), whereby
the industrial vehicle remote operation method comprises a mode control step in which the remote operation device (70) or the industrial vehicle (20) controls a control mode of the industrial vehicle (20),
the control mode includes
a remote mode in which a remote operation of the industrial vehicle (20) by the remote operation device (70) is performed, **characterised in that** the control mode further includes
an abnormal stop mode in which the remote operation of the industrial vehicle (20) by the remote operation device (70) is not performed and shift to the remote mode is prohibited, and
a neutral mode in which the remote operation of the industrial vehicle (20) by the remote operation device (70) is not performed and shift to the remote mode is permitted,
at least during the remote mode, the vehicle communication unit (69) and the remote communication unit (76) are in the communication connection state, and
the mode control step includes steps of,
shifting, based on an occurrence of an abnormal situation in a situation where the control mode is the remote mode, the control mode from the remote mode to the abnormal stop mode while maintaining the communication connection state, and
shifting, based on an abnormality cancel operation performed on at least one of the remote operation device (70) and the industrial vehicle (20) in a situation where the control mode is the abnormal stop mode and the communication connection state is established, the control mode from the abnormal stop mode to the neutral mode.

## Patentansprüche

1. Industriefahrzeugfernbedienungssystem (10) mit:
einem Industriefahrzeug (20), das eine Fahrzeugkommunikationseinheit (49) hat, die eine drahtlose Kommunikation durchführt;
einer Fernbedienungsvorrichtung (70), die eine Fernkommunikationseinheit (76) zum Austauschen von Signalen (SGx1, SGx2, SGx3, SGx4, SGx5, SGy) mit der Fahrzeugkommunikationseinheit (69) über drahtlose Kommunikation durch Herstellen eines Kommunikationsverbindungszustands mit der Fahrzeugkommunikationseinheit (69) hat und die verwendet wird, um das Industriefahrzeug (20) fern zu bedienen;
einer Erfassungseinheit (64, 73) für eine abnormale Situation, die eine abnormale Situation in dem Kommunikationsverbindungszustand erfasst;
einer Modussteuerungseinheit (64), die einen Steuerungsmodus des Industriefahrzeugs (20) steuert, wobei
der Steuerungsmodus einen Fernmodus umfasst, in dem eine Fernbedienung des Industriefahrzeugs (20) durch die Fernbedienungsvorrichtung (70) durchgeführt wird,
**dadurch gekennzeichnet, dass**
das System des Weiteren eine Aufhebungsbedienungserfassungseinheit (66, 72, 64, 73) aufweist, die eine Abnormalitätsaufhebungsbedienung erfasst; und, dass
der Steuerungsmodus
einen abnormaler Stopp-Modus, in dem die Fernbedienung des Industriefahrzeugs (20) durch die Fernbedienungsvorrichtung (70) nicht durchgeführt wird und ein Schalten zu dem Fernmodus untersagt ist, und
einen Neutralmodus hat, in dem die Fernbedienung des Industriefahrzeugs (20) durch die Fernbedienungsvorrichtung (70) nicht durchgeführt wird und ein Schalten zu dem Fernmodus gestattet ist,
wenigstens während des Fernmodus die Fahrzeugkommunikationseinheit (69) und die Fernkommunikationseinheit (76) in dem Kommunikationsverbindungszustand sind, und
die Modussteuerungseinheit (64)
auf der Basis der Erfassung der abnormalen Situation durch die Erfassungseinheit (64, 73) für eine abnormale Situation in einer Situation, wo der Steuerungsmodus der Fernmodus ist, den Steuerungsmodus von dem Fernmodus zu dem abnormaler Stopp-Modus schaltet, während der Kommunikationsverbindungszustand aufrechterhalten wird, und
auf der Basis der Erfassung der Abnormalitätsaufhebungsbedienung durch die Aufhebungsbedienungserfassungseinheit (66, 72, 64, 73) in einer Situation, wo der Steuerungsmodus der abnormaler Stopp-Modus ist und der Kommunikationsverbindungszustand hergestellt ist, den Steuerungsmodus von dem abnormaler Stopp-Modus zu dem Neutralmodus schaltet.

2. Industriefahrzeugfernbedienungssystem (10) nach Anspruch 1, **dadurch gekennzeichnet, dass**
das Industriefahrzeug (20) einen Abnormalitätsaufhebungsschalter (53) hat, und
die Abnormalitätsaufhebungsbedienung eine Bedienung des Abnormalitätsaufhebungsschalters (53) umfasst.

3. Industriefahrzeugfernbedienungssystem (10) nach Anspruch 2, **dadurch gekennzeichnet, dass**
das Industriefahrzeug (20) eine Maschinenbasis (21) hat,
die Maschinenbasis (21)
eine äußere Seitenfläche (31), und
eine innere Seitenfläche (34) hat, die ein Fahrerabteil (32), in das ein Insasse einsteigt, unterteilt, und
der Abnormalitätsaufhebungsschalter (53) an der äußeren Seitenfläche (31) vorgesehen ist.

4. Industriefahrzeugfernbedienungssystem (10) nach Anspruch 1, **dadurch gekennzeichnet, dass** die Abnormalitätsaufhebungsbedienung eine Bedienung an der Fernbedienungsvorrichtung (70) umfasst.

5. Industriefahrzeugfernbedienungssystem (10) nach Anspruch 4, **dadurch gekennzeichnet, dass**
die Fernbedienungsvorrichtung (70)
ein Touchpaneel (71), und
eine Displaysteuerungseinheit (73) zum Durchführen einer Displaysteuerung des Touchpaneels (71) hat,
wenn der Steuerungsmodus der Fernmodus ist, das Industriefahrzeug (20) durch eine Fernsteuerungsbedienung, die eine Bedienung an dem Touchpaneel (71) umfasst, fernbedient wird,
die Displaysteuerungseinheit (73) ein Abnormalitätsaufhebungsicon (Ic10) auf dem Touchpaneel (71) anzeigt, wenn der Steuerungsmodus der abnormaler Stopp-Modus ist, und
die Abnormalitätsaufhebungsbedienung eine Eingabebedienung an dem Abnormalitätsaufhebungsicon (Ic10) umfasst.

6. Industriefahrzeugfernbedienungssystem (10) nach einem der Ansprüche 1 bis 5, **dadurch gekennzeichnet, dass**
das Industriefahrzeug (20) eine Tür (54, 56) hat,
die Erfassungseinheit (64) für eine abnormale Situation einen Türsensor (55, 57) hat, der ein Öffnen und Schließen der Tür (54, 56) erfasst, und
die abnormale Situation das Öffnen der Tür (54, 56) umfasst, das durch den Türsensor (55, 57) in einer Situation erfasst wird, wo der Steuerungsmodus der Fernmodus ist.

7. Industriefahrzeugfernbedienungssystem (10) nach einem der Ansprüche 1 bis 6, **dadurch gekennzeichnet, dass**
die Erfassungseinheit (64) für eine abnormale Situation einen Hindernissensor (67) hat, der ein Hindernis um das Industriefahrzeug (20) herum erfasst, und
die abnormale Situation das Erfassen eines Hindernisses umfasst, das durch den Hindernissensor (67) in einer Situation erfasst wird, wo der Steuerungsmodus der Fernmodus ist.

8. Industriefahrzeugfernbedienungssystem (10) nach einem der Ansprüche 1 bis 7, **dadurch gekennzeichnet, dass**
das Industriefahrzeug (20) eine Fahrzeugbedienungseinheit (40) hat, die verwendet wird, um das Industriefahrzeug (20) direkt zu bedienen,
der Steuerungsmodus einen bemannten Modus umfasst, in dem eine bemannte Bedienung zum direkten Bedienen des Industriefahrzeugs (20) auf der Basis einer Bedienung der Fahrzeugbedienungseinheit (40) durchgeführt wird, während eine Fernbedienung durch die Fernbedienungsvorrichtung (70) nicht durchgeführt wird,
der abnormaler Stopp-Modus ein Steuerungsmodus ist, in dem weder die Fernbedienung durch die Fernbedienungsvorrichtung (70) noch die bemannte Bedienung durchgeführt werden und ein Schalten zu weder dem Fernmodus noch dem bemannten Modus untersagt ist, und
der Neutralmodus ein Steuerungsmodus ist, in dem weder die Fernbedienung durch die Fernbedienungsvorrichtung (70) noch die bemannte Bedienung durchgeführt werden und ein Schalten zu sowohl dem Fernmodus als auch dem bemannten Modus gestattet ist.

9. Industriefahrzeugfernbedienungssystem (10) nach Anspruch 8, **dadurch gekennzeichnet, dass**
die Erfassungseinheit (64) für eine abnormale Situation, als die abnormale Situation,
eine allgemeine abnormale Situation, die eine allgemeine abnormale Situation ungeachtet des Steuerungsmodus ist,
eine abnormale Fernmodussituation, die in Übereinstimmung mit dem Fernmodus festgelegt ist, und
eine abnormale bemannter Modus-Situation erfasst, die in Übereinstimmung mit dem bemannten Modus festgelegt ist und sich von der abnormalen Fernmodussituation unterscheidet,
die Modussteuerungseinheit (64)
auf der Basis der Erfassung der allgemeinen abnormalen Situation oder der abnormalen Fernmodussituation durch die Erfassungseinheit (64) für eine abnormale Situation in einer Situation, wo der Steuerungsmodus der Fernmodus ist, den Steuerungsmodus von dem Fernmodus zu dem abnormaler Stopp-Modus schaltet, während der Kommunikationsverbindungszustand aufrechterhalten wird, und
auf der Basis der Erfassung der allgemeinen abnormalen Situation oder der abnormalen bemannter Modus-Situation durch die Erfassungseinheit (64) für eine abnormale Situation in einer Situation, wo der Steuerungsmodus der bemannte Modus ist, den Steuerungsmodus von dem bemannten Modus zu dem abnormaler Stopp-Modus schaltet.

10. Industriefahrzeugfernbedienungssystem (10) nach Anspruch 9, **dadurch gekennzeichnet, dass**
die Modussteuerungseinheit (64), auf der Basis einer Erfüllung einer Fernmodusschaltbedingung, wenn der Steuerungsmodus der Neutralmodus ist, den Steuerungsmodus von dem Neutralmodus zu dem Fernmodus schaltet, und
die Fernmodusschaltbedingung umfasst, dass die allgemeine abnormale Situation nicht aufgetreten ist.

11. Industriefahrzeugfernbedienungssystem (10) nach Anspruch 9 oder 10, **dadurch gekennzeichnet, dass**
die Modussteuerungseinheit (64), auf der Basis einer Erfüllung einer bemannter Modus-Schaltbedingung, wenn der Steuerungsmodus der Neutralmodus ist, den Steuerungsmodus von dem Neutralmodus zu dem bemannten Modus schaltet, und
die bemannter Modus-Schaltbedingung umfasst, dass die allgemeine abnormale Situation nicht aufgetreten ist.

12. Industriefahrzeug mit einer Fahrzeugkommunikationseinheit (69), die einen Kommunikationsverbindungszustand mit einer Fernkommunikationseinheit (76), die in einer Fernbedienungsvorrichtung (70) vorgesehen ist, herstellt, um Signale (SGx1,SGx2, SGx3, SGx4, SGx5, SGy) mit der Fernkommunikationseinheit (76) durch eine drahtlose Kommunikation herzustellen,
wobei das Industriefahrzeug (20) folgendes aufweist:
eine Erfassungseinheit (64, 73) für eine abnormale Situation, die eine abnormale Situation in dem Kommunikationsverbindungszustand erfasst; und
eine Modussteuerungseinheit (64), die einen Steuerungsmodus des Industriefahrzeugs (20) steuert, wobei
der Steuerungsmodus
einen Fernmodus umfasst, in dem eine Fernbedienung des Industriefahrzeugs (20) durch die Fernbedienungsvorrichtung (70) durchgeführt wird,
**dadurch gekennzeichnet, dass**
der Steuerungsmodus des Weiteren
einen abnormaler Stopp-Modus, in dem die Fernbedienung des Industriefahrzeugs (20) durch die Fernbedienungsvorrichtung (70) nicht durchgeführt wird und ein Schalten zu dem Fernmodus untersagt ist, und
einen Neutralmodus umfasst, in dem die Fernbedienung des Industriefahrzeugs (20) durch die Fernbedienungsvorrichtung (70) nicht durchgeführt wird und ein Schalten zu dem Fernmodus gestattet ist,
wenigstens während des Fernmodus die Fahrzeugkommunikationseinheit (69) und die Fernkommunikationseinheit (76) in dem Kommunikationsverbindungszustand sind, und
die Modussteuerungseinheit (64)
auf der Basis der Erfassung der abnormalen Situation durch die Erfassungseinheit (64, 73) für eine abnormale Situation in einer Situation, wo der Steuerungsmodus der Fernmodus ist, den Steuerungsmodus von dem Fernmodus zu dem abnormaler Stopp-Modus schaltet, während der Kommunikationsverbindungszustand aufrechterhalten wird, und
auf der Basis der Abnormalitätsaufhebungsbedienung, die an wenigstens der Fernbedienungsvorrichtung (70) oder dem Industriefahrzeug (20) in einer Situation durchgeführt wird, wo der Steuerungsmodus der abnormaler Stopp-Modus ist und der Kommunikationsverbindungszustand hergestellt ist, den Steuerungsmodus von dem abnormaler Stopp-Modus zu dem Neutralmodus schaltet.

13. Fernbedienungsvorrichtung (70) mit einer Fernkommunikationseinheit (76), die einen Kommunikationsverbindungszustand mit einer Fahrzeugkommunikationseinheit (69), die in einem Industriefahrzeug (20) vorgesehen ist, herstellt, um Signale (SGx1, SGx2, SGx3, SGx4, SGx5, SGy) mit der Fahrzeugkommunikationseinheit (69) über drahtlose Kommunikation auszutauschen, wobei die Fernbedienungsvorrichtung (70) verwendet wird, um das Industriefahrzeug (20) fern zu bedienen, wobei die Fernbedienungsvorrichtung folgendes aufweist:
eine Modussteuerungseinheit (64), die einen Steuerungsmodus des Industriefahrzeugs (20) steuert, wobei
der Steuerungsmodus einen Fernmodus umfasst, in dem eine Fernbedienung des Industriefahrzeugs (20) durch die Fernbedienungsvorrichtung (70) durchgeführt wird,
**dadurch gekennzeichnet, dass**
der Steuerungsmodus des Weiteren
einen abnormaler Stopp-Modus, in dem die Fernbedienung des Industriefahrzeugs (20) durch die Fernbedienungsvorrichtung (70) nicht durchgeführt wird und ein Schalten zu dem Fernmodus untersagt ist, und
einen Neutralmodus umfasst, in dem die Fernbedienung des Industriefahrzeugs (20) durch die Fernbedienungsvorrichtung (70) nicht durchgeführt wird und ein Schalten zu dem Fernmodus gestattet ist,
wenigstens während des Fernmodus, die Fahrzeugkommunikationseinheit (69) und die Fernkommunikationseinheit (76) in dem Kommunikationsverbindungszustand sind, und
die Modussteuerungseinheit (64)
auf der Basis eines Auftretens einer abnormalen Situation in einer Situation, wo der Steuerungsmodus der Fernmodus ist, den Steuerungsmodus von dem Fernmodus zu dem abnormaler Stopp-Modus schaltet, während der Kommunikationsverbindungszustand aufrechterhalten wird, und
auf der Basis einer Abnormalitätsaufhebungsbedienung, die an wenigstens der Fernbedienungsvorrichtung (70) oder dem Industriefahrzeug (20) in einer Situation durchgeführt wird, wo der Steuerungsmodus der abnormaler Stopp-Modus ist und der Kommunikationsverbindungszustand hergestellt ist, den Steuerungsmodus von dem abnormaler Stopp-Modus zu dem Neutralmodus schaltet.

14. Industriefahrzeugfernbedienungsprogramm, das eine Fernbedienungsvorrichtung (70) verwendet, die eine Fernkommunikationseinheit (76) hat, die einen Kommunikationsverbindungszustand mit einer Fahrzeugkommunikationseinheit (69), die in einem Industriefahrzeug (20) vorgesehen ist, herstellt, um Signale (SGx1, SGx2, SGx3, SGx4, SGx5, SGy) mit der Fahrzeugkommunikationseinheit (69) über drahtlose Kommunikation auszutauschen, um das Industriefahrzeug (20) fern zu bedienen, wobei
das Industriefahrzeugfernbedienungsprogramm bewirkt, dass die Fernbedienungsvorrichtung (70) oder das Industriefahrzeug (20) als eine Modussteuerungseinheit (64) funktioniert, die einen Steuerungsmodus des Industriefahrzeugs (20) steuert,
wobei der Steuerungsmodus einen Fernmodus umfasst, in dem eine Fernbedienung des Industriefahrzeugs (20) durch die Fernbedienungsvorrichtung (70) durchgeführt wird,
**dadurch gekennzeichnet, dass**
der Steuerungsmodus des Weiteren
einen abnormaler Stopp-Modus, in dem die Fernbedienung des Industriefahrzeugs (20) durch die Fernbedienungsvorrichtung (70) nicht durchgeführt wird und ein Schalten zu dem Fernmodus untersagt ist, und
einen Neutralmodus umfasst, in dem die Fernbedienung des Industriefahrzeugs (20) durch die Fernbedienungsvorrichtung (70) nicht durchgeführt wird und ein Schalten zu dem Fernmodus gestattet ist,
wenigstens während des Fernmodus, die Fahrzeugkommunikationseinheit (69) und die Fernkommunikationseinheit (76) in dem Kommunikationsverbindungszustand sind, und
die Modussteuerungseinheit (64)
auf der Basis eines Auftretens einer abnormalen Situation in einer Situation, wo der Steuerungsmodus der Fernmodus ist, den Steuerungsmodus von dem Fernmodus zu dem abnormaler Stopp-Modus schaltet, während der Kommunikationsverbindungszustand aufrechterhalten wird, und
auf der Basis einer Abnormalitätsaufhebungsbedienung, die an wenigstens der Fernbedienungsvorrichtung (70) oder dem Industriefahrzeug (20) in einer Situation durchgeführt wird, wo der Steuerungsmodus der abnormaler Stopp-Modus ist und der Kommunikationsverbindungszustand hergestellt ist, den Steuerungsmodus von dem abnormaler Stopp-Modus zu dem Neutralmodus schaltet.

15. Industriefahrzeugfernbedienungsverfahren, das eine Fernbedienungsvorrichtung (70) verwendet, die eine Fernkommunikationseinheit (76) hat, die einen Kommunikationsverbindungszustand mit einer Fahrzeugkommunikationseinheit (69), die in einem Industriefahrzeug (20) vorgesehen ist, herstellt, um Signale (SGx1, SGx2, SGx3, SGx4, SGx5, SGy) mit der Fahrzeugkommunikationseinheit (69) über drahtlose Kommunikation auszutauschen, um das Industriefahrzeug (20) fern zu bedienen, wobei
das Industriefahrzeugfernbedienungsverfahren einen Modussteuerungsschritt aufweist, in dem die Fernbedienungsvorrichtung (70) oder das Industriefahrzeug (20) einen Steuerungsmodus des Industriefahrzeugs (20) steuert,
der Steuerungsmodus einen Fernmodus umfasst, in dem eine Fernbedienung des Industriefahrzeugs (20) durch die Fernbedienungsvorrichtung (70) durchgeführt wird,
**dadurch gekennzeichnet, dass**
der Steuerungsmodus des Weiteren
einen abnormaler Stopp-Modus, in dem die Fernbedienung des Industriefahrzeugs (20) durch die Fernbedienungsvorrichtung (70) nicht durchgeführt wird und ein Schalten zu dem Fernmodus untersagt ist, und
einen Neutralmodus umfasst, in dem die Fernbedienung des Industriefahrzeugs (20) durch die Fernbedienungsvorrichtung (70) nicht durchgeführt wird und ein Schalten zu dem Fernmodus gestattet ist,
wenigstens während des Fernmodus, die Fahrzeugkommunikationseinheit (69) und die Fernkommunikationseinheit (76) in dem Kommunikationsverbindungszustand sind, und
der Modussteuerungsschritt Schritte des
Schaltens, auf der Basis eines Auftretens einer abnormalen Situation in einer Situation, wo der Steuerungsmodus der Fernmodus ist, des Steuerungsmodus von dem Fernmodus zu dem abnormaler Stopp-Modus, während der Kommunikationsverbindungszustand aufrechterhalten wird, und
Schaltens, auf der Basis einer Abnormalitätsaufhebungsbedienung, die an wenigstens der Fernbedienungsvorrichtung (70) oder dem Industriefahrzeug (20) in einer Situation durchgeführt wird, wo der Steuerungsmodus der abnormaler Stopp-Modus ist und der Kommunikationsverbindungszustand hergestellt ist, des Steuerungsmodus von dem abnormaler Stopp-Modus zu dem Neutralmodus.

## Revendications

1. Système de commande à distance de véhicule industriel (10) comprenant :
un véhicule industriel (20) comportant une unité de communication de véhicule (69) qui réalise une communication sans fil ;
un dispositif de commande à distance (70) qui comporte une unité de communication à distance (76) pour échanger des signaux (SGxl, SGx2, SGx3, SGx4, SGx5, SGy) avec l'unité de communication de véhicule (69) par le biais d'une communication sans fil en établissant un état de connexion de communication avec l'unité de communication de véhicule (69), et qui est utilisé pour commander à distance le véhicule industriel (20) ;
une unité de détection de situation anormale (64, 73) qui détecte une situation anormale dans l'état de connexion de communication ;
une unité de contrôle de mode (64) qui contrôle un mode de contrôle du véhicule industriel (20), où
le mode de contrôle comporte
un mode distant dans lequel une commande à distance du véhicule industriel (20) est réalisée par le dispositif de commande à distance (70), **caractérisé en ce que** le système comprend en outre une unité de détection de commande d'annulation (66, 72, 64, 73) qui détecte une commande d'annulation d'anomalie ; et **en ce que** le mode de contrôle comporte
un mode d'arrêt anormal dans lequel la commande à distance du véhicule industriel (20) n'est pas réalisée par le dispositif de commande à distance (70), et le passage au mode distant est interdit, et
un mode neutre dans lequel la commande à distance du véhicule industriel (20) n'est pas réalisée par le dispositif de commande à distance (70), et le passage au mode distant est autorisé,
au moins dans le mode distant, l'unité de communication de véhicule (69) et l'unité de communication à distance (76) sont dans l'état de connexion de communication, et
l'unité de contrôle de mode (64)
fait passer le mode de contrôle du mode distant au mode d'arrêt anormal tout en maintenant l'état de connexion de communication, en se basant sur la détection de la situation anormale par l'unité de détection de situation anormale (64, 73), dans une situation où le mode de contrôle est le mode distant, et
fait passer le mode de contrôle du mode d'arrêt anormal au mode neutre, en se basant sur la détection de la commande d'annulation d'anomalie par l'unité de détection de commande d'annulation (66, 72, 64, 73), dans une situation où le mode de contrôle est le mode d'arrêt anormal et où l'état de connexion de communication est établi.

2. Système de commande à distance de véhicule industriel (10) selon la revendication 1, **caractérisé en ce que**
le véhicule industriel (20) comporte un commutateur d'annulation d'anomalie (53), et
la commande d'annulation d'anomalie comporte une commande du commutateur d'annulation d'anomalie (53).

3. Système de commande à distance de véhicule industriel (10) selon la revendication 2, **caractérisé en ce que**
le véhicule industriel (20) comporte une base de machine (21),
la base de machine (21) comporte,
une surface latérale extérieure (31), et
une surface latérale intérieure (34) qui divise un habitacle du conducteur (32) dans lequel monte un occupant, et
le commutateur d'annulation d'anomalie (53) est prévu sur la surface latérale extérieure (31).

4. Système de commande à distance de véhicule industriel (10) selon la revendication 1, **caractérisé en ce que** la commande d'annulation d'anomalie comporte une commande sur le dispositif de commande à distance (70).

5. Système de commande à distance de véhicule industriel (10) selon la revendication 4, **caractérisé en ce que**
le dispositif de commande à distance (70) comporte,
un panneau tactile (71), et
une unité de contrôle d'affichage (73) pour réaliser un contrôle d'affichage du panneau tactile (71),
lorsque le mode de contrôle est le mode distant, le véhicule industriel (20) est commandé à distance par le biais d'une commande de contrôle à distance comportant une commande sur le panneau tactile (71),
l'unité de contrôle d'affichage (73) affiche une icône d'annulation d'anomalie (Ic10) sur le panneau tactile (71) lorsque le mode de contrôle est le mode d'arrêt anormal, et
la commande d'annulation d'anomalie comporte une commande d'entrée sur l'icône d'annulation d'anomalie (Ic10).

6. Système de commande à distance de véhicule industriel (10) selon l'une quelconque des revendications 1 à 5, **caractérisé en ce que**
le véhicule industriel (20) a une porte (54, 56),
l'unité de détection de situation anormale (64) comporte un capteur de porte (55, 57) qui détecte l'ouverture et la fermeture de la porte (54, 56), et
la situation anormale comporte l'ouverture de la porte (54, 56) détectée par le capteur de porte (55, 57) dans une situation où le mode de contrôle est le mode distant.

7. Système de commande à distance de véhicule industriel (10) selon l'une quelconque des revendications 1 à 6, **caractérisé en ce que**
l'unité de détection de situation anormale (64) comporte un capteur d'obstacle (67) qui détecte un obstacle autour du véhicule industriel (20), et
la situation anormale comporte la détection d'un obstacle détecté par le capteur d'obstacle (67) dans une situation où le mode de contrôle est le mode distant.

8. Système de commande à distance de véhicule industriel (10) selon l'une quelconque des revendications 1 à 7, **caractérisé en ce que**
le véhicule industriel (20) comporte une unité de commande de véhicule (40) utilisée pour commander directement le véhicule industriel (20),
le mode de contrôle comporte un mode piloté dans lequel une commande pilotée est réalisée pour commander directement le véhicule industriel (20) en se basant sur une commande de l'unité de commande de véhicule (40), tandis qu'une commande à distance par le dispositif de commande à distance (70) n'est pas réalisée,
le mode d'arrêt anormal est un mode de contrôle dans lequel ni la commande à distance par le dispositif de commande à distance (70) ni la commande pilotée ne sont réalisées, et un passage à l'un ou l'autre du mode distant et du mode piloté est interdit, et
le mode neutre est un mode de contrôle dans lequel ni la commande à distance par le dispositif de commande à distance (70) ni la commande pilotée ne sont réalisées, et un passage à l'un ou l'autre du mode distant et du mode piloté est autorisé.

9. Système de commande à distance de véhicule industriel (10) selon la revendication 8, **caractérisé en ce que**
l'unité de détection de situation anormale (64) détecte, en tant que situation anormale,
une situation anormale commune qui est une situation anormale commune indépendante du mode de contrôle,
une situation anormale de mode distant définie en correspondance avec le mode distant, et
une situation anormale de mode piloté qui est définie en correspondance avec le mode piloté et qui est différente de la situation anormale de mode distant,
l'unité de contrôle de mode (64),
fait passer le mode de contrôle du mode distant au mode d'arrêt anormal tout en maintenant l'état de connexion de communication, en se basant sur la détection de la situation anormale commune ou la situation anormale de mode distant par l'unité de détection de situation anormale (64), dans une situation où le mode de contrôle est le mode distant, et
fait passer le mode de contrôle du mode piloté au mode d'arrêt anormal, en se basant sur la détection de la situation anormale commune ou la situation anormale de mode piloté par l'unité de détection de situation anormale (64), dans une situation où le mode de contrôle est le mode piloté.

10. Système de commande à distance de véhicule industriel (10) selon la revendication 9, **caractérisé en ce que**
l'unité de contrôle de mode (64) fait passer le mode de contrôle du mode neutre au mode distant, en se basant sur la satisfaction d'une condition de passage en mode distant, lorsque le mode de contrôle est le mode neutre, et
la condition de passage en mode distant comporte le fait que la situation anormale commune ne s'est pas produite.

11. Système de commande à distance de véhicule industriel (10) selon la revendication 9 ou 10, **caractérisé en ce que**
l'unité de contrôle de mode (64) fait passer le mode de contrôle du mode neutre au mode piloté, en se basant sur la satisfaction d'une condition de passage en mode piloté, lorsque le mode de contrôle est le mode neutre, et
la condition de passage en mode piloté comporte le fait que la situation anormale commune ne s'est pas produite.

12. Véhicule industriel comportant une unité de communication de véhicule (69) qui établit un état de connexion de communication avec une unité de communication à distance (76) prévue dans un dispositif de commande à distance (70) pour échanger des signaux (SGxl, SGx2, SGx3, SGx4, SGx5, SGy) avec l'unité de communication à distance (76) par le biais d'une communication sans fil,
le véhicule industriel (20) comprenant :
une unité de détection de situation anormale (64, 73) qui détecte une situation anormale dans l'état de connexion de communication ; et
une unité de contrôle de mode (64) qui contrôle un mode de contrôle du véhicule industriel (20), où
le mode de contrôle comporte
un mode distant dans lequel une commande à distance du véhicule industriel (20) est réalisée par le dispositif de commande à distance (70), **caractérisé en ce que** le mode de contrôle comporte en outre
un mode d'arrêt anormal dans lequel la commande à distance du véhicule industriel (20) n'est pas réalisée par le dispositif de commande à distance (70), et le passage au mode distant est interdit, et
un mode neutre dans lequel la commande à distance du véhicule industriel (20) n'est pas réalisée par le dispositif de commande à distance (70), et le passage au mode distant est autorisé,
au moins dans le mode distant, l'unité de communication de véhicule (69) et l'unité de communication à distance (76) sont dans l'état de connexion de communication, et
l'unité de contrôle de mode (64)
fait passer le mode de contrôle du mode distant au mode d'arrêt anormal tout en maintenant l'état de connexion de communication, en se basant sur la détection de la situation anormale par l'unité de détection de situation anormale (64, 73), dans une situation où le mode de contrôle est le mode distant, et
fait passer le mode de contrôle du mode d'arrêt anormal au mode neutre, en se basant sur la commande d'annulation d'anomalie réalisée sur au moins un parmi le dispositif de commande à distance (70) et le véhicule industriel (20), dans une situation où le mode de contrôle est le mode d'arrêt anormal et où l'état de connexion de communication est établi.

13. Dispositif de commande à distance (70) comportant une unité de communication à distance (76) qui établit un état de connexion de communication avec une unité de communication de véhicule (69) prévu dans un véhicule industriel (20) pour échanger des signaux (SGxl, SGx2, SGx3, SGx4, SGx5, SGy) avec l'unité de communication de véhicule (69) par le biais d'une communication sans fil, le dispositif de commande à distance (70) étant utilisé pour commander à distance le véhicule industriel (20), le dispositif de commande à distance comprenant :
une unité de contrôle de mode (64) qui contrôle un mode de contrôle du véhicule industriel (20), où
le mode de contrôle comporte
un mode distant dans lequel une commande à distance du véhicule industriel (20) est réalisée par le dispositif de commande à distance (70), **caractérisé en ce que** le mode de contrôle comporte en outre
un mode d'arrêt anormal dans lequel la commande à distance du véhicule industriel (20) n'est pas réalisée par le dispositif de commande à distance (70), et le passage au mode distant est interdit, et
un mode neutre dans lequel la commande à distance du véhicule industriel (20) n'est pas réalisée par le dispositif de commande à distance (70), et le passage au mode distant est autorisé,
au moins dans le mode distant, l'unité de communication de véhicule (69) et l'unité de communication à distance (76) sont dans l'état de connexion de communication, et
l'unité de contrôle de mode (64)
fait passer le mode de contrôle du mode distant au mode d'arrêt anormal tout en maintenant l'état de connexion de communication, en se basant sur l'apparition d'une situation anormale, dans une situation où le mode de contrôle est le mode distant, et
fait passer le mode de contrôle du mode d'arrêt anormal au mode neutre, en se basant sur une commande d'annulation d'anomalie réalisée sur au moins un parmi le dispositif de commande à distance (70) et le véhicule industriel (20), dans une situation où le mode de contrôle est le mode d'arrêt anormal et où l'état de connexion de communication est établi.

14. Programme de commande à distance de véhicule industriel qui utilise un dispositif de commande à distance (70) qui comporte une unité de communication à distance (76) qui établit un état de connexion de communication avec une unité de communication de véhicule (69) prévue dans un véhicule industriel (20) pour échanger des signaux (SGxl, SGx2, SGx3, SGx4, SGx5, SGy) avec l'unité de communication de véhicule (69) par le biais d'une communication sans fil, pour commander à distance le véhicule industriel (20), où
le programme de commande à distance de véhicule industriel amène le dispositif de commande à distance (70) ou le véhicule industriel (20) à fonctionner comme une unité de contrôle de mode (64) qui contrôle un mode de contrôle du véhicule industriel (20),
le mode de contrôle comporte
un mode distant dans lequel une commande à distance du véhicule industriel (20) est réalisée par le dispositif de commande à distance (70), **caractérisé en ce que** le mode de contrôle comporte en outre
un mode d'arrêt anormal dans lequel la commande à distance du véhicule industriel (20) n'est pas réalisée par le dispositif de commande à distance (70), et le passage au mode distant est interdit, et
un mode neutre dans lequel la commande à distance du véhicule industriel (20) n'est pas réalisée par le dispositif de commande à distance (70), et le passage au mode distant est autorisé,
au moins dans le mode distant, l'unité de communication de véhicule (69) et l'unité de communication à distance (76) sont dans l'état de connexion de communication, et
l'unité de contrôle de mode (64)
fait passer le mode de contrôle du mode distant au mode d'arrêt anormal tout en maintenant l'état de connexion de communication, en se basant sur l'apparition d'une situation anormale, dans une situation où le mode de contrôle est le mode distant, et
fait passer le mode de contrôle du mode d'arrêt anormal au mode neutre, en se basant sur une commande d'annulation d'anomalie réalisée sur au moins un parmi le dispositif de commande à distance (70) et le véhicule industriel (20), dans une situation où le mode de contrôle est le mode d'arrêt anormal et où l'état de connexion de communication est établi.

15. Procédé de commande à distance de véhicule industriel qui utilise un dispositif de commande à distance (70) qui comporte une unité de communication à distance (76) qui établit un état de connexion de communication avec une unité de communication de véhicule (69) prévue dans un véhicule industriel (20) pour échanger des signaux (SGxl, SGx2, SGx3, SGx4, SGx5, SGy) avec l'unité de communication de véhicule (69) par le biais d'une communication sans fil, pour commander à distance le véhicule industriel (20), où
le procédé de commande à distance de véhicule industriel comprend une étape de contrôle de mode dans laquelle le dispositif de commande à distance (70) ou le véhicule industriel (20) contrôle un mode de contrôle du véhicule industriel (20),
le mode de contrôle comporte
un mode distant dans lequel une commande à distance du véhicule industriel (20) est réalisée par le dispositif de commande à distance (70), **caractérisé en ce que** le mode de contrôle comporte en outre
un mode d'arrêt anormal dans lequel la commande à distance du véhicule industriel (20) n'est pas réalisée par le dispositif de commande à distance (70), et le passage au mode distant est interdit, et
un mode neutre dans lequel la commande à distance du véhicule industriel (20) n'est pas réalisée par le dispositif de commande à distance (70), et le passage au mode distant est autorisé
au moins dans le mode distant, l'unité de communication de véhicule (69) et l'unité de communication à distance (76) sont dans l'état de connexion de communication, et
l'étape de contrôle de mode comporte les étapes consistant à :
faire passer le mode de contrôle du mode distant au mode d'arrêt anormal tout en maintenant l'état de connexion de communication, en se basant sur l'apparition d'une situation anormale, dans une situation où le mode de contrôle est le mode distant, et
faire passer le mode de contrôle du mode d'arrêt anormal au mode neutre, en se basant sur une commande d'annulation d'anomalie réalisée sur au moins un parmi le dispositif de commande à distance (70) et le véhicule industriel (20), dans une situation où le mode de contrôle est le mode d'arrêt anormal et où l'état de connexion de communication est établi.
